# EUROPÄISCHE PATENTSCHRIFT

(11) **EP 3 371 504 B1**
(45) Veröffentlichungstag und Bekanntmachung des Hinweises auf die Patenterteilung: **04.12.2019**
(21) Anmeldenummer: 16784820.9
(22) Anmeldetag: 12.10.2016
(51) Int. Cl.: F16L 41/02, G01F 15/18

(54) **ADAPTER ZUM VERBINDEN VON FLUIDLEITUNGEN SOWIE DAMIT GEBILDETES FLUIDLEITUNGSSYSTEM**
ADAPTER FOR CONNECTING FLUID LINES, AND FLUID LINE SYSTEM FORMED THEREWITH
ADAPTATEUR SERVANT À RACCORDER DES CONDUITES DE FLUIDE ET SYSTÈME DE CONDUITES DE FLUIDE RÉALISÉ AU MOYEN DUDIT ADAPTATEUR

(30) Priorität: 04.11.2015 DE 102015118864
(43) Veröffentlichungstag der Anmeldung: 12.09.2018
(73) Patentinhaber: Endress+Hauser Flowtec AG, 4153 Reinach (CH)
(72) Erfinder: BERNHARD, Holger, 79639 Grenzach-Wyhlen (DE); LAMBRIGGER, Michael, 4056 Basel (CH); GSCHWEND, Gebhard, 4123 Allschwil (CH); MATT, Christian, 4153 Reinach (CH)
(74) Vertreter: Andres, Angelika Maria
(86) Internationale Anmeldenummer: PCT/EP2016/074438
(87) Internationale Veröffentlichungsnummer: WO 2017/076591

(56) Entgegenhaltungen:
- EP-A1- 2 843 375
- WO-A1-00/47957
- WO-A1-2006/091199
- WO-A1-2008/013545
- WO-A1-2008/024112

## Beschreibung

Die Erfindung betrifft einen Adapter zum Verbinden von dem Führen eines strömenden Fluids dienlichen Fluidleitungen sowie ein mittels eines solchen Adapters gebildetes Fluidleitungssystem.

In der der WO-A 2006/091199, WO-A 2008/024112 bzw. WO-A 2008/013545 ist jeweils ein Fluidleitungssystem gezeigt, das eine als - gelegentlich auch als Verteiler-, Sammel- oder Hosenstück oder auch als Strömungsteiler bezeichnete - Leitungsverzweigung ausgebildete erste Fluidleitung mit einem von einer Wandung umhüllten, sich von einer in einem ersten Leitungsende der ersten Fluidleitung verorteten ersten Strömungsöffnung sowohl bis zu einer in einem zweiten Leitungsende nämlicher ersten Fluidleitung verorteten zweiten Strömungsöffnung als auch bis zu einer von nämlicher zweiten Strömungsöffnung beabstandet im zweiten Leitungsende nämlicher ersten Fluidleitung verorteten dritten Strömungsöffnung erstreckenden (Y-förmigen) Lumen, eine als starres Rohr ausgebildete zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen, sowie wenigstens ein als starres Rohr ausgebildete dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen aufweist. Die erste Fluidleitung ist mit deren zweitem Leitungsende sowohl mit dem ersten Leitungsende der zweiten Fluidleitung als auch mit dem ersten Leitungsende der dritten Fluidleitung verbunden, derart das sowohl das Lumen der zweiten Fluidleitung als auch das Lumen der dritten Fluidleitung mit dem Lumen der ersten Fluidleitung kommuniziert bzw. daß die erste Strömungsöffnung der zweiten Fluidleitung in die zweite Strömungsöffnung der ersten Fluidleitung und die erste Strömungsöffnung der dritten Fluidleitung in die dritte Strömungsöffnung der ersten Fluidleitung münden. Die Wandungen der Fluidleitungen können beispielsweise aus einem Metall, wie z.B. einem Edelstahl, bestehen. Die zweite Fluidleitung ist dafür eingerichtet, mit deren zweiten Leitungsende mit einer anderen Fluidleitung des Fluidleitungssystems, beispielsweise einem (Metall-) Rohr, verbunden zu werden. Analog dazu ist die die dritte Fluidleitung dafür eingerichtet, mit deren zweiten Leitungsende mit einer weiteren Fluidleitung des Fluidleitungssystems, beispielsweise einem weiteren (Metall-) Rohr, verbunden zu werden. Sowohl das zweite Leitungsende der zweiten Fluidleitung als auch das zweite Leitungsende der dritten Fluidleitung ist dafür jeweils von einem entsprechenden Anschlußflansch gefaßt. Zumindest die zweite Fluidleitung und die dritte Fluidleitung, ggf. auch die erste Fluidleitung sind jeweils Bestandteil eines dem Generieren wenigstens eines mit der wenigstens einen Meßgröße korrespondierenden Meßsignals dienenden vibronischen Meßwandlers, wobei nämlicher Meßwandler unter Bildung eines Coriolis-Massendurchfluß-Meßgeräts, eines Dichte-Meßgeräts und/oder eines Viskosität-Meßgeräts mit einer entsprechenden Meßgerät-Elektronik verbunden ist und wobei die zweite Fluidleitung und die dritte Fluidleitung, dafür eingerichtet sind, von zu messendem Fluid durchströmt und währenddessen zwecks Generierung des wenigstens einen Meßsignals vibrieren gelassen zu werden. Das in der WO-A 2006/091199, der WO-A 2008/024112 bzw. der WO-A 2008/013545 gezeigte Fluidleitungssystem kann jeweils Bestandteil einer Zapfanlage für Kraftstoffe, beispielsweise Benzin, Diesel oder auch komprimiertes Erdgas (CNG), mit zwei separaten, nämlich entweder über die zweite Fluidleitung oder über die dritte Fluidleitung gespeisten, Entnahmestellen sein bzw. im Verbund mit weiteren Komponenten eine solche, dem Führen eines in zwei separate Fluidstströme aufzuteilenden Fluidstroms dienliche Zapfanlage bilden.

Darüberhinaus ist in der WO-A 2008/024112 gezeigt, daß ein solches Fluidleitungssystem auch so verwendet werden kann, daß die vorbezeichnete erste Fluidleitung nämlich nicht als Leitungsverzweigung, sondern alternativ als Leitungsvereinigung dient, beispielsweise um separate, nämlich durch die zweite Fluidleitung bzw. die dritte Fluidleitung an die erste Fluidleitung geführte Fluidströme, ggf. auch mit voneinander abweichenden Zusammensetzungen, in nämlicher erster Fluidleitung zusammenzuführen bzw. miteinander zu vermischen. Desweiteren ist in der eigenen, nicht vorveröffentlichten internationalen Patentanmeldung PCT/EP2015/070020 die Verwendung eines Fluidleitungssystems der vorbezeichneten Art als Bestandteil einer dem Transfer eines Fluids, beispielsweise nämlich einer Dispersion, eines Gases oder einer Flüssigkeit, dienlichen Übergabestelle für eichpflichtigen Güterverkehr beschrieben. Nämliches Fluidleitungssystem ist ebenfalls mittels eines zwei strömungstechnisch parallelen Fluidleitungen aufweisenden vibronischen Meßwandler gebildet und dafür vorgesehen, wenigstens eine der Meßgrößen Massendurchflußrate, Massendurchfluß, Volumendurchflußrate, Volumendurchfluß, Dichte, Viskosität oder Temperatur des von einem Vorrats- in einen davon entfernten Entnahmebehälter mit jeweils einer vorgegebenen Menge zu transferierenden Fluids zu messen, wobei das Fluid Fluidtemperaturen von weniger als -40 °C aufweisen, beispielsweise nämlich ein Methan und/oder Ethan und/oder Propan und/oder Buthan enthaltendes Flüssiggas bzw. ein verflüssigtes Erdgas (LNG) sein kann. Die beiden Fluidleitungen können zusammen mit einer dem Anregen von mechanischen Schwingungen der Fluidleitungen dienlichen Erregeranordnung und einer dem Erfassen nämlicher Schwingungen der Fluidleitungen und dem Generieren des wenigstens einen Meßsignals dienlichen Sensoranordnung in einem entsprechenden Wandler-Schutzgehäuse untergebracht sein. Zwecks Realisierung zweier alternativer, gleichwohl alternierend zu- bzw. abschaltbarer Strömungspfade des vorbezeichneten Fluidleitungssystems ist dieses ferner dafür eingerichtet, in zumindest einem selektiv aktivierbaren Betriebsmodus den vom Entnahmebehälter gespeisten Fluidstrom zunächst in zwei separat zu führende Fluidströme aufzuteilen, nämliche Fluidströme durch die vorbezeichneten zwei parallele Fluidleitungen des Meßwandlers hindurchzuführen und hernach, nämlich erst stromabwärts der Fluidleitungen des Meßwandlers wieder zu vereinigen.

Ein Nachteil jedes der vorgenannten Fluidsysteme ist allerdings darin zu sehen, daß es sich bei dem dafür jeweils verwendeten vibronischen Meßwandler um ein spezielles, nämlich hinsichtlich seines Aufbaus von den ansonsten typischerweise angebotenen, zumal in der industriellen Meß- und Automatisierungstechnik etablierten konventionellen Meßwandlern abweichendes Gerät handelt, bzw. daß zur Realisierung eines solchen Fluidsystems ein spezieller, gleichwohl aufwendig herzustellender Meßwandler verwendet werden muß. Sehr weit verbreitet sind u.a. aber solche (konventionellen) Meßwandler, die hinsichtlich des mechanischen Aufbaus und der Wirkungsweise im wesentlichen den in der EP-A 816 807, der EP-A 2 843 375, der US-A 2001/0037690, der US-A 2008/0184816, der US-A 48 23 613, der US-A 56 02 345, der US-A 57 96 011, der WO-A 90/15310, der WO-A 00/08423, der WO-A 00/47957, der WO-A 2006/107297, der WO-A 2006/118557, der WO-A 2008/059262, der WO-A 2009/048457, der WO-A 2009/078880, der WO-A 2009/120223, der WO-A 2009/123632, der WO-A 2010/059157, der WO-A 2013/006171 oder der WO-A 2013/070191 gezeigten Meßwandlern entsprechen. Die darin beschriebenen- beispielsweise dem Generieren von von einer Massendurchflußrate des strömenden Fluids abhängigen Corioliskräften dienlichen - Meßwandler sind im besonderen dafür vorgesehen und dementsprechend dafür eingerichtet, in den Verlauf einer Rohrleitung eingesetzt zu werden, derart, daß ein an den Meßwandler herangeführter Fluidstrom erst innerhalb des Meßwandlers zwecks der Messung in zwei separate Fluidströme aufgeteilt wird, und daß nämliche Fluidströme auch innerhalb des Meßwandlers wieder zu einem einzigen Fluidstrom zusammengeführt werden, so daß der jeweilige Meßwandler strömungstechnisch quasi als ein einziges Rohr wirkt und zudem mittels Standardflanschverbindungen sehr einfach und ohne weiteren technischen Aufwand an die korrespondierenden Segmente der Rohrleitung angeschlossen werden kann. Dementsprechend weisen solche konventionelle Meßwandler zusätzlich zu den vorbezeichneten drei Fluidleitungen zumindest eine zur - hier zumeist als ein mit einem (Standard-)Anschlußflansch versehener Anschlußstutzen ausgebildeten - ersten Fluidleitung im wesentlichen baugleiche vierte Fluidleitung mit einem von einer Wandung umhüllten, sich von einer in einem ersten Leitungsende der vierten Fluidleitung verorteten ersten Strömungsöffnung sowohl bis zu einer in einem zweiten Leitungsende nämlicher vierten Fluidleitung verorteten zweiten Strömungsöffnung als auch bis zu einer von nämlicher zweiten Strömungsöffnung beabstandet im zweiten Leitungsende nämlicher vierten Fluidleitung verorteten dritten Strömungsöffnung erstreckenden Lumen auf. Nämliche vierte Fluidleitung ist mit deren zweitem Leitungsende sowohl mit dem zweiten Leitungsende der zweiten Fluidleitung als auch mit dem zweiten Leitungsende der dritten Fluidleitung verbunden, derart das sowohl das Lumen der zweiten Fluidleitung als auch das Lumen der dritten Fluidleitung mit dem Lumen der vierten Fluidleitung kommuniziert bzw. daß die erste Strömungsöffnung der zweiten Fluidleitung in die zweite Strömungsöffnung der vierten Fluidleitung und die erste Strömungsöffnung der dritten Fluidleitung in die dritte Strömungsöffnung der vierten Fluidleitung münden. Im Ergebnis weist ein solcher konventioneller Meßwandler sowohl eine - je nach Einbaulage bzw. Strömungsrichtung durch die erste Fluidleitung oder die vierte Fluidleitung gebildete - Leitungsverzweigung als auch eine - in entsprechender Weise durch die vierte Fluidleitung bzw. die erste Fluidleitung gebildete - Leitungsvereinigung auf und stellt ein solcher Meßwandler zudem zwei strömungstechnisch parallel geschaltete, nämlich durch die zweite Fluidleitung bzw. die dritte Fluidleitung führende Strömungspfade bereit. Meßwandler der vorgenannten Art, nicht zuletzt auch dem Generieren von von einer Massendurchflußrate des strömenden Fluids abhängigen Corioliskräften dienliche Meßwandler, werden im übrigen auch von der Anmelderin selbst hergestellt bzw. im Verbund mit einer jeweils passend konfektionierten Meßelektronik als Coriolis-Massendurchfluß-Meßgerät bzw. als Coriolis-Massendurchfluß/Dichte-Meßgerät, beispielsweise unter der Warenbezeichnung "Promass F 200", PROMASS G 100", "PROMASS O 100", "PROMASS 83E", "PROMASS 84F", "CNGmass", "LPGmass" oder "Dosimass", angeboten.

Wenngleich auch für die Herstellung der vorbezeichneten speziellen Meßwandler, beispielsweise gemäß der eingangs erwähnten WO-A 2006/091199, WO-A 2008/024112 bzw. WO-A 2008/013545, weitgehend durchaus auch auf die gleichen Einzelkomponenten zurückgegriffen werden kann, wie zur Herstellung konventioneller Meßwandler der vorgenannten Art, so bedarf es hierfür dennoch eines beträchtlichen Mehraufwands, nicht zuletzt hinsichtlich einer Organisation von entsprechenden Produktionsabläufen, einer Bereitstellung spezieller Betriebsmittel, einer Durchführung von entsprechenden Zulassungsverfahren bzw. einer Etablierung entsprechender Kalibrierverfahren. Infolgedessen würden die Erstellungskosten für einen solchen speziellen, gleichwohl nur in vergleichsweise geringen Stückzahlen benötigten Meßwandler, gemessen an den Erstellungskosten für einen konventionellen Meßwandler gleicher Nennweite, überproportional hoch ausfallen, mithin würde die Wirtschaftlichkeit einer solchen technischen Lösung kurz- und mittelfristig nach wie vor in Frage gestellt bleiben.

Dem Rechnung tragend besteht eine Aufgabe der Erfindung darin, Fluidleitungssysteme der eingangs genannten Art, nämlich Fluidleitungssysteme, bei denen zwei unabhängige Fluidströme durch jeweils eine von zwei Fluidleitungen zu führen und hernach zu einem gemeinsamen Fluidstrom zusammenzuführen sind, bzw. solche Fluidleitungssysteme, bei denen ein jeder von zwei unabhängigen Fluidströmen durch jeweils eine von zwei Fluidleitungen ein und desselben Meßwandlers hindurchzuführen ist, so zu verbessern, daß nämliche Fluidleitungssysteme auch mittels konventioneller vibronischer Meßwandler herstellbar sind, bzw. eine technische Maßnahme anzugeben, die es ermöglicht, einen konventionellen vibronischen Meßwandler mit wenigstens zwei jeweils sowohl in eine Leitungsverzweigung als auch in eine Leitungsvereinigung mündenden Fluidleitungen sehr einfach in ein solches Fluidleitungssystem eingliedern zu können.

Zur Lösung der Aufgabe besteht die Erfindung in einem Adapter zum Verbinden von dem Führen eines strömenden Fluids dienlichen Fluidleitungen, welcher Adapter umfaßt:
einen ersten Anschlußstutzen von dem ein freies Stutzenende dafür eingerichtet ist, mit einem, beispielsweise von einem Anschlußflansch gefaßten, Leitungsende einer, beispielsweise als starrer und/oder rohrförmiger Anschlußstutzen ausgebildeten, Fluidleitung verbunden zu werden;
einen zweiten Anschlußstutzen von dem ein freies Stutzenende dafür eingerichtet ist, mit einem, beispielsweise von einem Anschlußflansch gefaßten, Leitungsende einer, beispielsweise als starres und/oder kreiszylindrisches Rohr ausgebildeten, Fluidleitung verbunden zu werden;
einen dritten Anschlußstutzen von dem ein freies Stutzenende dafür eingerichtet ist, mit einem, beispielsweise von einem Anschlußflansch gefaßten, Leitungsende einer, beispielsweise als starres und/oder kreiszylindrisches Rohr ausgebildeten, Fluidleitung verbunden zu werden;
zwei voneinander separierte, jeweils zum Führen von ein- und wieder ausströmendem Fluid eingerichtete röhrenförmige Strömungskanäle, von denen sich ein erster Strömungskanal von einer im freien Stutzenende des zweiten Anschlußstutzens verorteten Strömungsöffnung nämlichen zweiten Anschlußstutzens bis zu einer im freien Stutzenende des ersten Anschlußstutzens verorteten ersten Strömungsöffnung nämlichen ersten Anschlußstutzens, und ein zweiter Strömungskanal von einer im freien Stutzenende des dritten Anschlußstutzens verorteten Strömungsöffnung nämlichen dritten Anschlußstutzens bis zu einer im freien Stutzenende des ersten Anschlußstutzens verorteten zweiten Strömungsöffnung nämlichen ersten Anschlußstutzens erstrecken;
sowie einen an einen zwischen der ersten Strömungsöffnung und der zweiten Strömungsöffnung verorteten Bereich des freien Stutzenendes des ersten Anschlußstutzens grenzenden, beispielsweise plattenförmigen und/oder scheibenartigen, Fortsatz, der sich ausgehend vom freien Stutzenden des ersten Anschlußstutzens mit einer Länge bis zu einem von nämlichem freien Stutzenden entfernten freien Fortsatzende erstreckt.

Desweiteren besteht die Erfindung auch in einem Fluidleitungssystem, das einen solchen Adapter sowie eine - beispielsweise als Anschlußstutzen und/oder als Leitungsverzweigung ausgebildete - erste Fluidleitung mit einem von einer Wandung umhüllten Lumen, das sich von einer in einem ersten Leitungsende der ersten Fluidleitung verorteten ersten Strömungsöffnung sowohl bis zu einer in einem zweiten Leitungsende nämlicher ersten Fluidleitung verorteten zweiten Strömungsöffnung als auch bis zu einer von nämlicher zweiten Strömungsöffnung beabstandet im zweiten Leitungsende nämlicher ersten Fluidleitung verorteten dritten Strömungsöffnung erstreckt, umfaßt.

Ferner besteht die Erfindung auch darin, ein solches Fluidleitungssystem zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, beispielsweise eines verflüssigtes Gases, beispielsweise nämlich eines Methan und/oder Ethan und/oder Propan und/oder Buthan enthaltenden Flüssiggases und/oder eines verflüssigten Erdgases (LNG), oder eines komprimierten Gases, beispielsweise nämliche eines komprimierten Erdgases (CNG), zu verwenden.

Nach einer ersten Ausgestaltung des Adapters der Erfindung ist der Fortsatz dafür eingerichtet, in ein von einer Wandung einer an das freie Stutzenende anzuschließenden Fluidleitung umhülltes Lumen nämlicher Fluidleitung - beispielsweise unter Bildung zweier durch den Fortsatz voneinander separierter, jeweils zum Führen von hindurchströmendem Fluid eingerichteten röhrenförmiger Kammern nämlicher Fluidleitung - eingeführt zu werden; dies beispielsweise derart, daß in dem Lumen der Fluidleitung eine mit dem ersten Strömungskanal des Adapters kommunizierende röhrenförmige erste Kammer sowie eine mit dem zweiten Strömungskanal des Adapters kommunizierende röhrenförmige zweite Kammer gebildet werden bzw. sind. Diese Ausgestaltung der Erfindung weiterbildend, ist ferner vorgesehen, daß eine Seitenfläche des Fortsatzes zumindest bereichsweise als Dichtfläche ausgebildet ist, beispielsweise derart, daß voneinander beabstandete Teilbereiche nämlicher Seitenfläche dafür eingerichtet sind, einen jeweils korrespondierenden, dem Lumen der an das freie Stutzenende anzuschließenden Fluidleitung zugewandten Teilbereich der Wandung nämlicher Fluidleitung zu kontaktieren. Hierfür kann ein erster Teilbereich der Seitenfläche des Fortsatzes dafür eingerichtet sein, einen korrespondierenden ersten Teilbereich der Wandung der nämlicher Fluidleitung zu kontaktieren, bzw. kann ein vom ersten Teilbereich der Seitenfläche entfernter zweiter Teilbereich nämlicher Seitenfläche dafür eingerichtet sein, einen korrespondierenden, mithin vom ersten Teilbereich der Wandung entfernten zweiten Teilbereich der Wandung nämlicher Fluidleitung zu kontaktieren.

Nach einer zweiten Ausgestaltung des Adapters der Erfindung ist vorgesehen, daß der Fortsatz zumindest bezüglich einer sich ausgehend vom freien Stutzenden bis zum freien Ende erstreckenden gedachten Längsachse achsensymmetrisch ist.

Nach einer dritten Ausgestaltung des Adapters der Erfindung ist vorgesehen, daß eine den ersten Strömungskanal umhüllende Wandung des Adapters zumindest anteilig, beispielsweise auch überwiegend oder vollständig, aus Metall besteht.

Nach einer vierten Ausgestaltung des Adapters der Erfindung ist vorgesehen, daß eine den zweiten Strömungskanal umhüllende Wandung des Adapters zumindest anteilig, beispielsweise auch überwiegend oder vollständig, aus Metall, beispielsweise dem gleichen Metall wie eine den ersten Strömungskanal umhüllende Wandung, besteht

Nach einer fünften Ausgestaltung des Adapters der Erfindung ist vorgesehen, daß der Fortzsatz zumindest anteilig, beispielsweise auch überwiegend oder vollständig, aus Metall, beispielsweise dem gleichen Metall wie eine den ersten Strömungskanal umhüllende Wandung und/oder dem gleichen Metall wie eine den zweiten Strömungskanal umhüllende Wandung, besteht.

Nach einer sechsten Ausgestaltung des Adapters der Erfindung ist vorgesehen, daß der Fortsatz eine Breite aufweist, die größer als ein Durchmesser der ersten Strömungsöffnung des ersten Anschlußstutzens und/oder die größer als ein Durchmesser der zweiten Strömungsöffnung des ersten Anschlußstutzens ist.

Nach einer siebenten Ausgestaltung des Adapters der Erfindung ist vorgesehen, daß der erste Anschlußstutzen rohrförmig ist.

Nach einer achten Ausgestaltung des Adapters der Erfindung ist vorgesehen, daß das freie Stutzenende des ersten Anschlußstutzens von einem Anschlußflansch gefaßt ist.

Nach einer neunten Ausgestaltung des Adapters der Erfindung ist vorgesehen, daß der zweite Anschlußstutzen rohrförmig ist.

Nach einer zehnten Ausgestaltung des Adapters der Erfindung ist vorgesehen, daß das freie Stutzenende des zweiten Anschlußstutzens von einem Anschlußflansch gefaßt ist.

Nach einer elften Ausgestaltung des Adapters der Erfindung ist vorgesehen, daß der dritte Anschlußstutzen rohrförmig ist.

Nach einer zwölften Ausgestaltung des Adapters der Erfindung ist vorgesehen, daß das freie Stutzenende des dritten Anschlußstutzens von einem Anschlußflansch gefaßt ist.

Nach einer dreizehnten Ausgestaltung des Adapters der Erfindung ist vorgesehen, daß der zweite Anschlußstutzen und der dritte Anschlußstutzen baugleich sind.

Nach einer ersten Ausgestaltung des Fluidleitungssystems der Erfindung ist vorgesehen, daß der Adapter mit der ersten Fluidleitung verbunden ist; dies beispielsweise derart, daß sowohl der erste Strömungskanal des Adapters als auch der zweite Strömungskanal des Adapters in das Lumen der ersten Fluidleitung münden, und/oder derart, daß die erste Fluidleitung mit ihrem ersten Leitungsende an das freie Stutzenende des ersten Anschlußstutzen angeschlossen ist.

Nach einer zweiten Ausgestaltung des Fluidleitungssystems der Erfindung ist vorgesehen, daß die erste Fluidleitung mit deren ersten Leitungsende an den Adapter, beispielsweise über dessen ersten Anschlußstutzen, angeschlossen ist; dies beispielsweise derart, daß der Fortsatz des Adapters in das Lumen der ersten Fluidleitung unter Bildung zweier durch den Fortsatz voneinander separierter, jeweils zum Führen von hindurchströmendem Fluid eingerichteten röhrenförmigen Kammern der ersten Fluidleitung hineinragt.

Nach einer dritten Ausgestaltung des Fluidleitungssystems der Erfindung ist vorgesehen, daß die erste Fluidleitung mit deren ersten Leitungsende an den ersten Anschlußstutzen des Adapters angeschlossen ist, derart, daß der Fortsatz des Adapters in das Lumen der ersten Fluidleitung - beispielsweise unter Bildung zweier durch den Fortsatz voneinander separierter, jeweils zum Führen von hindurchströmendem Fluid eingerichteten röhrenförmiger Kammern der ersten Fluidleitung - hineinragt; dies beispielsweise auch derart, daß in dem Lumen der ersten Fluidleitung eine mit dem ersten Strömungskanal des Adapters kommunizierende röhrenförmige erste Kammer sowie eine mit dem zweiten Strömungskanal des Adapters kommunizierende röhrenförmige zweite Kammer gebildet sind.

Nach einer vierten Ausgestaltung des Fluidleitungssystems der Erfindung ist vorgesehen, daß die erste Fluidleitung mittels eines - beispielsweise als Leitungsverzweigung oder Leitungsvereinigung ausgebildeten - Verteilerstücks eines Meßwandlers - beispielsweise auch eines vibronischen Meßwandlers und/oder eines Meßwandlers eines Coriolis-Massendurchfluß-Meßgeräts - gebildet ist.

Nach einer fünften Ausgestaltung des Fluidleitungssystems der Erfindung ist vorgesehen, daß mittels der ersten Fluidleitung ein - beispielsweise als Leitungsverzweigung oder Leitungsvereinigung ausgebildetes - Verteilerstück eines Meßwandlers - beispielsweise auch eines vibronischen Meßwandlers und/oder eines Meßwandlers eines Coriolis-Massendurchfluß-Meßgeräts - gebildet ist.

Nach einer sechsten Ausgestaltung des Fluidleitungssystems der Erfindung ist vorgesehen, daß der Fortsatz eine Kontur aufweist, die zumindest bereichsweise - beispielsweise überwiegend oder vollständig - komplementär zu einer einem Längsschnitt der ersten Fluidleitung entsprechenden Kontur der Wandung nämlicher Fluidleitung ist.

Nach einer siebenten Ausgestaltung des Fluidleitungssystems der Erfindung ist vorgesehen, daß ein erster Teilbereich der Seitenfläche des Fortsatzes einen korrespondierenden ersten Teilbereich der Wandung der ersten Fluidleitung, beispielsweise unter Bildung einer ein Hindurchfließen von Fluid begrenzenden oder verhindernden Dichtung, kontaktiert. Diese Ausgestaltung der Erfindung weiterbildend ist ferner vorgesehen, daß ein vom ersten Teilbereich der Seitenfläche entfernter - beispielsweise gleichgroßer und/oder nämlichem ersten Teilbereich gegenüberliegender - zweiter Teilbereich nämlicher Seitenfläche einen korrespondierenden, mithin vom ersten Teilbereich der Wandung entfernten zweiten Teilbereich der Wandung der ersten Fluidleitung - beispielsweise auch unter Bildung einer ein Hindurchfließen von Fluid begrenzenden oder auch verhindernden Dichtung - kontaktiert.

Nach einer achten Ausgestaltung des Fluidleitungssystems der Erfindung ist vorgesehen, daß das Lumen der ersten Fluidleitung eine Länge - gemessen als kürzester Abstand zwischen dem ersten Leitungsende der Fluidleitung und dem zweiten Leitungsende nämlicher Fluidleitung, aufweist, und daß die Länge des Fortsatzes nicht mehr beträgt, als nämliche Länge des Lumens der ersten Fluidleitung. Diese Ausgestaltung der Erfindung weiterbildend ist ferner vorgesehen, daß die erste Fluidleitung eine innerhalb von deren Lumen angeordnete - beispielsweise plattenförmigen und/oder scheibenartigen - Zwischenwand aufweist, die sich ausgehend von einem zwischen der zweiten Strömungsöffnung ersten Fluidleitung und der dritten Strömungsöffnung der ersten Fluidleitung verorteten Bereich mit einer Länge, die kleiner als die Länge des Lumens der ersten Fluidleitung ist, bis zu einem vom zweiten Leitungsende der ersten Fluidleitung entfernten freien Zwischenwandende erstreckt. Die Zwischenwand kann beispielsweise auch eine Breite aufweisen, die gleich einem Kaliber der ersten Fluidleitung ist und/oder die gleich einem Durchmesser der ersten Strömungsöffnung der ersten Fluidleitung ist.

Nach einer neunten Ausgestaltung des Fluidleitungssystems der Erfindung ist vorgesehen, daß der Fortsatz des Adapters mit einem dem zweiten Leitungsende der ersten Fluidleitung zugewandten Teilbereich der Seitenfläche einen zwischen der zweiten Strömungsöffnung und der dritten Strömungsöffnung verorteten, dem Lumen der ersten Fluidleitung zugewandten - beispielsweise als Dichtfläche ausgebildeten - Teilbereich der Wandung kontaktiert, beispielsweise unter Bildung einer ein Hindurchfließen von Fluid begrenzenden oder verhindernden Dichtung.

Nach einer zehnten Ausgestaltung des Fluidleitungssystems der Erfindung ist vorgesehen, daß eine, beispielsweise zumindest bereichsweise als Dichtfläche ausgebildete, Seitenfläche des Fortsatzes des Adapters die Wandung der ersten Fluidleitung zumindest teilweise - beispielsweise unter Bildung einer ein Hindurchfließen von Fluid begrenzenden oder verhindernden Dichtung - kontaktiert; dies beispielsweise auch derart, daß voneinander beabstandete Teilbereiche nämlicher Seitenfläche einen jeweils dem Lumen der ersten Fluidleitung zugewandten korrespondierenden Teilbereich der Wandung nämlicher Fluidleitung kontaktieren.

Nach einer elften Ausgestaltung des Fluidleitungssystems der Erfindung ist vorgesehen, daß die erste Fluidleitung mit deren ersten Leitungsende an den ersten Anschlußstutzen des Adapters angeschlossen ist, derart, daß der Fortsatz des Adapters in das Lumen der ersten Fluidleitung unter Bildung zweier durch den Fortsatz voneinander separierter, jeweils dem Führen von hindurchströmendem Fluid dienlichen röhrenförmiger Kammern der ersten Fluidleitung hineinragt, von welchen zwei - beispielsweise auch gleichgroßen - Kammern der ersten Fluidleitung sich eine erste Kammer von der ersten Strömungsöffnung des ersten Anschlußstutzens bis zur zweiten Strömungsöffnung der ersten Fluidleitung, gleichwohl nicht zur zweiten Strömungsöffnung des ersten Anschlußstutzens erstreckt und sich eine zweite Kammer von der zweiten Strömungsöffnung des ersten Anschlußstutzens bis zur dritten Strömungsöffnung der ersten Fluidleitung, gleichwohl nicht zur ersten Strömungsöffnung des ersten Anschlußstutzens erstreckt; dies beispielsweise derart, daß die erste Kammer der ersten Fluidleitung mit dem ersten Strömungskanal des Adapters und die zweite Kammer der ersten Fluidleitung mit dem zweiten Strömungskanal des Adapters kommunizieren. Diese Ausgestaltung der Erfindung weiterbildend ist ferner vorgesehen, daß der erste Strömungskanal des Adapters via erste Strömungsöffnung des ersten Anschlußstutzens in die erste Kammer der ersten Fluidleitung mündet, und daß der zweite Strömungskanal des Adapters via zweite Strömungsöffnung des ersten Anschlußstutzens in die zweite Kammer der ersten Fluidleitung mündet; dies im besonderen in der Weise, daß der erste Strömungskanal des Adapters nicht in die zweite Kammer der ersten Fluidleitung mündet, und daß der zweite Strömungskanal des Adapters nicht in die erste Kammer der ersten Fluidleitung mündet.

Nach einer zwölften Ausgestaltung des Fluidleitungssystems der Erfindung ist vorgesehen, daß der Fortsatz eine Breite aufweist, die kleiner als ein Kaliber der ersten Fluidleitung ist und/oder die kleiner als ein Durchmesser der ersten Strömungsöffnung der ersten Fluidleitung ist.

Nach einer dreizehnten Ausgestaltung des Fluidleitungssystems der Erfindung ist vorgesehen, daß die erste Fluidleitung als starres und/oder zumindest abschnittsweise kreiszylindrisches Rohr ausgebildet ist.

Nach einer vierzehnten Ausgestaltung des Fluidleitungssystems der Erfindung ist vorgesehen, daß die das Lumen der ersten Fluidleitung umhüllende Wandung zumindest anteilig, beispielsweise auch überwiegend oder vollständig, aus Metall besteht.

Nach einer fünfzehnten Ausgestaltung des Fluidleitungssystems der Erfindung ist vorgesehen, daß das erste Leitungsende der ersten Fluidleitung von einem Anschlußflansch gefaßt ist.

Nach einer ersten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- sowie wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind; dies beispielsweise derart, daß sowohl das Lumen der zweiten Fluidleitung als auch das Lumen der dritten Fluidleitung mit dem Lumen der ersten Fluidleitung kommunizieren und/oder derart, daß die erste Strömungsöffnung der zweiten Fluidleitung in die zweite Strömungsöffnung der ersten Fluidleitung und die erste Strömungsöffnung der dritten Fluidleitung in die dritte Strömungsöffnung der ersten Fluidleitung münden.

Nach einer ersten Ausgestaltung der ersten Weiterbildung der Erfindung ist ferner vorgesehen, daß der Fortsatz des Adapters eine Breite aufweist, die kleiner als ein Kaliber der ersten Fluidleitung ist und/oder die kleiner als ein Durchmesser der ersten Strömungsöffnung der ersten Fluidleitung ist, und daß ein Durchmesser der ersten Strömungsöffnung der zweiten Fluidleitung kleiner als die Breite des Fortsatzes ist.

Nach einer zweiten Ausgestaltung der ersten Weiterbildung der Erfindung ist ferner vorgesehen, daß der Fortsatz des Adapters eine Breite aufweist, die kleiner als ein Kaliber der ersten Fluidleitung ist und/oder die kleiner als ein Durchmesser der ersten Strömungsöffnung der ersten Fluidleitung ist, und daß ein Durchmesser der ersten Strömungsöffnung der dritten Fluidleitung kleiner als die Breite des Fortsatzes ist.

Nach einer dritten Ausgestaltung der ersten Weiterbildung der Erfindung ist ferner vorgesehen, daß der Fortsatz des Adapters eine Breite aufweist, die kleiner als ein Kaliber der ersten Fluidleitung ist und/oder die kleiner als ein Durchmesser der ersten Strömungsöffnung der ersten Fluidleitung ist, und daß ein Kaliber der zweiten Fluidleitung kleiner als die Breite des Fortsatzes ist.

Nach einer vierten Ausgestaltung der ersten Weiterbildung der Erfindung ist ferner vorgesehen, daß der Fortsatz des Adapters eine Breite aufweist, die kleiner als ein Kaliber der ersten Fluidleitung ist und/oder die kleiner als ein Durchmesser der ersten Strömungsöffnung der ersten Fluidleitung ist, und daß ein Kaliber der dritten Fluidleitung kleiner als die Breite des Fortsatzes ist.

Nach einer fünften Ausgestaltung der ersten Weiterbildung der Erfindung ist ferner vorgesehen, daß die zweite Fluidleitung als starres und/oder zumindest abschnittsweise kreiszylindrisches Rohr ausgebildet ist.

Nach einer sechsten Ausgestaltung der ersten Weiterbildung der Erfindung ist ferner vorgesehen, daß die das Lumen der zweiten Fluidleitung umhüllende Wandung zumindest anteilig, beispielsweise auch überwiegend oder vollständig, aus Metall besteht.

Nach einer siebenten Ausgestaltung der ersten Weiterbildung der Erfindung ist ferner vorgesehen, daß die dritte Fluidleitung als starres und/oder zumindest abschnittsweise kreiszylindrisches Rohr ausgebildet ist.

Nach einer achten Ausgestaltung der ersten Weiterbildung der Erfindung ist ferner vorgesehen, daß die das Lumen der dritten Fluidleitung umhüllende Wandung zumindest anteilig, beispielsweise auch überwiegend oder vollständig, aus Metall besteht.

Nach einer neunten Ausgestaltung der ersten Weiterbildung der Erfindung ist ferner vorgesehen, daß die zweite Fluidleitung und die dritte Fluidleitung baugleich sind.

Nach einer zehnten Ausgestaltung der ersten Weiterbildung der Erfindung ist ferner vorgesehen, daß die erste Fluidleitung mit deren ersten Leitungsende an den ersten Anschlußstutzen des Adapters angeschlossen ist, derart, daß der Fortsatz des Adapters in das Lumen der ersten Fluidleitung unter Bildung zweier durch den Fortsatz voneinander separierter, jeweils dem Führen von hindurchströmendem Fluid dienlichen röhrenförmiger Kammern der ersten Fluidleitung hineinragt, von welchen zwei - beispielsweise auch gleichgroßen - Kammern der ersten Fluidleitung sich eine erste Kammer von der ersten Strömungsöffnung des ersten Anschlußstutzens bis zur zweiten Strömungsöffnung der ersten Fluidleitung, gleichwohl nicht zur zweiten Strömungsöffnung des ersten Anschlußstutzens erstreckt und sich eine zweite Kammer von der zweiten Strömungsöffnung des ersten Anschlußstutzens bis zur dritten Strömungsöffnung der ersten Fluidleitung, gleichwohl nicht zur ersten Strömungsöffnung des ersten Anschlußstutzens erstreckt. Diese Ausgestaltung der Erfindung weiterbildend ist ferner vorgesehen, daß das Lumen der zweiten Fluidleitung via zweite Strömungsöffnung der ersten Fluidleitung in die erste Kammer der ersten Fluidleitung und das Lumen der dritten Fluidleitung via dritte Strömungsöffnung der ersten Fluidleitung in die zweite Kammer der ersten Fluidleitung münden, bzw. daß der erste Strömungskanal des Adapters via erste Strömungsöffnung des ersten Anschlußstutzens in die erste Kammer der ersten Fluidleitung und der zweite Strömungskanal des Adapters via zweite Strömungsöffnung des ersten Anschlußstutzens in die zweite Kammer der ersten Fluidleitung münden; dies im besonderen in der Weise, daß sowohl der erste Strömungskanal des Adapters als auch das Lumen der zweiten Fluidleitung jeweils nicht in die zweite Kammer der ersten Fluidleitung münden, und daß sowohl der zweite Strömungskanal des Adapters als auch das Lumen der dritten Fluidleitung jeweils nicht in die erste Kammer der ersten Fluidleitung münden.

Nach einer elften Ausgestaltung der ersten Weiterbildung der Erfindung ist ferner vorgesehen, daß zumindest die zweite Fluidleitung Bestandteil eines dem Generieren wenigstens eines mit der wenigstens einen Meßgröße korrespondierenden Meßsignals dienenden Meßwandlers, beispielsweise eines vibronischen Meßwandlers oder eines magnetisch-induktiven Meßwandlers, ist.

Nach einer zwölften Ausgestaltung der ersten Weiterbildung der Erfindung ist ferner vorgesehen, daß zumindest die zweite Fluidleitung und die dritte Fluidleitung jeweils Bestandteil eines dem Generieren wenigstens eines mit der wenigstens einen Meßgröße korrespondierenden Meßsignals dienenden Meßwandlers, beispielsweise eines vibronischen Meßwandlers oder eines magnetisch-induktiven Meßwandlers, sind.

Nach einer dreizehnten Ausgestaltung der ersten Weiterbildung der Erfindung ist ferner vorgesehen, daß die zweite Fluidleitung und die dritte Fluidleitung jeweils Bestandteil ein und desselben dem Generieren wenigstens eines mit der wenigstens einen Meßgröße korrespondierenden Meßsignals dienenden Meßwandlers sind.

Nach einer vierzehnten Ausgestaltung der ersten Weiterbildung der Erfindung ist ferner vorgesehen, daß zumindest die zweite Fluidleitung dafür eingerichtet ist, von Fluid durchströmt und währenddessen vibrieren gelassen zu werden. Diese Ausgestaltung der Erfindung weiterbildend ist ferner vorgesehen, daß auch die dritte Fluidleitung dafür eingerichtet ist, beispielsweise simultan zur zweiten Fluidleitung, von Fluid durchströmt und währenddessen, beispielsweise simultan zur zweiten Fluidleitung, vibrieren gelassen zu werden.

Nach einer zweiten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- sowie wenigstens einen, beispielsweise elektromechanischen, Schwingungserreger zum Anregen bzw. Aufrechterhalten mechanischer Schwingungen, beispielsweise Biegeschwingungen, zumindest der zweiten Fluidleitung, beispielsweise nämlich zum Anregen bzw. Aufrechterhalten mechanischer Schwingungen sowohl der zweiten Fluidleitung als auch der dritten Fluidleitung;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind.

Nach einer dritten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- sowie wenigstens einen, beispielsweise zumindest an der zweiten Fluidleitung angebrachten und/oder zumindest in deren Nähe plazierten, ersten Sensor zum Erzeugen wenigstens eines mit einer Meßgröße eines im Fluidleitungssystem geführten Fluids korrespondierenden, nämlich wenigsten eines von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - beispielsweise elektrischen - ersten Meßsignals;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind.

Nach einer vierten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- einen, beispielsweise zumindest an der zweiten Fluidleitung angebrachten und/oder zumindest in deren Nähe plazierten, ersten Sensor zum Erzeugen wenigstens eines mit einer Meßgröße eines im Fluidleitungssystem geführten Fluids korrespondierenden, nämlich wenigsten eines von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - beispielsweise elektrischen - ersten Meßsignals;
- sowie wenigstens einen, beispielsweise zumindest an der zweiten Fluidleitung angebrachten und/oder zumindest in deren Nähe plazierten und/oder zum ersten Sensor baugleichen, zweiten Sensor zum Erzeugen wenigstens eines mit der Meßgröße korrespondierenden - beispielsweise elektrischen - zweiten Meßsignals;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind.

Nach einer fünften Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- einen, beispielsweise zumindest an der zweiten Fluidleitung angebrachten und/oder zumindest in deren Nähe plazierten, ersten Sensor zum Erzeugen wenigstens eines mit einer Meßgröße eines im Fluidleitungssystem geführten Fluids korrespondierenden, nämlich wenigsten eines von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - beispielsweise elektrischen - ersten Meßsignals;
- sowie eine mit dem ersten Sensor elektrisch gekoppelte Meß- und Betriebselektronik;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind. Diese Ausgestaltung der Erfindung weiterbildend ist ferner vorgesehen, daß die Meß- und Betriebselektronik dafür eingerichtet ist, das wenigstens erste Meßsignal zu verarbeiten, beispielsweise nämlich mittels des ersten Meßsignals Meßwerte für die wenigstens eine Meßgröße zu ermitteln.

Nach einer sechsten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- einen, beispielsweise zumindest an der zweiten Fluidleitung angebrachten und/oder zumindest in deren Nähe plazierten, ersten Sensor zum Erzeugen wenigstens eines mit einer Meßgröße eines im Fluidleitungssystem geführten Fluids korrespondierenden, nämlich wenigsten eines von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - beispielsweise elektrischen - ersten Meßsignals;
- wenigstens einen, beispielsweise elektromechanischen, Schwingungserreger zum Anregen bzw. Aufrechterhalten mechanischer Schwingungen, beispielsweise Biegeschwingungen, zumindest der zweiten Fluidleitung, beispielsweise nämlich zum Anregen bzw. Aufrechterhalten mechanischer Schwingungen sowohl der zweiten Fluidleitung als auch der dritten Fluidleitung;
- sowie eine sowohl mit dem ersten Sensor als auch mit dem Schwingungserreger elektrisch gekoppelte Meß- und Betriebselektronik;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind. Diese Ausgestaltung der Erfindung weiterbildend ist ferner vorgesehen, daß die Meß- und Betriebselektronik dafür eingerichtet ist, das wenigstens erste Meßsignal zu verarbeiten, beispielsweise nämlich mittels des ersten Meßsignals Meßwerte für die wenigstens eine Meßgröße zu ermitteln. Diese Ausgestaltung der Erfindung weiterbildend ist ferner vorgesehen, daß die Meß- und Betriebselektronik dafür eingerichtet ist, sowohl ein elektrische Anregungssignal in den Schwingungserreger einzuspeisen als auch das wenigstens erste Meßsignal zu verarbeiten, beispielsweise nämlich mittels des ersten Meßsignals Meßwerte für die wenigstens eine Meßgröße zu ermitteln, und daß der Schwingungserreger dafür eingerichtet ist, mittels des Anregungssignals eingespeiste elektrische Leistung in mechanische Schwingungen zumindest der zweiten Fluidleitung, beispielsweise sowohl der zweiten Fluidleitung als auch der dritten Fluidleitung, bewirkende mechanische Leistung zu wandeln.

Nach einer siebenten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- sowie eine - beispielsweise als Anschlußstutzen und/oder als Leitungsvereinigung ausgebildete - vierte Fluidleitung mit einem von einer Wandung umhüllten, sich von einer in einem ersten Leitungsende der vierten Fluidleitung verorteten ersten Strömungsöffnung sowohl bis zu einer in einem zweiten Leitungsende nämlicher vierten Fluidleitung verorteten zweiten Strömungsöffnung als auch bis zu einer von nämlicher zweiten Strömungsöffnung beabstandet im zweiten Leitungsende nämlicher vierten Fluidleitung verorteten dritten Strömungsöffnung erstreckenden Lumen;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind, und wobei sowohl die zweite Fluidleitung mit deren zweiten Leitungsende als auch die dritte Fluidleitung mit deren zweiten Leitungsende jeweils mit dem zweiten Leitungsende der vierten Fluidleitung verbunden ist; dies beispielsweise derart, daß sowohl das Lumen der zweiten Fluidleitung als auch das Lumen der dritten Fluidleitung mit dem Lumen der vierten Fluidleitung kommuniziert und/oder derart, daß die zweite Strömungsöffnung der zweiten Fluidleitung in die zweite Strömungsöffnung der vierten Fluidleitung und die zweite Strömungsöffnung der dritten Fluidleitung in die dritte Strömungsöffnung der vierten Fluidleitung münden.

Nach einer ersten Ausgestaltung der siebenten Weiterbildung der Erfindung ist ferner vorgesehen, daß die erste Fluidleitung und die vierte Fluidleitung baugleich sind.

Nach einer zweiten Ausgestaltung der siebenten Weiterbildung der Erfindung ist ferner vorgesehen, daß die vierte Fluidleitung als starres und/oder zumindest abschnittsweise kreiszylindrisches Rohr ausgebildet ist.

Nach einer dritten Ausgestaltung der siebenten Weiterbildung der Erfindung ist ferner vorgesehen, daß die das Lumen der vierten Fluidleitung umhüllende Wandung zumindest anteilig, beispielsweise auch überwiegend oder vollständig, aus Metall besteht.

Nach einer vierten Ausgestaltung der siebenten Weiterbildung der Erfindung ist ferner vorgesehen, daß das erste Leitungsende der vierten Fluidleitung von einem Anschlußflansch gefaßt ist.

Nach einer achten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- sowie ein Schutzgehäuse für die zweite Fluidleitung und die dritte Fluidleitung;
wobei das Schutzgehäuse (1000) eine von einer Wandung, beispielsweise aus einem Metall, umhüllte Kavität aufweist, innerhalb der die zweite Fluidleitung und zumindest die dritte Fluidleitung plaziert sind.

Nach einer ersten Ausgestaltung der achten Weiterbildung der Erfindung ist ferner vorgesehen, daß ein erstes Gehäuseende des Schutzgehäuses mittels der ersten Fluidleitung gebildet ist, beispielsweise nämlich derart, daß die erste Fluidleitung integraler Bestandteil des Schutzgehäuses ist und/oder daß das Schutzgehäuse eine die Kavität seitlich begrenzende Seitenwand aufweist, die seitlich an der ersten Fluidleitung fixiert bzw. stoffschlüssig mit der ersten Fluidleitung verbunden ist.

Nach einer zweiten Ausgestaltung der achten Weiterbildung der Erfindung umfaßt das Fluidleitungssystems weiters eine - beispielsweise als Anschlußstutzen und/oder als Leitungsvereinigung ausgebildete - vierte Fluidleitung mit einem von einer Wandung umhüllten, sich von einer in einem ersten Leitungsende der vierten Fluidleitung verorteten ersten Strömungsöffnung sowohl bis zu einer in einem zweiten Leitungsende nämlicher vierten Fluidleitung verorteten zweiten Strömungsöffnung als auch bis zu einer von nämlicher zweiten Strömungsöffnung beabstandet im zweiten Leitungsende nämlicher vierten Fluidleitung verorteten dritten Strömungsöffnung erstreckenden Lumen, wobei ein erstes Gehäuseende des Schutzgehäuses mittels der ersten Fluidleitung gebildet ist, und wobei ein zweites Gehäuseende des Schutzgehäuses mittels der vierten Fluidleitung gebildet ist; dies beispielsweise derart, daß sowohl die erste Fluidleitung als auch die vierte Fluidleitung integraler Bestandteil des Schutzgehäuses ist und/oder daß das Schutzgehäuse eine die Kavität seitlich begrenzende Seitenwand aufweist, die seitlich sowohl an der ersten Fluidleitung als auch an der vierten Fluidleitung fixiert bzw. sowohl mit der ersten Fluidleitung als auch mit der vierten Fluidleitung stoffschlüssig verbunden ist.

Nach einer neunten Weiterbildung des Fluidleitungssystems der Erfindung umfaßt dieses weiters:
- eine zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen;
- wenigstens eine dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen;
- sowie eine - beispielsweise als Anschlußstutzen und/oder als Leitungsvereinigung ausgebildete - vierte Fluidleitung mit einem von einer Wandung umhüllten, sich von einer in einem ersten Leitungsende der vierten Fluidleitung verorteten ersten Strömungsöffnung sowohl bis zu einer in einem zweiten Leitungsende nämlicher vierten Fluidleitung verorteten zweiten Strömungsöffnung als auch bis zu einer von nämlicher zweiten Strömungsöffnung beabstandet im zweiten Leitungsende nämlicher vierten Fluidleitung verorteten dritten Strömungsöffnung erstreckenden Lumen;
- eine fünfte Fluidleitung mit einem von einer Wandung umhüllten, sich von einer in einem ersten Leitungsende der fünften Fluidleitung verorteten ersten Strömungsöffnung bis zu einer in einem zweiten Leitungsende nämlicher fünften Fluidleitung verorteten zweiten Strömungsöffnung erstreckenden Lumen,
- sowie eine sechste Fluidleitung mit einem von einer Wandung umhüllten, sich von einer in einem ersten Leitungsende der sechsten Fluidleitung verorteten ersten Strömungsöffnung bis zu einer in einem zweiten Leitungsende nämlicher sechsten Fluidleitung verorteten zweiten Strömungsöffnung erstreckenden Lumen;
wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden sind, und wobei sowohl die zweite Fluidleitung mit deren zweiten Leitungsende als auch die dritte Fluidleitung mit deren zweiten Leitungsende jeweils mit dem zweiten Leitungsende der vierten Fluidleitung verbunden ist.

Nach einer ersten Ausgestaltung der neunten Weiterbildung der Erfindung ist ferner vorgesehen, daß die fünfte Fluidleitung als starres und/oder zumindest abschnittsweise kreiszylindrisches Rohr ausgebildet ist.

Nach einer zweiten Ausgestaltung der neunten Weiterbildung der Erfindung ist ferner vorgesehen, daß die das Lumen der fünften Fluidleitung umhüllende Wandung zumindest anteilig, beispielsweise auch überwiegend oder vollständig, aus Metall besteht.

Nach einer dritten Ausgestaltung der neunten Weiterbildung der Erfindung ist ferner vorgesehen, daß das erste Leitungsende der fünften Fluidleitung von einem Anschlußflansch gefaßt ist.

Nach einer vierten Ausgestaltung der neunten Weiterbildung der Erfindung ist ferner vorgesehen, daß die sechste Fluidleitung als starres und/oder zumindest abschnittsweise kreiszylindrisches Rohr ausgebildet ist.

Nach einer fünften Ausgestaltung der neunten Weiterbildung der Erfindung ist ferner vorgesehen, daß die das Lumen der sechsten Fluidleitung umhüllende Wandung zumindest anteilig, beispielsweise auch überwiegend oder vollständig, aus Metall besteht.

Nach einer sechsten Ausgestaltung der neunten Weiterbildung der Erfindung ist ferner vorgesehen, daß das erste Leitungsende der sechsten Fluidleitung von einem Anschlußflansch gefaßt ist.

Nach einer siebenten Ausgestaltung der neunten Weiterbildung der Erfindung ist ferner vorgesehen, daß der Adapter sowohl mit der fünften Fluidleitung als auch mit der sechsten Fluidleitung verbunden ist; dies beispielsweise derart, daß der erste Strömungskanal des Adapters mit dem Lumen der fünften Fluidleitung und der zweite Strömungskanal des Adapters mit dem Lumen der sechsten Fluidleitung kommunizieren und/oder derart, daß die fünfte Fluidleitung mit deren ersten Leitungsende an das freie Stutzenende des zweiten Anschlußstutzen und die sechste Fluidleitung mit deren ersten Leitungsende an das freie Stutzenende des dritten Anschlußstutzen angeschlossen sind.

Nach einer achten Ausgestaltung der neunten Weiterbildung der Erfindung ist ferner vorgesehen, daß die fünfte Fluidleitung mit ihrem ersten Leitungsende - beispielsweise über den zweiten Anschlußstutzen des Adapters - an den Adapter angeschlossen ist, und daß die sechste Fluidleitung mit ihrem ersten Leitungsende - beispielsweise über den dritten Anschlußstutzen des Adapters - an den Adapter angeschlossen ist; dies beispielsweise derart, daß das Lumen der fünften Fluidleitung mit dem ersten Strömungskanal des Adapters kommuniziert und daß das Lumen der sechsten Fluidleitung mit dem zweiten Strömungskanal des Adapters kommuniziert.

Nach einer neunten Ausgestaltung der neunten Weiterbildung der Erfindung ist ferner vorgesehen, daß die fünfte Fluidleitung - beispielsweise mit deren ersten Leitungsende - an den zweiten Anschlußstutzen des Adapters angeschlossen ist und daß die sechste Fluidleitung - beispielsweise mit deren ersten Leitungsende - an den dritten Anschlußstutzen des Adapters angeschlossen ist; dies beispielsweise derart, daß das Lumen der fünften Fluidleitung mit dem ersten Strömungskanal des Adapters und das Lumen der sechsten Fluidleitung mit dem zweiten Strömungskanal des Adapters kommunizieren.

Ein Grundgedanke der Erfindung besteht darin, einen zwei separate Strömungskanäle aufweisenden Adapter zum Verbinden von Fluidleitungen bereitzustellen, der dafür geeignet ist, auf einfache Weise in einer bereits bestehenden, nominell als Leitungsverzweigung bzw. Leitungsvereinigung dienlichen Fluidleitung nachträglich voneinander getrennte, gleichwohl jeweils mit einer anderen von wenigstens zwei an nämliche Fluidleitung angeschlossenen weiteren Fluidleitungen kommunizierende Strömungskammern auszubilden, derart, daß im Ergebnis jede der Strömungskammern, mithin auch die jeweils korrespondierende Fluidleitung jeweils mit einem anderen der zwei Strömungskanäle des Adapters kommunizieren kann. Die Strömungskanäle wiederum können jeweils mit einer weiteren Fluidleitung fluidisch verbunden werden, beispielsweise mittels Standardflanschverbindungen, so daß im Ergebnis über jede dieser Fluidleitungen ein Fluidstrom an den Adapter geführt und von dort weiter über den jeweils korrespondierenden Strömungskanal und die daran anschließende, nachträglich gebildete Strömungskammer bis hin zur jeweils angeschlossenen Fluidleitung geleitet werden kann.

Unter Verwendung eines erfindungsgemäßen Adapters kann somit beispielsweise auch ein konventioneller Meßwandler vom Vibrationstyp mit einer Leitungsverzweigung, einer Leitungsvereinigung sowie wenigstens zwei jeweils sowohl in nämlich Leitungsverzweigung als auch in nämliche Leitungsvereinigung mündenden Fluidleitungen, mithin auch ein Meßwandler gemäß einer der eingangs erwähnten Patentanmeldungen EP-A 816 807, US-A 2001/0037690, US-A 2008/0184816, US-A 48 23 613, US-A 56 02 345, US-A 57 96 011, WO-A 90/15310, WO-A 00/08423, WO-A 2006/107297, WO-A 2006/118557, WO-A 2008/059262, WO-A 2009/048457, WO-A 2009/078880, WO-A 2009/120223, WO-A 2009/123632, WO-A 2010/059157, WO-A 2013/006171 oder WO-A 2013/070191, oder aber beispielsweise auch ein Meßwandler gemäß der US-A 2011/0146416, der US-A 2011/0265580, der US-A 2012/0192658 oder der eigenen, nicht vorveröffentlichten deutschen Patentanmeldung DE102014118367.3, ohne weiteres, insb. nämlich mittels einfacher (Standard-)Flanschverbindungen, in ein Fluidleitungssystem der eingangs genannten Art eingegliedert werden, wie z.B. in ein Fluidleitungssystem, bei dem ein jeder von zwei, durch Aufteilung eines zentral zugeführten Fluidstroms erhaltenen unabhängigen Fluidströmen durch jeweils eine von zwei Fluidleitungen ein und desselben Meßwandlers auch stromabwärts weiterzuführen ist, oder aber auch in ein Fluidleitungssystem, bei dem zwei unabhängige Fluidströme durch jeweils eine von wenigstens zwei Fluidleitungen zu führen und erst stromabwärts der Fluidleitungen des Meßwandlers zu einem gemeinsamen Fluidstrom zusammenzuführen sind, insb. nämlich auch in ein Fluidleitungssystem gemäß der eingangs erwähnten internationalen Patentanmeldung PCT/EP2015/070020.

Unter Verwendung zweier erfindungsgemäßer Adapter kann ein konventioneller Meßwandler der in Rede stehenden Art zudem beispielsweise auch zur Bildung eines Meßsystems, wie es in der US-A 2006/0016273 oder der US-A 2007/0095152 beschrieben ist, verwendet werden, indem einer der beiden Adapter in der vorbezeichneten Weise in die nominell als Leitungsverzweigung dienliche Fluidleitung und der andere der beiden Adapter in der vorbezeichneten Weise in die nominell als Leitungsvereinigung dienlichen Fluidleitung eingesetzt werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im Einzelnen zeigen:
- Fig. 1a, 1b: in verschiedenen perspektivischen Außenansichten ein Adapter zum Verbinden von dem Führen eines strömenden Fluids dienlichen Fluidleitungen;
- Fig. 2: in einer geschnittenen Seitenansicht den Adapter von Fig. 1a bzw. 1b;
- Fig. 3a, 3b: chronologisch in zwei schematischen Seitenansichten die Verwendung eines Adapters gemäß Fig. 1a bzw. 1b zum Bilden eines Fluidleitungssystem;
- Fig. 4: in einer geschnittenen Seitenansicht das Fluidleitungssystem von Fig. 3b;
- Fig. 5: in einer geschnittenen Seitenansicht eine weitere Variante des Fluidleitungssystems von Fig. 3b;
- Fig. 6a, 6b: in verschiedenen perspektivischen Seitenansichten eine Verwendung eines Adapters gemäß Fig. 1a bzw. 1b zum Bilden eines, beispielsweise als Meßsystem zum Messen wenigstens einer Meßgröße eines strömenden Fluids ausgestalteten, Fluidleitungssystems;
- Fig. 7a, 7b: in perspektivischen, teilweise geschnitten Außenansichten ein gemäß Fig. 6a bzw. 6b gebildetes Fluidleitungssystem;
- Fig. 8: schematisch eine weitere Variante eines mittels eines Adapters gemäß Fig. 1a bzw. 1b gebildeten Fluidleitungssystem;
- Fig. 9: in einer geschnittenen Seitenansicht ein Fluidleitungssystem gemäß Fig. 8;
- Fig. 10, 11: schematisch weitere Varianten eines mittels eines Adapters gemäß Fig. 1a bzw. 1b gebildeten Fluidleitungssystem;
- Fig. 12: schematisch eine weitere Varianten eines mittels zweier Adapter gemäß Fig. 1a bzw. 1b gebildeten Fluidleitungssystem;
- Fig. 13: einer geschnittenen Seitenansicht einen Teilbereich eines Fluidleitungssystem von Fig. 12;
- Fig. 14: schematisch eine weitere Variante eines Fluidleitungssystem gemäß Fig. 10;
- Fig. 15: schematisch ein mittels eines Adapters gemäß Fig. 1a bzw. 1b gebildetes, als Meßsystem dienliches Fluidleitungssystem;
- Fig. 16a, 16b: in weiteren verschiedenen perspektivischen Außenansichten eine Variante eines Fluidleitungssystems gemäß Fig. 15; und
- Fig. 17: in einer perspektivischen Ansicht ein mittels eines Adapters gemäß Fig. 1a bzw. 1b sowie mittels eines, beispielsweise vibronischen, Meßwandlers gebildetes Fluidleitungssystems.

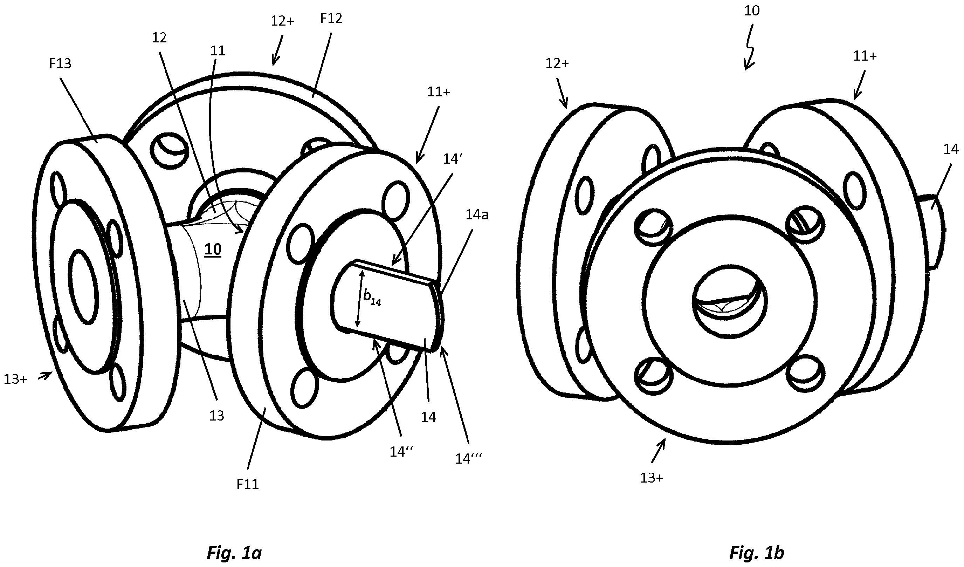

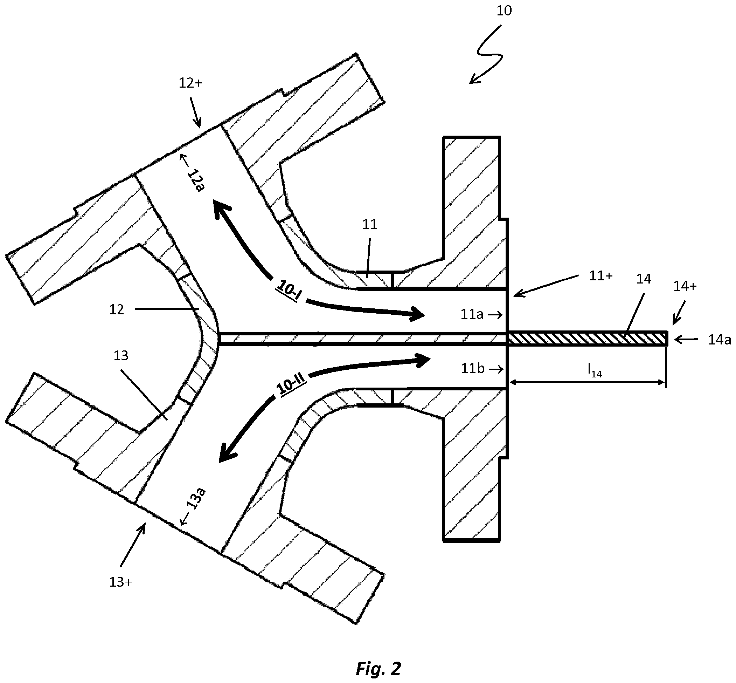

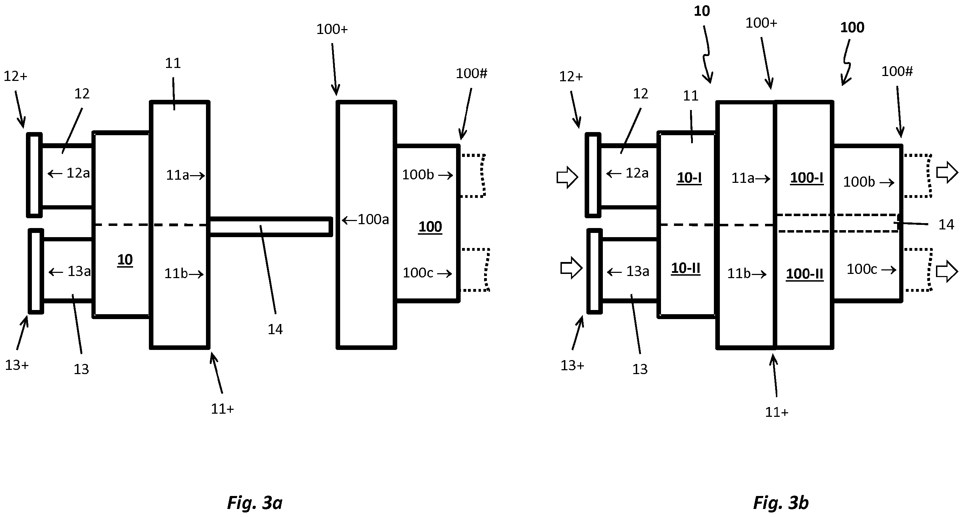

In den Fign. 1a, 1b sowie 2 ist in zwei verschiedenen perspektivischen Außenansichten bzw. in geschnittener Seitenansicht (Fig. 2) ein Adapter 10 gezeigt, der dazu dient, dem Führen eines strömenden Fluids dienliche, beispielsweise jeweils als Rohre ausgebildete, Fluidleitungen miteinander zu verbinden bzw. - wie auch in den in Fig. 3a, 3b, 4, 5, 6a, 6b bzw. 7 bis 12 schematisch dargestellt oder wie aus einer Zusammenschau nämlicher Figuren ohne weiteres ersichtlich - im Verbund mit nämlichen Fluidleitungen ein Fluidleitungssystem zu bilden. Nämliches Fluidleitungssystem kann z.B. Bestandteil eines dem Messen wenigstens einer Meßgröße eines strömenden Fluids dienlichen, beispielsweise nämlich mittels eines Coriolis-Massenduchfluß-Meßgeräts bzw. mittels eines Dichte-Meßgeräts gebildeten und/oder als Übergabestelle für eichpflichtigen Güterverkehr ausgebildeten, Meßsystems sein bzw. ein solches Meßsystem umfassen. Im besonderen kann der Adapter 10 auch dazu verwendet werden, einen, beispielsweise vibronischen, Meßwandler bzw. dessen Fluidleitungen in den Verlauf eines Rohrleitungssystems, ggf. auch nachträglich in den Verlauf eines bereits bestehenden Rohrleitungssystems einzugliedern.

Der Adapter 10 weist einen - beispielsweise rohrförmigen bzw. hohlzylindrischen - ersten Anschlußstutzen 11, einen - beispielsweise rohrförmigen bzw. hohlzylindrischen - zweiten Anschlußstutzen 12 sowie einen - beispielsweise rohrförmigen bzw. hohlzylindrischen und/oder zum Anschlußstutzen 12 baugleichen - dritten Anschlußstutzen 13 auf. Desweiteren weist der Adapter 10 zwei voneinander separierte, jeweils zum Führen von ein- und wieder ausströmendem Fluid eingerichtete röhrenförmige Strömungskanäle 10-I, 10-II auf, von denen sich ein erster Strömungskanal 10-I von einer in einem freien Stutzenende 12+ des Anschlußstutzens 12 verorteten Strömungsöffnung 12a nämlichen Anschlußstutzens 12 bis zu einer in einem freien Stutzenende 11+ des Anschlußstutzens 11 verorteten ersten Strömungsöffnung 11a nämlichen Anschlußstutzens 11 sowie ein zweiter Strömungskanal 10-II von einer in einem freien Stutzenende 13+ des Anschlußstutzens 13 verorteten Strömungsöffnung 13a nämlichen Anschlußstutzens 13 bis zu einer ebenfalls im freien Stutzenende 11+ des Anschlußstutzens 11 verorteten zweiten Strömungsöffnung 11b nämlichen Anschlußstutzens 11 erstrecken. Darüberhinaus umfaßt der erfindungsgemäße Adapter 10 einen an einen zwischen der Strömungsöffnung 11a und der Strömungsöffnung 11b verorteten Bereich des freien Stutzenendes 11+ des Anschlußstutzens 11 grenzenden - beispielsweise plattenförmigen und/oder scheibenartigen - Fortsatz 14, der sich ausgehend vom freien Stutzenden 11+ mit einer Länge l₁₄ bis zu einem von nämlichem freien Stutzenden 11+ entfernten freien Fortsatzende 14+ erstreckt. Der vorbezeichnete, an den Fortsatz 14 grenzenden Bereich des freien Stutzenendes 11+ wird zumindest anteilig sowohl durch einen Endbereich bzw. eine Stirnfläche einer den ersten Strömungskanal 10-I umhüllenden, beispielsweise aus Metall bestehenden, Wandung als auch durch einen Endbereich bzw. eine Stirnfläche einer den zweiten Strömungskanal 10-II umhüllenden, beispielsweise aus Metall bestehenden, Wandung gebildet.

Nach einer weiteren Ausgestaltung der Erfindung besteht der Fortsatz 14 zumindest anteilig, beispielsweise auch überwiegend oder vollständig, aus Metall, beispielsweise einem Edelstahl. Bei dem Metall kann es sich beispielsweise um das gleiche Material handeln, wie jenes, aus dem die den ersten Strömungskanal umhüllende Wandung zumindest anteilig, insb. überwiegend oder vollständig, besteht bzw. aus dem die den zweiten Strömungskanal umhüllende Wandung zumindest anteilig, insb. überwiegend oder vollständig, besteht. Der Fortsatz 14 kann dementsprechend auch mittels einer stoffschlüssigen Verbindung, beispielsweise einer Schweiß- oder einer Lötverbindung, am vorbezeichneten Bereich des freien Stutzenendes 11+ befestigt sein. Der Fortsatz 14 und die beiden vorbezeichneten Wandungen können aber beispielsweise auch integraler Bestandteil ein und desselben, beispielsweise gegossenen und/oder ausgefrästen, Formteils sein.

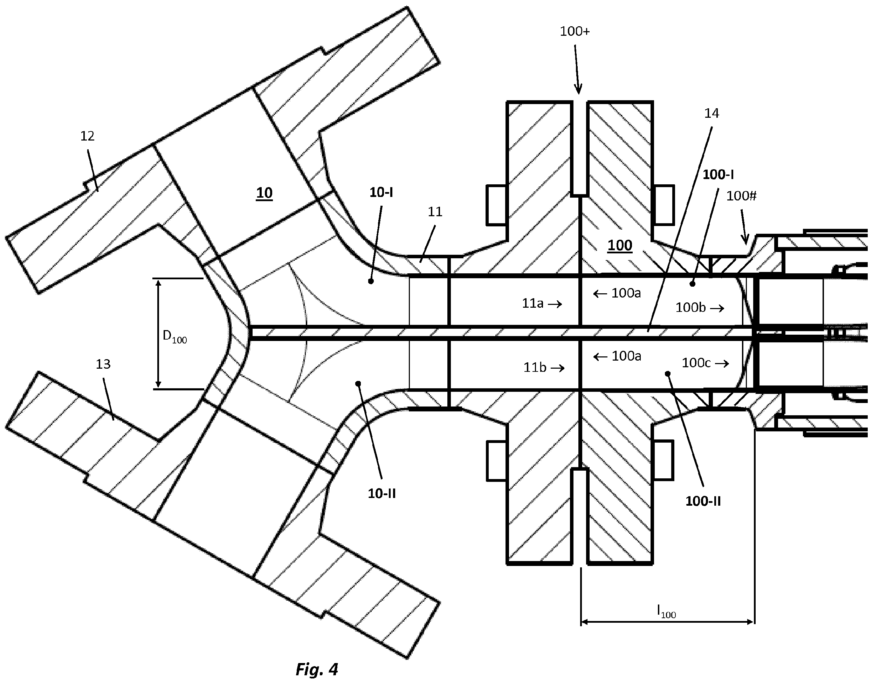

Ein - hier beispielsweise von einem Anschlußflansch F11 gefaßtes - freies Stutzenende 11+ des Anschlußstutzen 11 ist, wie auch in den Fign. 3a, 3b und 4 gezeigt bzw. wie aus deren Zusammenschau ohne weiteres ersichtlich, ferner dafür eingerichtet, mit einem - beispielsweise gleichermaßen wie nämliches Stutzenende 11+ von einem Anschlußflansch gefaßten - Leitungsende einer Fluidleitung unter Bildung eines Fluidleitungssystems (Fig. 3b bzw. Fig. 4) verbunden zu werden, insb. derart, daß sowohl der Strömungskanal 10-I des Adapters 10 als auch der Strömungskanal 10-II des Adapters 10 mit einem Lumen nämlicher Fluidleitung kommunizieren bzw. in nämliches Lumen münden. Darüberhinaus ist auch das, beispielsweise von einem Anschlußflansch F12 gefaßte, freie Stutzenende 12+ des Anschlußstutzens 12 dafür eingerichtet, mit einem, beispielsweise gleichermaßen wie nämliches Stutzenende 12+ von einem Anschlußflansch gefaßten, Leitungsende einer anderen Fluidleitung verbunden zu werden, und ist zudem auch das, beispielsweise von einem Anschlußflansch F13 gefaßte, freie Stutzenende 13+ des Anschlußstutzens 13 dafür eingerichtet, mit einem, beispielsweise gleichermaßen wie nämliches Stutzenende 13+ von einem Anschlußflansch gefaßten, Leitungsende einer weiteren Fluidleitung verbunden zu werden. Bei den zur Bildung des Fluidleitungsystems verwendeten Anschlußflanschen, nicht zuletzt auch den vorbezeichneten Anschlußflanschen F11, F12 bzw. F13 des Adapters 10, kann es sich beispielsweise auch um Standardanschlußflansche, wie z.B. genormte Vorschweißflansche, Losflansche oder etwa sogenannte Milchverschraubungen, handeln. Die Anschlußstutzen 11, 12, 13 des Adapters 10 können zudem so ausgebildet und angeordnet sein, daß der Adapater 10 beispielsweise eine T-förmige oder, wie auch aus einer Zusammenschau der Fig. 1a, 1b und 2 ohne weiteres ersichtlich, beispielsweise eine Y-förmige Silhouette aufweist. Der Fortsatz 14 des Adapters 10 ist im besonderen dafür vorgesehen bzw. ausgestaltet, in ein von einer Wandung der vorbezeichneten, an das freie Stutzenende 11+ anzuschließenden Fluidleitung umhülltes Lumen nämlicher Fluidleitung unter Bildung zweier durch den Fortsatz 14 voneinander separierter, jeweils zum Führen von hindurchströmendem Fluid eingerichteten röhrenförmiger Kammern nämlicher Fluidleitung eingeführt zu werden; dies im besonderen in der Weise, daß - wie auch in Fig. 4 schematisch dargestellt bzw. aus einer Zusammenschau der Fig. 3b und 4 ohne weiteres ersichtlich- in dem Lumen der Fluidleitung sowohl eine mit dem Strömungskanal 10-I des Adapters 10 kommunizierende röhrenförmige erste Kammer 100-I als auch eine mit dem Strömungskanal 10-II des Adapters 10 kommunizierende röhrenförmige zweite Kammer 100-II gebildet werden bzw. sind. Nach einer weiteren Ausgestaltung der Erfindung weist der Fortsatz 14 dafür eine Breite b₁₄ auf, die größer als ein Durchmesser der ersten Strömungsöffnung 10a und/oder die größer als ein Durchmesser der zweiten Strömungsöffnung 10b ist. Nach einer anderen Ausgestaltung der Erfindung ist eine Seitenfläche 14a des Fortsatzes 14 zumindest bereichsweise als Dichtfläche ausgebildet. Beispielsweise können hierbei auch voneinander beabstandete Teilbereiche nämlicher Seitenfläche 14a dafür eingerichtet sein, einen jeweils korrespondierenden, dem Lumen der an das freie Stutzenende 11+ anzuschließenden Fluidleitung zugewandten Teilbereich der Wandung nämlicher Fluidleitung zu kontaktieren. Dementsprechend weist die Seitenfläche 14a des Fortsatzes 14 nach einer weiteren Ausgestaltung der Erfindung einen ersten Teilbereich 14' auf, der dafür eingerichtet ist, einen korrespondierenden ersten Teilbereich der Wandung der vorbezeichneten Fluidleitung zu kontaktieren, und weist die Seitenfläche 14a des Fortsatzes 14 einen von nämlichem ersten Teilbereich 14' entfernten, insb. gleichgroßen und/oder nämlichem ersten Teilbereich 14' gegenüberliegenden, zweiten Teilbereich 14" auf dafür eingerichtet ist, einen korrespondierenden, mithin vom ersten Teilbereich der Wandung entfernten zweiten Teilbereich der Wandung nämlicher Fluidleitung zu kontaktieren. Der erste Teilbereich 14' kann beispielsweise gleichgroß wie der zweite Teilbereich 14" ausgebildet sein. Zudem können die beiden Teilbereiche 14', 14" beispielsweise auch so ausgebildete sein, daß sie zueinander und/oder zu einer gedachten Trägheitshauptachse des Adapters 10 parallel verlaufen. Darüberhinaus kann ein sich zwischen dem vorbezeichneten ersten Teilbereich 14' der Seitenfläche 14a und dem vorbezeichneten zweiten Teilbereich 14" der Seitenfläche 14a erstreckender dritter Teilbereich 14'" der Seitenfläche 14a eine das freie Fortsatzende 14+ definierende Stirnfläche des Fortsatzes 14 bilden. Nach einer anderen Ausgestaltung der Erfindung weist der Fortsatz 14 eine sich ausgehend vom freien Stutzenende 11+ bis zum Fortsatzende 14+ erstreckende gedachte - beispielsweise auch zur vorbezeichneten gedachten Trägheitshauptachse des Adapters 10 parallele oder koinzidente - Längsachse auf, bezüglich Fortsatz 14 achsensymmetrisch ist, beispielsweise um mittels des Adapters 10 in einer Fluidleitung mit einem bezüglich einer gedachten - beispielsweise auch mit einer Einschubrichtung des Adapters 10 bzw. dessen vorbezeichneter Trägheitshauptachse korrespondierenden - Längsachse nämlicher Fluidleitung rotationssymmetrischen Lumen die vorbezeichneten Strömungskammern ausbilden zu können. Desweiteren können der Fortsatz 14 sowie die Anschlußstutzen 11, 12, 13 so ausgebildet und angeordnete sein, daß der Adapter 10, wie auch aus einer Zusammenschau der Fig. 1a, 1b und 2 ohne weiteres ersichtlich, zumindest bezüglich nämlicher Trägheitshauptachse symmetrisch ist.

Nach einer weiteren Ausgestaltung der Erfindung ist mittels des Adapters 10 ein Fluidleitungssystem gebildet, das - wie u.a. auch in Fig. 3a, 3b, 4, 5, 6a, 6b bzw. 7 bis 12 jeweils angedeutet bzw. wie aus einer Zusammenschau nämlicher Figuren ohne weiteres ersichtlich - zuzüglich des Adapters 10 zudem eine erste Fluidleitung 100 umfaßt. Nämliches Fluidleitungssystem ist im besonderen auch dafür vorgesehen zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines zu transferierenden Fluids verwendet zu werden bzw. ein entsprechendes Meßsystem zu bilden. Bei dem zu transferierenden Fluid kann es sich beispielsweise um einen flüssigen Brenn- bzw. Kraftstoff, insb. auch um ein verflüssigtes Gas, wie etwa ein Methan und/oder Ethan und/oder Propan und/oder Buthan enthaltendes Flüssiggas und/oder ein verflüssigtes Erdgase (LNG) handeln; ein mittels des erfindungsgemäßen Fluidleitungssystem zu transferierendes Fluid kann beispielsweise aber auch ein komprimiertes Gas, etwa ein komprimiertes Erdgas (CNG), sein.

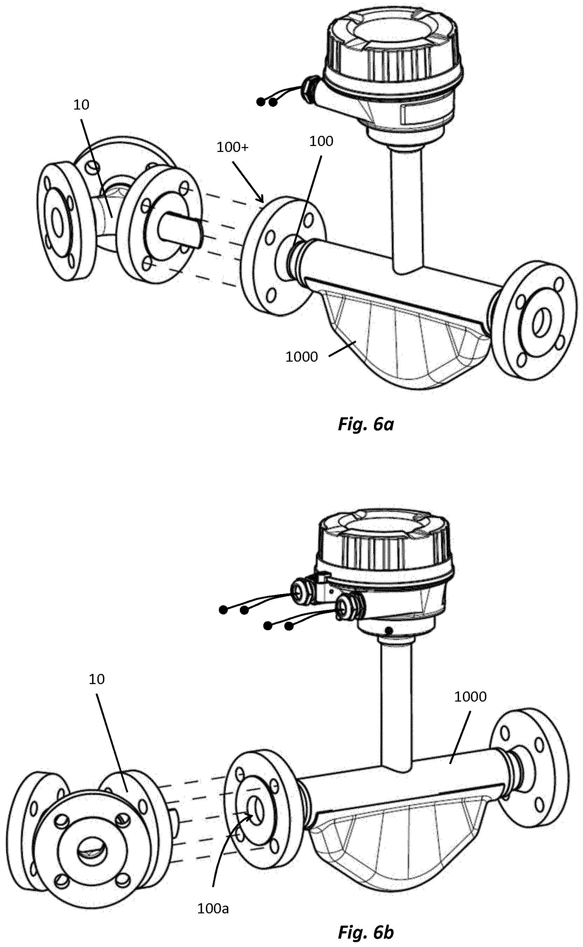

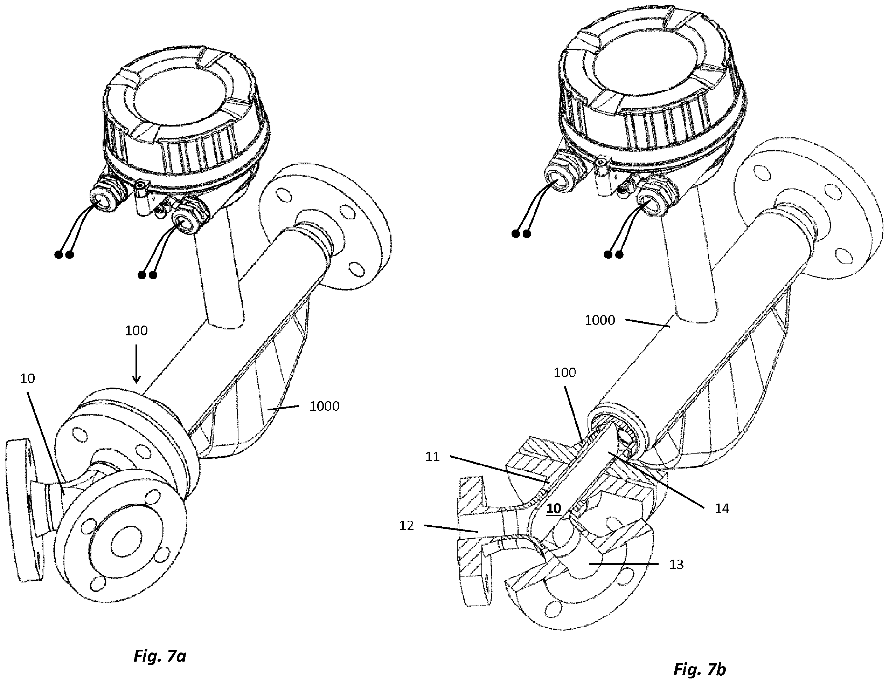

Nach einer weiteren Ausgestaltung der Erfindung ist das Fluidleitungssystem dadurch gebildet, indem der Adapter 10 mit der Fluidleitung 100 verbunden ist bzw. indem die Fluidleitung 100 mit deren Leitungsende 100+ an den Adapter 10, insb. nämlich an das freie Stutzenende 11+ des Anschlußstutzens 11, angeschlossen ist; dies im besonderen in der Weise, daß der Fortsatz 14 des Adapters 10 in das Lumen der Fluidleitung 100 hineinragt. Die Fluidleitung 100 kann, wie u.a. auch in den Fig. 6a, 6b bzw. 7 angedeutet, beispielsweise auch ein integraler Bestandteil eines bereits vor dem Anschließen des Adapters 10 fertig konfektionierten Meßgeräts sein, wie etwa eines Coriolis-Massenduchfluß- bzw. Dichte-Meßgeräts mit einem zwei oder mehr strömungstechnisch parallel geschaltete (Metall-)Rohre aufweisenden vibronischen Meßwandler. Beispielsweise kann die Fluidleitung 100 nämlich ein nominell als Leitungsverzweigung bzw. als Leitungsvereinigung dienliches Verteilerstück eines solchen Meßwandlers sein.

Die Fluidleitung 100 des Fluidleitungssystem weist ein von einer - beispielsweise aus Metall, beispielsweise nämlich Titan, Zirkonmium, einem Edelstahl oder einer Nickelbasislegierung bestehenden - Wandung umhülltes Lumen auf, das sich von einer in einem ersten Leitungsende 100+ der Fluidleitung 100 verorteten ersten Strömungsöffnung 100a sowohl bis zu einer in einem zweiten Leitungsende 100# nämlicher Fluidleitung 100 verorteten zweiten Strömungsöffnung 100b als auch bis zu einer von nämlicher Strömungsöffnung 100b beabstandet ebenfalls im zweiten Leitungsende 100# nämlicher Fluidleitung 100 verorteten dritten Strömungsöffnung 100c erstreckt, beispielsweise auch so, daß es nach Art eines Lumens eines Sammelstücks im wesentlichen Y-förmig oder nach Art eines Lumens eines T-Stücks im wesentlichen T-förmig ausgebildet ist. Die Wandung der Fluidleitung 100 kann beispielsweise aus einem gleichen Material bestehen, wie jenes, aus dem die den ersten Strömungskanal 10-I des Adapters 10 umhüllende Wandung zumindest anteilig, insb. überwiegend oder vollständig, besteht bzw. aus dem die den zweiten Strömungskanal 10-II des Adapters 10 umhüllende Wandung zumindest anteilig, insb. überwiegend oder vollständig, besteht. Des weiteren kann die Fluidleitung 100, wie auch in Fig. 4 schematisch dargestellt bzw. aus einer Zusammenschau der Fig. 4 und 6a ohne weiteres ersichtlich, zumindest in einem an das Leitungsende 100+ grenzenden Bereich als ein starrer und/oder rohrförmiger Anschlußstutzen ausgebildet sein, beispielsweise derart, daß nämliches Leitungsende 100+ bzw. die dort verortetet Strömungsöffnung 100a von einem Anschlußflansch gefaßt ist, insb. nämlich einem zu einem am Adapter 10 ggf. vorgesehenen Anschlußflansch F11 kompatiblen Anschlußflansch. Nach einer weiteren Ausgestaltung der Erfindung weist die Strömungsöffnung 100a der Fluidleitung 100 einen Durchmesser auf, der etwas größer als die vorbezeichnete Breite b₁₄ des Fortsatzes 14 ist, bzw. ist die Breite b₁₄ des Fortsatzes 14 so bemessen, daß sie etwas kleiner als ein Kaliber D₁₀₀ der Fluidleitung 100 ist. Nach einer anderen Ausgestaltung der Erfindung weist das Lumen der Fluidleitung 100 ferner eine Länge l₁₀₀, gemessen als kürzester Abstand zwischen dem ersten Leitungsende 100+ und dem zweiten Leitungsende 100#, auf, die so bemessen ist, daß sie höchstens gleich der Länge l₁₄ des Fortsatzes 14 ist, bzw. sind der Adapter 10 und die Fluidleitung 100 so ausgebildet, daß die Länge l₁₄ des Fortsatzes nicht mehr beträgt, als nämliche Länge l₁₀₀.

Nach einer weiteren Ausgestaltung der Erfindung ist der Adapter mit der Fluidleitung 100 verbunden, derart, daß - wie u.a. auch in Fig. 3b, 4 bzw. 5 jeweils schematisch dargestellt - sowohl der Strömungskanal 10-I des Adapters 10 als auch der Strömungskanal 10-II des Adapters 10 in das Lumen der Fluidleitung 100 münden, bzw. ist die Fluidleitung 100 mit deren Leitungsende 100+ an den Adapter 10 angeschlossen, derart, daß der Fortsatz 14 des Adapters 10 - wie auch in Fig. 3b, 4 bzw. 5 jeweils schematisch dargestellt - in das Lumen der Fluidleitung 100 unter Bildung zweier durch den Fortsatz voneinander separierter, jeweils zum Führen von hindurchströmendem Fluid eingerichteten röhrenförmigen Kammern 100-I, 100-II der Fluidleitung 100 hineinragt. Nach einer weiteren Ausgestaltung der Erfindung ist die Fluidleitung 100 mit deren Leitungsende 100+ an den Anschlußstutzen 11 des Adapters 10 angeschlossen, derart, daß der Fortsatz 14 des Adapters 10 in das Lumen der Fluidleitung 100 hineinragt und daß im Lumen der Fluidleitung 100 eine mit dem Strömungskanal 10-I des Adapters 10 kommunizierende röhrenförmige erste Kammer 100-I sowie eine mit dem Strömungskanal 10-II des Adapters 10 kommunizierende röhrenförmige zweite Kammer 100-II gebildet sind. Im hier gezeigten Ausführungsbeispiel münden der Strömungskanal 10-I des Adapters 10 via Strömungsöffnung 11a des Anschlußstutzens 11 in die Kammer 100-I der Fluidleitung 100 und der Strömungskanal 10-II des Adapters 10 via Strömungsöffnung 11b des Anschlußstutzens 11 in die Kammer 100-II der Fluidleitung 100 bzw. kommunizieren die Kammer 100-I mit dem Strömungskanal 10-I und die Kammer 100-II mit dem Strömungskanal 10-II. In vorteilhafter Weise kann die Fluidleitung 100 mit deren Leitungsende 100+ zudem so an den Anschlußstutzen 11 des Adapters 10 angeschlossen sein, daß die so gebildeten Kammern 100-I, 100-II gleichgroß sind und/oder daß die so gebildeten Kammern 100-I, 100-II voneinander separiert sind, beispielsweise derart, daß sich die Kammer 100-I von der Strömungsöffnung 11a des Anschlußstutzens 11 bis zur Strömungsöffnung 100b der Fluidleitung 100, gleichwohl nicht zur Strömungsöffnung 11b des Anschlußstutzens 11 erstreckt und daß sich die Kammer 100-II von der Strömungsöffnung 11b des Anschlußstutzens 11 bis zur Strömungsöffnung 100c der Fluidleitung 100, gleichwohl nicht zur Strömungsöffnung 10a des ersten Anschlußstutzens 11 erstreckt, und/oder derart, daß sich die Kammer 100-I von der Strömungsöffnung 11a des Anschlußstutzens 11 bis zur Strömungsöffnung 100b der Fluidleitung 100, gleichwohl nicht zur Strömungsöffnung 100c der Fluidleitung 100 erstreckt und daß sich die Kammer 100-II von der Strömungsöffnung 11b des Anschlußstutzens 11 bis zur Strömungsöffnung 100c der Fluidleitung 100, gleichwohl nicht zur Strömungsöffnung 100b der Fluidleitung 100 erstreckt. Dementsprechend können Fluidleitung 100 und Adapter 10 so ausgebildet sein, daß bei einem damit gebildeten Fluidleitungssystem der Strömungskanal 10-I des Adapters 10 nicht in die Kammer 100-II der Fluidleitung 100 mündet, bzw. daß bei einem damit gebildeten Fluidleitungssystem der Strömungskanal 10-II des Adapters 10 nicht in die Kammer 100-I der Fluidleitung 100 mündet.

Nicht zuletzt zwecks einer Realisierung voneinander separierter Kammern 100-I, 100-II sind der Adapter 100 und die Fluidleitung 100 nach einer weiteren Ausgestaltung der Erfindung ferner so ausgebildet, daß die - z.B. zumindest bereichsweise als Dichtfläche ausgebildete - Seitenfläche 14a des Fortsatzes 14 des Adapters 10 die Wandung der Fluidleitung 100 zumindest teilweise, insb. unter Bildung einer ein Hindurchfließen von Fluid begrenzenden oder auch verhindernden bzw. dauerhaft ausschließenden Dichtung, bzw. kontaktieren kann bzw. kontaktiert. Beispielsweise können voneinander beabstandete Teilbereiche nämlicher Seitenfläche 14a dafür ausgestaltet sein, einen jeweils dem Lumen der Fluidleitung 100 zugewandten korrespondierenden Teilbereich der Wandung nämlicher Fluidleitung 100 kontaktieren zu können bzw. zu kontaktieren. Nach einer weiteren Ausgestaltung der Erfindung weist der Fortsatz 14 des Adapters 10 daher ferner eine Kontur auf, die zumindest bereichsweise - beispielsweise auch überwiegend oder vollständig - komplementär zu einer einem Längsschnitt der Fluidleitung 100 entsprechenden Kontur der Wandung nämlicher Fluidleitung 100 ist; dies im besonderen derart, daß der vorbezeichnete erste Teilbereich 14' der Seitenfläche 14a des Fortsatzes 14 einen korrespondierenden ersten Teilbereich der Wandung der Fluidleitung 100, insb. flächig bzw. unter Bildung einer ein Hindurchfließen von Fluid begrenzenden oder verhindernden Dichtung, kontaktieren kann bzw. kontaktiert. Nach einer anderen Ausgestaltung der Erfindung ist zudem vorgesehen, daß der von nämlichem Teilbereich 14'entfernte zweite Teilbereich 14" der Seitenfläche 14 ebenfalls einen korrespondierenden, mithin vom vorbezeichneten ersten Teilbereich der Wandung entfernten zweiten Teilbereich der Wandung der Fluidleitung 100, insb. flächig bzw. unter Bildung einer ein Hindurchfließen von Fluid begrenzenden oder verhindernden Dichtung, kontaktieren kann bzw. kontaktiert.

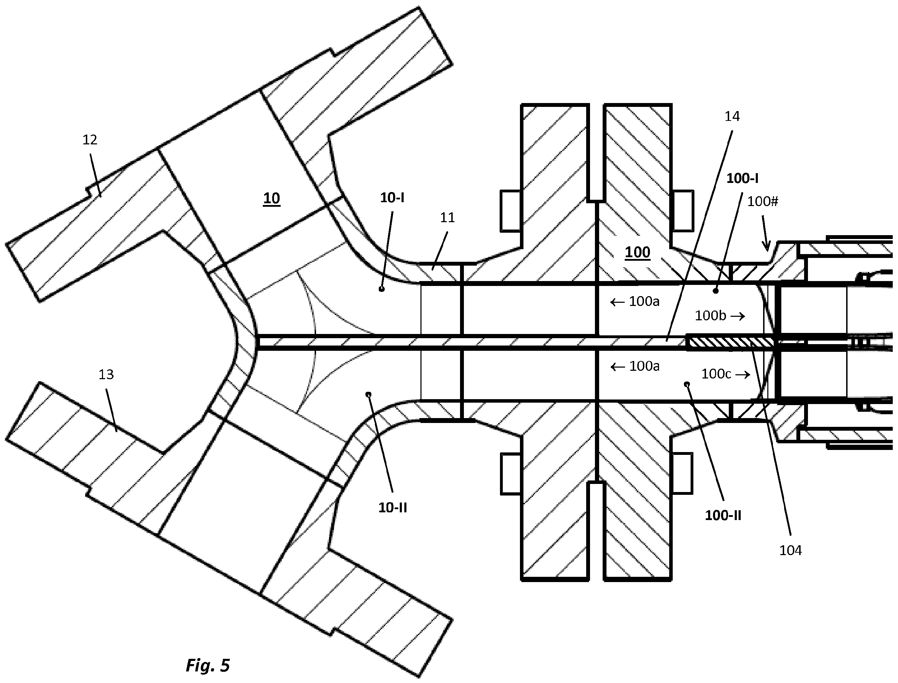

Nach einer weiteren Ausgestaltung der Erfindung ist ferner vorgesehen, daß der Fortsatz 14 des Adapters 10 mit einem dem zweiten Leitungsende 100# der Fluidleitung 100 zugewandten Teilbereich 14'" der Seitenfläche 14a einen zwischen der Strömungsöffnung 100b und der Strömungsöffnung 100c der Fluidleitung 100 verorteten, dem Lumen der Fluidleitung 100 zugewandten, beispielsweise nämlich als Dichtfläche ausgebildeten, Teilbereich der Wandung kontaktieren kann bzw. kontaktiert, beispielsweise auch unter Bildung einer ein Hindurchfließen von Fluid begrenzenden oder verhindernden Dichtung. Alternativ hierzu kann die Fluidleitung 100, wie u.a. in der eingangs erwähnten DE102014118367.3 beschrieben bzw. wie in Fig. 5 dargestellt, beispielsweise auch eine innerhalb von deren Lumen angeordnete Zwischenwand 104 aufweisen, die sich ausgehend von einem zwischen der Strömungsöffnung 100b und der Strömungsöffnung 100c der Fluidleitung 100 verorteten Bereich mit einer Länge l₁₀₄, die kleiner als die Länge l₁₀₀ des Lumens der Fluidleitung 100 ist, bis zu einem vom Leitungsende 100# der Fluidleitung 100 entfernten freien Zwischenwandende erstreckt, und können die Fluidleitung und der Adapter zudem beispielsweise auch so ausgebildet sein, daß der Fortsatz 14 des Adapters 10 mit dem Teilbereich 14'" der Seitenfläche 14a eine das Zwischenwandende bildende, korrespondierende Stirnfläche der Zwischenwand 104 unter Bildung einer ein Hindurchfließen von Fluid begrenzenden oder verhindernden Dichtung kontaktieren kann bzw. kontaktiert. Nämliche Zwischenwand 104 kann im wesentlichen plattenförmigen und/oder scheibenartigen ausgebildet sein bzw. eine Breite aufweisen, die gleich dem vorbezeichneten Kaliber D₁₀₀ der Fluidleitung 100 ist bzw. die gleich dem vorbezeichneten Durchmesser der Strömungsöffnung 100a ist. Unter Verwendung einer solchen Zwischenwand können die zur Bildung der vorbezeichneten Dichtung zwischen den beiden Kammern 100-I, 100-II der Fluidleitung 100 vorgesehenen Dichtflächen eine vergleichsweise einfache Geometrie aufweisen, beispielsweise nämliche kann so auch die durch den Teilbereich 14'" gebildete Dichtfläche ohne weiteres eben ausgebildet sein; dies auch für den Fall, daß der zwischen den Strömungsöffnungen 100b, 100c verortete Teilbereich der Wandung der Fluidleitung 100 ansonsten nicht eben, beispielsweise nämlich gewölbt ausgebildet ist.

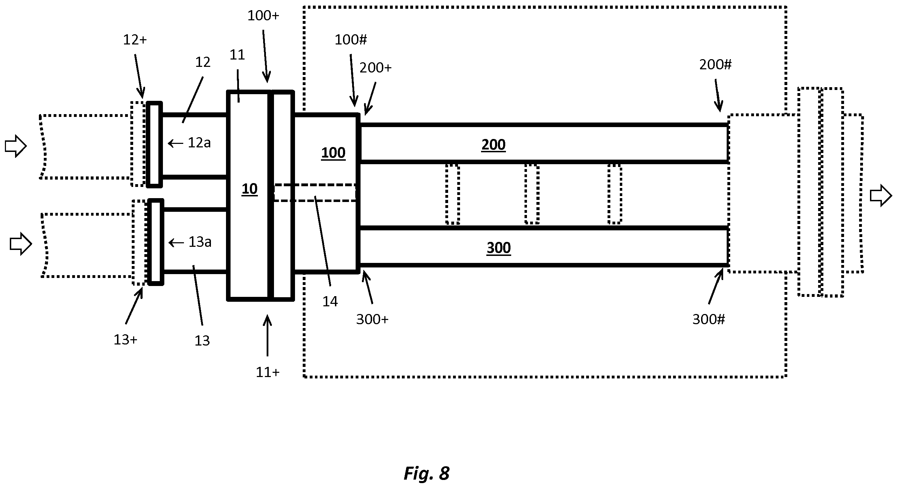

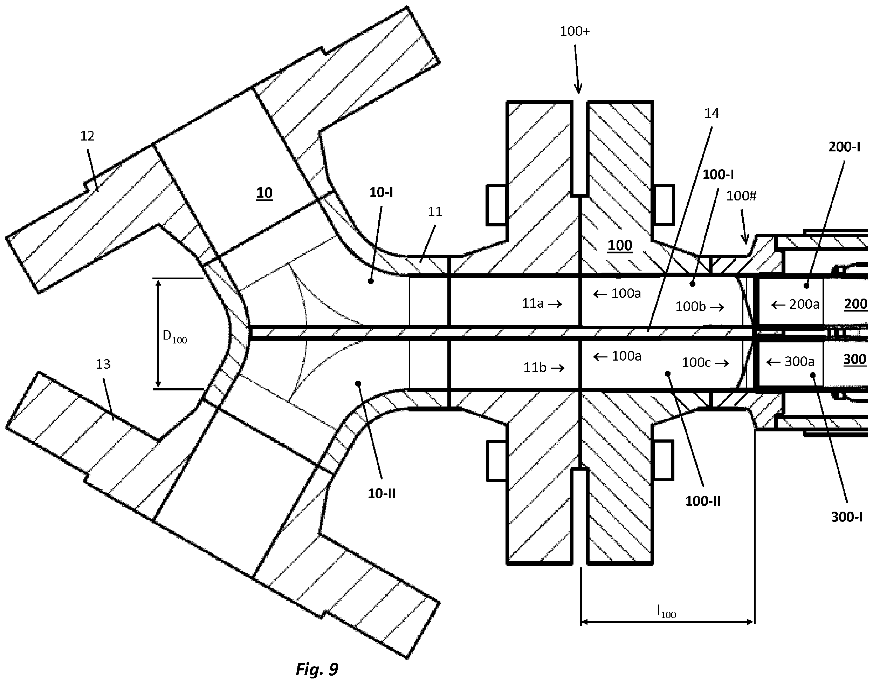

Durch die Verwendung des erfindungsgemäßen Adapters 10 im Zusammenschluß mit der Fluidleitung 100 ist es möglich, auf sehr einfache Weise auch für den bereits erwähnten Fall, daß nämliche Fluidleitung 100 nominell als Leitungsverzweigung vorgesehen ist, ein Fluidleitungssystem bereitzustellen, bei dem, wie auch in Fig. 3b angedeutet, zwei voneinander unabhängige Fluidströme zunächst durch den Adapter 10 hindurch, weiter durch die in der Fluidleitung 100 gebildeten Kammern 100-I, 100-II und weiter durch die Strömungsöffnung 100b bzw. die Strömungsöffnung 100c hindurch in jeweils eine von zwei weiteren, daran angeschlossenen Fluidleitungen zu führen. Gleichermaßen kann auch für den umgekehrten Fall, daß die Fluidleitung 100 nominell als Leitungsvereinigung vorgesehen ist, ein Fluidleitungssystem der vorbezeichneten Art eingerichtet werden, derart, zwei voneinander unabhängige Fluidströme zunächst durch jeweils eine von zwei weiteren, an die Fluidleitung 100 angeschlossene Fluidleitungen, weiter durch die Strömungsöffnung 100b bzw. die Strömungsöffnung 100c hindurch zu den in der Fluidleitung 100 gebildeten Kammern 100-I, 100-II und hernach durch den Adapter 10 hindurch geführt werden können. Nach einer weiteren Ausgestaltung der Erfindung umfaßt das mittels des Adapters 100 und der Fluidleitung 100 gebildete Fluidleitungssystem dementsprechend ferner eine - beispielsweise als starres und/oder zumindest abschnittsweise kreiszylindrisches Rohr ausgebildete - zweite Fluidleitung 200 mit einem von einer Wandung umhüllten, sich von einer in einem ersten Leitungsende 200+ der Fluidleitung 200 verorteten ersten Strömungsöffnung 200a bis zu einer in einem zweiten Leitungsende 200# nämlicher Fluidleitung 200 verorteten zweiten Strömungsöffnung 200b erstreckenden Lumen 200-I, und umfaßt nämliches Fluidleitungssystem wenigstens eine - beispielsweise als starres und/oder zumindest abschnittsweise kreiszylindrisches Rohr ausgebildete und/oder zur Fluidleitung 200 baugleiche - dritte Fluidleitung 300 mit einem von einer Wandung umhüllten, sich von einer in einem ersten Leitungsende 300+ der dritten Fluidleitung 300 verorteten ersten Strömungsöffnung 300a bis zu einer in einem zweiten Leitungsende 300# nämlicher Fluidleitung 300 verorteten zweiten Strömungsöffnung 300b erstreckenden Lumen 300-I. Die Wandung der Fluidleitung 200 wie auch die Wandung der Fluidleitung 300 können beispielsweise aus Metall, beispielsweise nämlich Titan, Zirkonmium, einem Edelstahl, oder einer Nickelbasislegierung, bzw. aus dem gleichen Material, wie die Wandung der Fluidleitung 100 bzw. wie der Fortsatz 14 bestehen. Wie u.a. auch in der Fig. 8 und 9 jeweils dargestellt bzw. aus deren Zusammenschau ersichtlich, sind hierbei sowohl die Fluidleitung 200 mit deren Leitungsende 200+ als auch die Fluidleitung 300 mit deren Leitungsende 300+ jeweils mit dem Leitungsende 100# der Fluidleitung 100 - dauerhaft, fest und leckagefrei - verbunden, so daß sowohl das Lumen 200-I der Fluidleitung 200 als auch das Lumen 300-I der Fluidleitung 300 mit dem Lumen der Fluidleitung 100 kommunizieren; dies z.B. in der Weise, daß die Strömungsöffnung 200a der Fluidleitung 200 in die Strömungsöffnung 100b der Fluidleitung 100 und die Strömungsöffnung 300a der Fluidleitung 300 in die Strömungsöffnung 100c der Fluidleitung 100 münden bzw. daß das Lumen 200-I der Fluidleitung 200 via Strömungsöffnung 100b in die Kammer 100-I der Fluidleitung 100 und das Lumen 300-I der Fluidleitung 300 via Strömungsöffnung 100c in die Kammer 100-II der Fluidleitung 100 münden. Desweiteren können der Adapter 10 und die Fluidleitungen 100, 200 und 300 so ausgebildet und angeordnet sein, daß der Strömungskanal 10-I des Adapters 10 via Kammer 100-I mit dem Lumen 200-I und der Strömungskanal 10-II des Adapters 10 via Kammer 100-II mit dem Lumen 300-I kommunizieren. Nach einer weiteren Ausgestaltung der Erfindung weist die Strömungsöffnung 200a der Fluidleitung 200, wie u.a. auch aus einer Zusammenschau der Fig. 7 und 8 ohne weiteres ersichtlich, einen Durchmesser auf, der kleiner als die Breite b₁₄ des Fortsatzes 14 ist, und/oder weist die Strömungsöffnung 300a der Fluidleitung 300 einen Durchmesser auf, der kleiner als die Breite b₁₄ des Fortsatzes 14 ist, bzw. sind der Adapter 10 und die Fluidleitungen 200, 300 so bemessen, daß ein Kaliber D₂₀₀ der Fluidleitung 200 und/oder daß ein Kaliber D₃₀₀ der Fluidleitung 300 kleiner als die Breite b₁₄ des Fortsatzes 14 sind.

Nicht zuletzt für den erwähnten Fall, daß das Fluidleitungssystem als Bestandteil eines Meßsystems ausgebildet ist, kann das Fluidleitungssystem, wie auch in Fig. 6a, 6b, 7a bzw. 7b jeweils dargestellt, ferner ein Schutzgehäuse 1000 für die Fluidleitungen 200, 300 umfassen. Das Schutzgehäuse 1000 weist eine von einer Wandung umhüllte Kavität auf, innerhalb der die Fluidleitung 200 und zumindest die Fluidleitung 300 plaziert sind. Nicht zuletzt zwecks Bildung eines in ausreichendem Maße verwindungs- und biegesteifen bzw. schlag- und druckfesten Schutzgehäuses kann dessen Wandung beispielsweise aus einem Metall, etwa einem Edelstahl, hergestellt und/oder zumindest teilweise hohlzylindrisch ausgebildet sein. Wie in den Fig. 6a, 6b, 7a bzw. 7b dargestellt bzw. aus deren Zusammenschau ohne weiteres ersichtlich, kann zudem ein erstes Gehäuseende 1000+ des Schutzgehäuses 1000 mittels der Fluidleitung 100 gebildet sein, etwa derart, daß die Fluidleitung 100 integraler Bestandteil des Schutzgehäuses ist und/oder daß das Schutzgehäuse 1000 eine die vorbezeichnete Kavität seitlich begrenzende Seitenwand aufweist, die seitlich an der Fluidleitung 100 fixiert bzw. stoffschlüssig mit dieser verbunden ist.

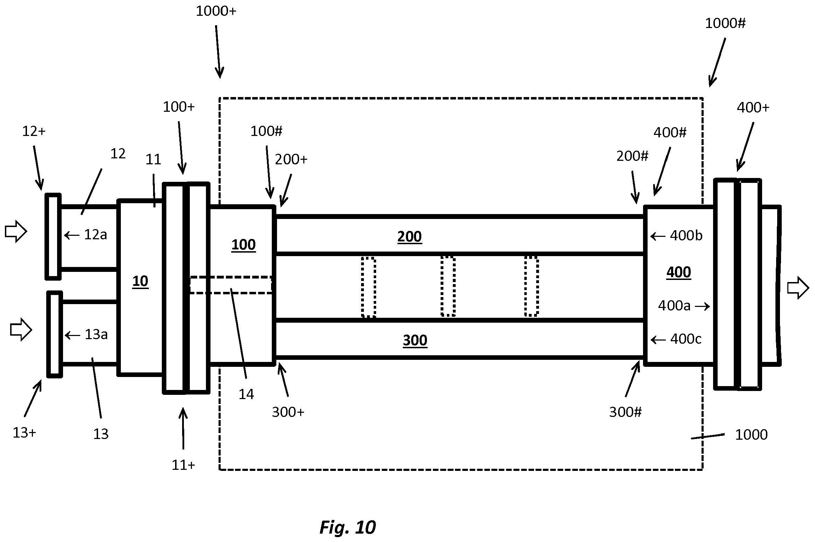

Nach einer weiteren Ausgestaltung der Erfindung weist das Fluidleitungssystem, wie u.a in Fig. 10 dargestellt, ferner eine, beispielsweise (nominell) als Leitungsvereinigung dienliche, vierte Fluidleitung 400 mit einem von einer Wandung umhüllten, sich von einer in einem ersten Leitungsende 400+ der Fluidleitung 400 verorteten ersten Strömungsöffnung 400a sowohl bis zu einer in einem zweiten Leitungsende 400# nämlicher Fluidleitung 400 verorteten zweiten Strömungsöffnung 400b als auch bis zu einer von nämlicher Strömungsöffnung 400b beabstandet im Leitungsende 400# verorteten dritten Strömungsöffnung 400c erstreckenden Lumen auf. Nämliches Lumen kann beispielsweise nach Art eines Lumens eines Sammelstücks im wesentlichen Y-förmig oder nach Art eines Lumens eines T-Stücks im wesentlichen T-förmig ausgebildet sein. Die Fluidleitung 400 kann auch als Anschlußstutzen ausgebildet sein bzw. das Leitungsende 400+ der Fluidleitung 400 kann von einem Anschlußflansch, beispielsweise nämlich einem zum vorbezeichneten Anschlußflansch F11 des Adapters 10 kompatiblen Anschlußflansch, gefaßt sein. Alternativ oder in Ergänzung kann die Wandung der Fluidleitung 400 aus einem Metall, beispielsweise nämlich Titan, Zirkonmium, einem Edelstahl oder einer Nickelbasislegierung bestehenden, hergestellt sein und/oder können die Wandungen der Fluidleitungen 100, 400 aus dem gleichen Material hergestellt sein. In vorteilhafter Weise können die Fluidleitungen 100, 400 zudem auch baugleich ausgebildet sein. Die Fluidleitung 400 ist desweiteren mit den Fluidleitungen 200, 300 verbunden. Nach einer weiteren Ausgestaltung der Erfindung ist sowohl die Fluidleitung 200 mit deren Leitungsende 200# als auch die Fluidleitung 300 mit deren

Leitungsende 300# jeweils mit dem Leitungsende 400# der Fluidleitung 400 - dauerhaft, fest und leckagefrei - verbunden; dies im besonderen in der Weise, das, wie auch in Fig. 10 angedeutet, sowohl das Lumen 200-I der Fluidleitung 200 als auch das Lumen 300-I der Fluidleitung 300 jeweils mit dem Lumen der Fluidleitung 400 kommunizieren und/oder so, daß die Strömungsöffnung 200b der Fluidleitung 200 in die Strömungsöffnung 400b der Fluidleitung 400 und die Strömungsöffnung 300b der Fluidleitung 300 in die Strömungsöffnung 400c der Fluidleitung 400 münden. Für den vorbezeichneten Fall, daß das Fluidleitungssystem ein Schutzgehäuse 1000 aufweist bzw. daß dessen erstes Gehäuseende 1000+ mittels der Fluidleitung 100 gebildet ist, kann zudem auch ein zweites Gehäuseende 1000# nämlichen Schutzgehäuses 1000 mittels der Fluidleitung 400 gebildet sein, beispielsweise auch so, daß sowohl die Fluidleitung 100 als auch die Fluidleitung 400 jeweils integraler Bestandteil des Schutzgehäuses ist bzw. daß das Schutzgehäuse 1000 eine die Kavität seitlich begrenzende Seitenwand aufweist, die seitlich sowohl an der Fluidleitung 100 als auch an der Fluidleitung 400 fixiert bzw. stoffschlüssig mit der der ersten Fluidleitung verbunden ist.

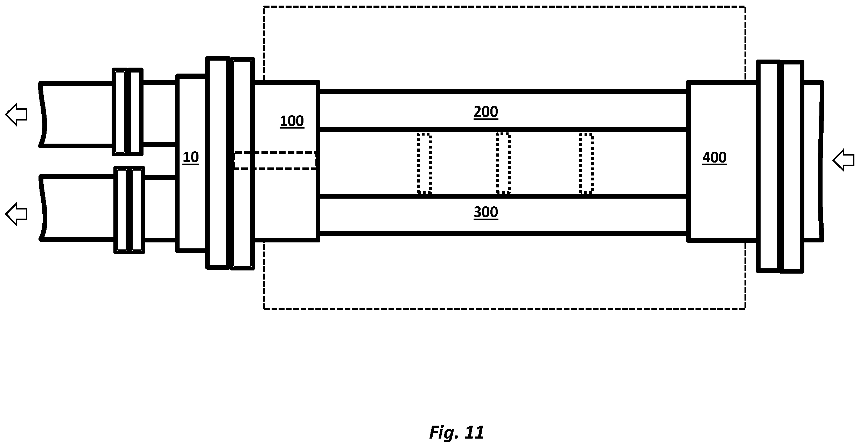

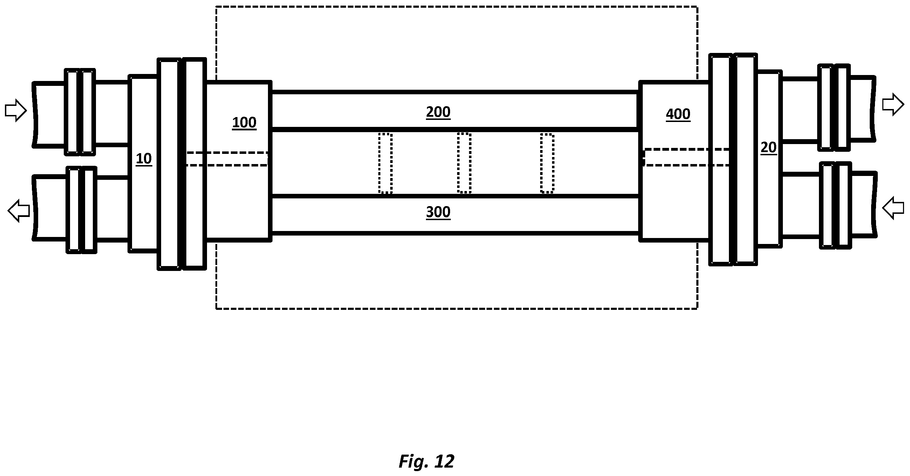

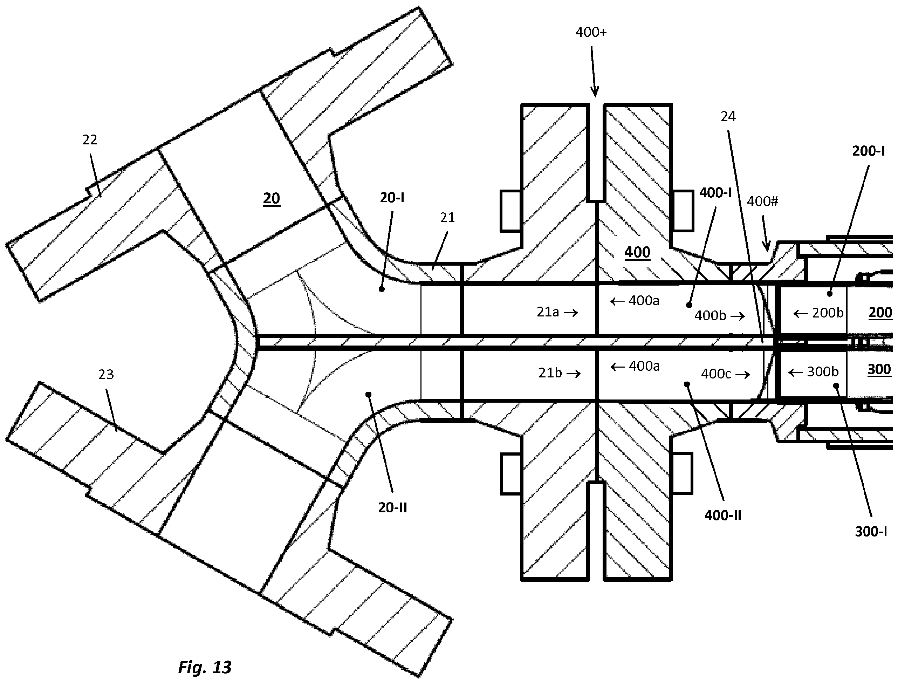

Je nach Verwendung des Fluidleitungssystem bzw. je nach Strömungsrichtung des darin geführten Fluids kann die Fluidleitung 400, wie u.a. auch in Fig. 10 angedeutet, beispielsweise als Leitungsvereinigung fungieren, etwa zwecks Bildung eines Fluidleitungssystems gemäß der eingangs erwähnten internationalen Patentanmeldung PCT/EP2015/070020; die Fluidleitung 400 kann, wie u.a. auch in Fig. 11 angedeutet, aber beispielsweise auch als Leitungsverzweigung fungieren, etwa bei Verwendung des Fluidleitunsgsystems in einer der in den eingangs erwähnten WO-A 2006/091199 bzw. WO-A 2008/013545 bezeichneten Konfigurationen bzw. Anwendungen. Unter Verwendung eines weiteren erfindungsgemäßen -beispielsweise auch zum Adapter 10 baugleichen - Adapters, kann ein konventioneller Meßwandler der vorbezeichneten Art, nämlich eine mittels der Fluidleitungen 100, 200, 300 und 400 gebildeter Meßwandler, zudem auch zur Bildung eines Meßsystems, wie es in der erwähnten US-A 2006/0016273 oder der US-A 2007/0095152 beschrieben ist, verwendet werden. Dementsprechend kann ein erfindungsgemäßes Fluidleitungssystem, wie auch in Fig. 12 bzw. 13 dargestellt, ferner zusätzlich zum Adapter 10 einen mit der Fluidleitung 400 verbundenen weiteren, beispielsweise auch zum Adapter 10 baugleichen, Adapter 20 umfassen. Der Adapter 20 und die Fluidleitung 400 können, wie in Fig. 13 dargestellt bzw. auch aus einer Zusammenschau der Fig. 9 und 13 ohne weiteres ersichtlich, zwecks Bildung zweier Strömungskammern 400-I, 400-II der Fluidleitung 400, von denen eine erste Strömungskammer 400-I mit dem Lumen 200-I der Fluidleitung 200 und eine zweite Strömungskammer 400-II mit dem Lumen 300-I der Fluidleitung 300 kommunizieren, in gleicher Weise zueinander positioniert und miteinander verbunden sein, wie der Adapter 10 und die Fluidleitung 100.

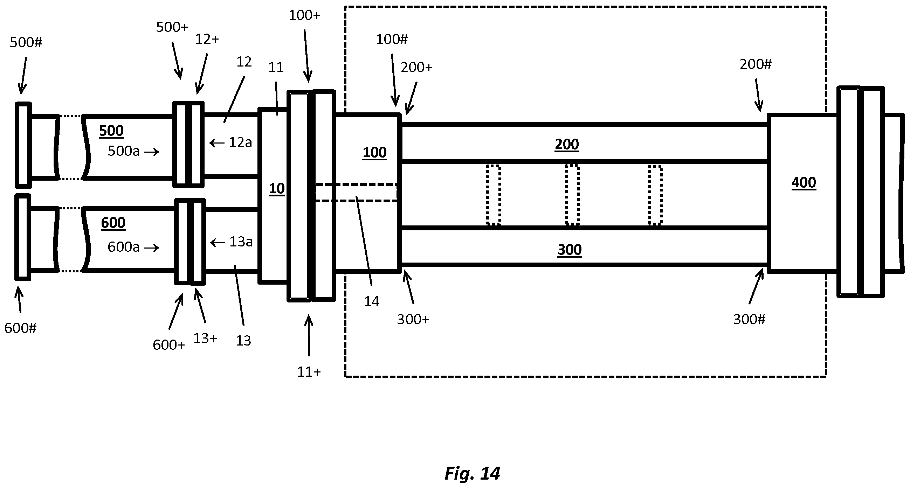

Nach einer weiteren Ausgestaltung der Erfindung ist ferner vorgesehen, daß das Fluidleitungssystem eine fünfte Fluidleitung 500 mit einem von einer Wandung umhüllten, sich von einer in einem ersten Leitungsende 500+ der Fluidleitung 500 verorteten ersten Strömungsöffnung 500a bis zu einer in einem zweiten Leitungsende 500# nämlicher Fluidleitung 500 verorteten zweiten Strömungsöffnung 500b erstreckenden Lumen sowie eine sechste Fluidleitung 600 mit einem von einer Wandung umhüllten, sich von einer in einem ersten Leitungsende 600+ der Fluidleitung 600 verorteten ersten Strömungsöffnung 600a bis zu einer in einem zweiten Leitungsende 600# nämlicher Fluidleitung 600 verorteten zweiten Strömungsöffnung 600b erstreckenden Lumen aufweist. Jede der beiden vorbezeichneten Fluidleitungen 500, 600 kann beispielsweise als starres und/oder kreiszylindrisches Rohr ausgebildete bzw. mittels einer Wandung aus einem Metall, beispielswiese einem Edelstahl bzw. einer Nickelbasislegierung, gebildet sein. Darüberhinaus können die Fluidleitungen 500, 600 beispielsweise auch Komponenten einer Zapfanlage gemäß den eingangs erwähnten WO-A 2006/091199 bzw. WO-A 2008/013545 oder auch Komponenten einer Stellvorrichtung eines der in der eingangs erwähnten PCT/EP2015/070020 gezeigten Fluidleitungssysteme bzw. Bestandteile solcher Komponenten sein, beispielsweise nämlich ein Anschluß eines Ventils bzw. ein Anschluß eines T-Stücks sein. Wie auch in Fig. 14 schematisch dargestellt, ist zudem sowohl die Fluidleitung 500 als auch die Fluidleitung 600 jeweils mit dem Adapter 10 verbunden, etwa in der Weise, daß - wie hier dargestelt - der Strömungskanal 10-I des Adapters 10 mit dem Lumen der Fluidleitung 500 und der Strömungskanal 10-II des Adapters 10 mit dem Lumen der Fluidleitung 600 kommunizieren bzw. daß die Fluidleitung 500 mit deren Leitungsende 500+ an das freie Stutzenende 12+ des Anschlußstutzen 12 und die Fluidleitung 600 mit deren Leitungsende 600+ an das freie Stutzenende 13+ des Anschlußstutzen 13 angeschlossen sind. Zum Anschließen der Fluidleitung 500 bzw. der Fluidleitun 600 an den Adapter 10 können das Leitungsende 500+ und/oder das Leitungsende 600+, wie auch in Fig. 14 angedeutet, zudem jeweils von einem Anschlußflansch, beispielsweise nämlich einem zum vorbezeichneten Anschlußflansch F12 bzw. F13 des Adapters 10 kompatiblen Anschlußflansch, gefaßt sein.

Das erfindungsgemäße Fluidleitungssystem kann, wie bereits mehrfach erwähnt, u.a. auch Bestandteil eines dem Messen wenigstens einer Meßgröße - wie z.B. einer Dichte, einer Viskosität, eines Strömungsparameters, wie etwa einer Massendurchflußrate oder einer Volumendurchflußrate, und/oder einer Temperatur - eines strömenden Fluids dienlichen Meßsystems sein bzw. ein solches Meßsystem umfassen. Nämliches Meßsystem wiederum kann beispielsweise mittels eines - beispielsweise auch dem Generieren von von einer Massendurchflußrate des strömenden Fluids abhängigen Corioliskräften dienlichen - vibronischen Meßwandlers, etwa gemäß einer der eingangs erwähnten Patentanmeldungen EP-A816 807, US-A 2001/0037690, US-A 2008/0184816, US-A 48 23 613, US-A 56 02 345, US-A 57 96 011, US-A 2011/0146416, US-A 2011/0265580, US-A 2012/0192658, WO-A 90/15310, WO-A 00/08423, WO-A 2006/107297, WO-A 2006/118557, WO-A 2008/059262, WO-A 2009/048457, WO-A 2009/078880, WO-A 2009/120223, WO-A 2009/123632, WO-A 2010/059157, WO-A 2013/006171 oder WO-A 2013/070191 oder auch gemäß der eigenen, nicht vorveröffentlichten deutschen Patentanmeldung DE102014118367.3, gebildet bzw. ein mittels eines solchen vibronischen Meßwandlers gebildetes konventionelles Coriolis-Massenduchfluß-Meßgerät sein. Bei einem solchen Fluidleitungssystem kann es sich zudem beispielsweise auch um eine Übergabestelle für eichpflichtigen Güterverkehr, wie z.B. eine Zapfanlage für Kraftstoffe bzw. eine Übergabestelle gemäß der eingangs erwähnten internationalen Patentanmeldung PCT/EP2015/070020, handeln. Nach einer weiteren Ausgestaltung der Erfindung ist daher vorgesehen, daß zumindest eine der Fluidleitungen 200, 300 Bestandteil eines dem Generieren wenigstens eines mit der vorbezeichneten wenigstens einen Meßgröße korrespondierenden Meßsignals dienenden Meßwandlers, beispielsweise nämlich eines vibronischen Meßwandlers oder eines magnetisch-induktiven Meßwandlers, ist; dies im beispielsweise auch derart, daß sowohl die Fluidleitung 200 als auch die Fluidleitung 300 jeweils Bestandteil eines Meßwandlers bzw. auch ein und desselben Meßwandlers ist. Alternativ oder in Ergänzung ist ferner vorgesehen, daß die Fluidleitung 100 Bestandteil eines Meßwandlers der vorgenannten Art ist. Nach einer anderen Ausgestaltung der Erfindung sind sowohl die Fluidleitung 100 als auch die beiden Fluidleitungen 200, 300 jeweils als Bestandteil ein und desselben Meßwandlers ausgebildet. Die Fluidleitung 100 kann demnach beispielsweise auch mittels eines Verteilerstücks eines solchen Meßwandlers, nicht zuletzt mittels eines Verteilerstücks eines vibronischen Meßwandlers und/oder eines Meßwandlers eines Coriolis-Massendurchfluß-Meßgeräts, gebildet sein bzw. kann ein solches Verteilerstück mittels der Fluidleitung 100 gebildet sein. Nämliches Verteilerstück kann beispielsweise nominell als eine dem Aufteilen eines zugeführten Fluidstroms in zwei parallele Teilströme dienliche Leitungsverzweigung des vorbezeichneten Meßwandlers eingerichtet sein; das Verteilerstück kann aber auch eine nominell dem Zusammenführen zweier parallele Fluidströme zu einem Gesamtstrom dienliche Leitungsvereinigung des vorbezeichneten Meßwandlers sein. Darüberhinaus kann auch die vorbezeichnete Fluidleitung 400 Bestandteil desselben Meßwandlers sein, beispielsweise nämlich mittels eines weiteren Verteilerstücks des Meßwandlers gebildet sein, das - komplementär zum anderen Verteilerstück - als eine dem Zusammenführen zweier parallele Fluidströme zu einem Gesamtstrom dienliche Leitungsvereinigung bzw. als eine dem Aufteilen eines zugeführten Fluidstroms in zwei parallele Teilströme dienliche Leitungsverzweigung eingerichtet ist.

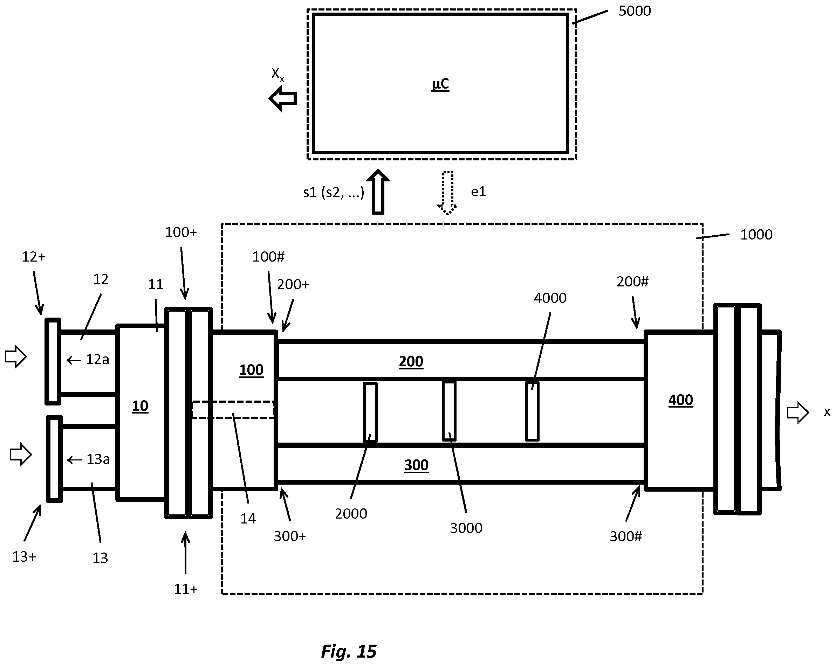

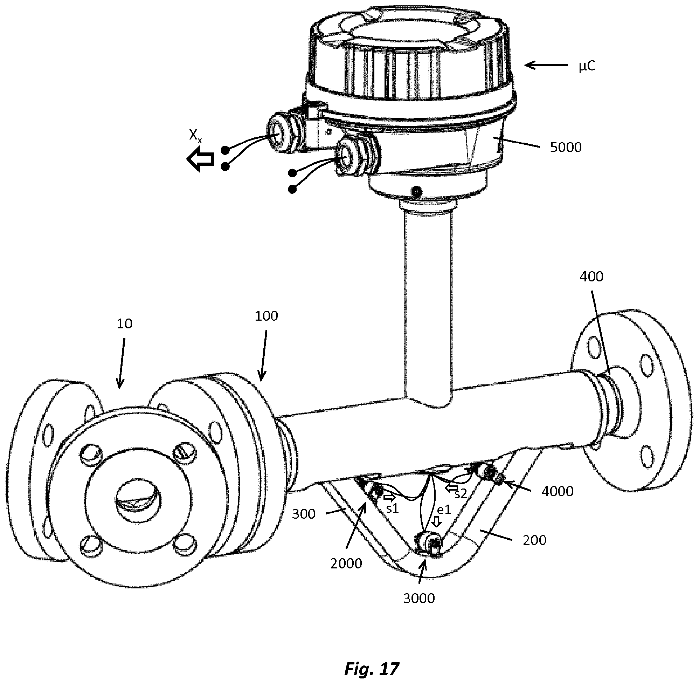

Dementsprechend umfaßt das Fluidleitungssystem, wie auch Fig. 15 schematisch dargestellt, nach einer weiteren Ausgestaltung der Erfindung wenigstens einen ersten Sensor 2000 zum Erzeugen wenigstens eines mit einer Meßgröße x eines im Fluidleitungssystem geführten Fluids korrespondierenden, nämlich wenigsten eines von nämlicher Meßgröße abhängigen Signalparameter aufweisenden - insb. elektrischen bzw. analogen - ersten Meßsignals s1. Bei der wenigstens einen Meßgröße x kann es sich, wie bereits erwähnt, beispielsweise um eine Dichte, eine Viskosität oder eine Temperatur des ggf. auch strömen gelassenen Fluids handeln. Nämliche Meßgröße x kann aber beispielsweise auch ein Strömungsparameter, wie etwa eine Massendurchflußrate oder einer Volumendurchflußrate, sein. Als ein von der Meßgröße abhängiger Signalparameter wiederum kann beispielsweise ein von der wenigstens einen Meßgröße abhängiger Signalpegel, eine von nämlicher Meßgröße abhängige Signalfrequenz und/oder ein von nämlicher Meßgröße abhängiger Phasenwinkel des Meßsignals dienen. Der Sensor 2000 kann, wie in Fig. 15 angedeutet, außerhalb der Fluidleitungen 200, 300 gleichwohl in der Nähe der Fluidleitung 200 und/oder in der Nähe der Fluidleitung 300 plaziert sein, beispielsweise auch derart, daß der Sensor 2000, wie auch in Fig. 17 gezeigt, zumindest an der Fluidleitung 200 angebracht ist.

Für den bereits erwähnten Fall, daß die Fluidleitung 200 Bestandteil eines vibronischen Meßwandlers sind, ist nach einer weiteren Ausgestaltung der Erfindung zumindest die Fluidleitung 200 dafür eingerichtet, von Fluid durchströmt und währenddessen vibrieren gelassen zu werden. Darüberhinaus kann auch die Fluidleitung 300 dafür eingerichtet sein, beispielsweise nämlich für den Fall, daß sowohl die Fluidleitung 200 als auch die Fluidleitung 300 Bestandteil des vorbezeichneten vibronischen Meßwandlers sind, von Fluid durchströmt und währenddessen vibrieren gelassen zu werden; dies beispielsweise auch in der Weise, daß die beiden Fluidleitungen 200, 300 simultan von Fluid durchströmt und/oder währenddessen simultan, insb. nämlich gegengleich, vibrieren gelassen werden Dementsprechend kann das Fluidleitungssystem nach einer weiteren Ausgestaltung der Erfindung ferner wenigstens einen, insb. elektromechanischen bzw. elektrodynamischen, Schwingungserreger 3000 zum Anregen bzw. Aufrechterhalten mechanischer Schwingungen, beispielsweise nämlich Biegeschwingungen, zumindest der Fluidleitung 200 bzw. zum Anregen und/oder Aufrechterhalten mechanischer Schwingungen sowohl der Fluidleitung 200 als auch der Fluidleitung 300 umfassen. Desweiteren kann es sich im vorbezeichneten Fall bei dem Sensor 2000 um einen, beispielsweise elektrodynamischen und/oder Schwingungsbewegungen der beiden Fluidleitungen 200, 300 differenziell erfassenden, Schwingungssensor handeln. Nicht zuletzt für den erwähnten Fall, daß das Fluidleitungssystem dafür vorgesehen ist, basierend auf im strömenden Fluid generierten Corioliskräften eine Massendurchflußrate zu messen, kann das Fluidleitungssystem zusätzlich zum Sensor 2000 zudem auch wenigstens einen zweiten Sensor 4000 zum Erzeugen wenigstens eines mit der Meßgröße korrespondierenden - insb. elektrischen und/oder analogen - zweiten Meßsignals s2 aufweisen. Nämlicher Sensor 4000 kann baugleich wie der Sensor 1000 und/oder und in gleichem Abstand wie der Sensor 1000 von der Fluidleitung 200 bzw. den Fluidleitungen 200, 300 entfernt positioniert sein. Alternativ oder in Ergänzung können die Sensoren 2000, 4000 symmetrisch bezüglich des Schwingungserregers 3000 positioniert sein, beispielsweise auch derart, daß, wie in Fig. 15 angedeutet und wie bei vibronischen Meßwandlern der vorbezeichneten Art durchaus üblich, der zweite Sensor 4000 von der Fluidleitung 100 weiter entfernt ist als der erste Sensor 2000.

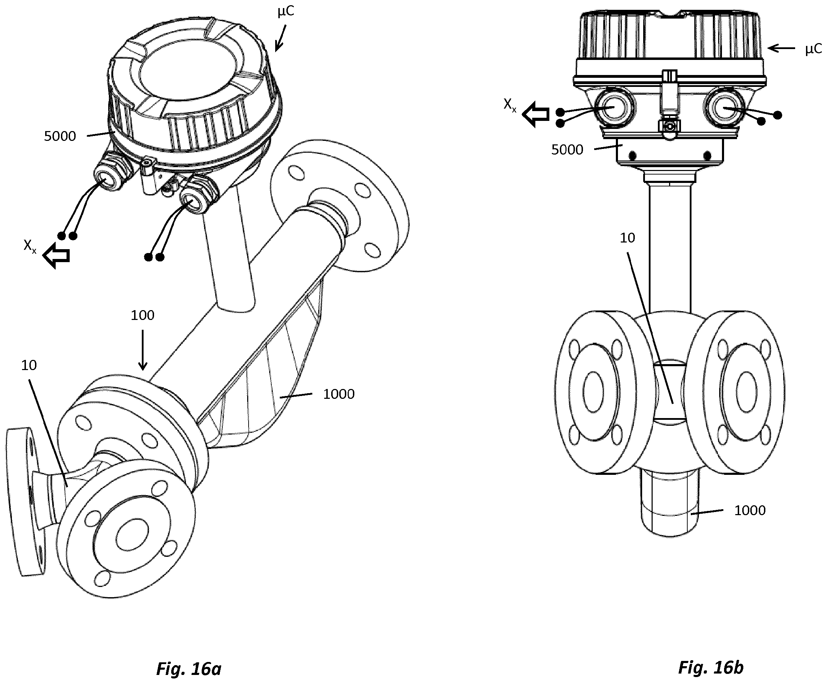

Zwecks Verarbeitung bzw. Auswertung des wenigstens einen Meßsignals s1 kann das Fluidleitungssystem ferner eine mit dem Sensor 2000 bzw. mit den Sensoren 2000, 4000 elektrisch gekoppelte, beispielsweise mittels wenigstens eines Mikroprozessors und/oder eines digitalen Signalprozessors (DSP) gebildte, Meß- und Betriebselektronik µC umfassen, die - wie auch in Fig. 15, 16a, 16b bzw. 17 jeweils dargestellt bzw. wie aus deren Zusammenschau ohne weiteres ersichtlich - in vorteilhafter Weise wiederum in einem in ausreichendem Maße staub- und wasserdichten bzw. schlag- und explosionsfesten Schutzgehäuse 5000 untergebracht sein kann. Im besonderen kann die Meß- und Betriebselektronik µC ferner dafür eingerichtet sein, das wenigstens eines Meßsignal s1 bzw. die Meßwsignale s1, s2 zu verarbeiten, insb. nämlich mittels des ersten Meßsignals Meßwerte Xₓ für die wenigstens eine Meßgröße x zu ermitteln. Für den vorbezeichneten Fall, daß das Fluidleitungssystem mit wenigstens einem Schwingungserreger ausgerüstet ist, kann die Meß- und Betriebselektronik µC zudem mit nämlichem Schwingungserreger elektrisch gekoppelt sein. Nach einer weiteren Ausgestaltung der Erfindung ist die Meß- und Betriebselektronik µC ferner dafür eingerichtet, ein elektrische Anregungssignal e1 in den vorbezeichneten Schwingungserreger 3000 einzuspeisen, und ist der Schwingungserreger 3000 zudem dafür eingerichtet, mittels des Anregungssignals e1 eingespeiste elektrische Leistung in mechanische Schwingungen zumindest der Fluidleitung 200 bzw. in mechanische Schwingungen sowohl der Fluidleitung 200 als auch der Fluidleitung 300 bewirkende mechanische Leistung zu wandeln.

## Patentansprüche

1. Adapter (10) zum Verbinden von dem Führen eines strömenden Fluids dienlichen Fluidleitungen, welcher Adapter umfaßt:
- einen, insb. rohrförmigen, ersten Anschlußstutzen (11) von dem ein, insb. von einem Anschlußflansch gefaßtes, freies Stutzenende (11+) dafür eingerichtet ist, mit einem, insb. von einem Anschlußflansch gefaßten, Leitungsende einer, insb. als starrer und/oder rohrförmiger Anschlußstutzen ausgebildeten, Fluidleitung verbunden zu werden;
- einen, insb. rohrförmigen, zweiten Anschlußstutzen (12) von dem ein, insb. von einem Anschlußflansch gefaßtes, freies Stutzenende (12+) dafür eingerichtet ist, mit einem, insb. von einem Anschlußflansch gefaßten, Leitungsende einer, insb. als starres und/oder kreiszylindrisches Rohr ausgebildeten, Fluidleitung verbunden zu werden;
- einen, insb. rohrförmigen und/oder zum zweiten Anschlußstutzen baugleichen, dritten Anschlußstutzen (13) von dem ein, insb. von einem Anschlußflansch gefaßtes, freies Stutzenende (13+) dafür eingerichtet ist, mit einem, insb. von einem Anschlußflansch gefaßten, Leitungsende einer, insb. als starres und/oder kreiszylindrisches Rohr ausgebildeten, Fluidleitung verbunden zu werden;
- zwei voneinander separierte, jeweils zum Führen von ein- und wieder ausströmendem Fluid eingerichtete röhrenförmige Strömungskanäle (10-I, 10-II), von denen sich
-- ein erster Strömungskanal (10-I) von einer im freien Stutzenende (12+) des zweiten Anschlußstutzens (12) verorteten Strömungsöffnung (12a) nämlichen zweiten Anschlußstutzens bis zu einer im freien Stutzenende (11+) des ersten Anschlußstutzens (11) verorteten ersten Strömungsöffnung (11a) nämlichen ersten Anschlußstutzens (11)
-- und ein zweiter Strömungskanal (10-II) von einer im freien Stutzenende (13+) des dritten Anschlußstutzens (13) verorteten Strömungsöffnung (13a) nämlichen dritten Anschlußstutzens (13) bis zu einer im freien Stutzenende des ersten Anschlußstutzens (11) verorteten zweiten Strömungsöffnung (11b) nämlichen ersten Anschlußstutzens (11) erstrecken;
- sowie einen an einen zwischen der ersten Strömungsöffnung (11a) und der zweiten Strömungsöffnung (11b) verorteten Bereich des freien Stutzenendes (11+) des ersten Anschlußstutzens (11) grenzenden, insb. plattenförmigen und/oder scheibenartigen, Fortsatz (14), der sich ausgehend vom freien Stutzenden (11+) des ersten Anschlußstutzens (11) mit einer Länge (l₁₄) bis zu einem von nämlichem freien Stutzenden (11+) entfernten freien Fortsatzende (14+) erstreckt.

2. Adapter nach dem vorherigen Anspruch, wobei der Fortsatz (14) eingerichtet ist, in ein von einer Wandung einer an das freie Stutzenende anzuschließenden Fluidleitung umhülltes Lumen nämlicher Fluidleitung - insb. unter Bildung zweier durch den Fortsatz voneinander separierter, jeweils zum Führen von hindurchströmendem Fluid eingerichteten röhrenförmiger Kammern nämlicher Fluidleitung - eingeführt zu werden, insb. derart, daß in dem Lumen der Fluidleitung eine mit dem ersten Strömungskanal des Adapters kommunizierende röhrenförmige erste Kammer sowie eine mit dem zweiten Strömungskanal des Adapters kommunizierende röhrenförmige zweite Kammer gebildet werden bzw. sind.

3. Adapter nach dem vorherigen Anspruch, wobei eine Seitenfläche (14a) des Fortsatzes (14) zumindest bereichsweise als Dichtfläche ausgebildet ist, insb. derart, daß voneinander beabstandete Teilbereiche nämlicher Seitenfläche (14a) dafür eingerichtet sind, einen jeweils korrespondierenden, dem Lumen der an das freie Stutzenende anzuschließenden Fluidleitung zugewandten Teilbereich der Wandung nämlicher Fluidleitung zu kontaktieren.

4. Adapter nach dem vorherigen Anspruch,
- wobei ein erster Teilbereich der Seitenfläche (14a) des Fortsatzes dafür eingerichtet ist, einen korrespondierenden ersten Teilbereich der Wandung der nämlicher Fluidleitung zu kontaktieren,
- und wobei ein vom ersten Teilbereich der Seitenfläche (14a) entfernter zweiter Teilbereich nämlicher Seitenfläche (14a) dafür eingerichtet ist, einen korrespondierenden, mithin vom ersten Teilbereich der Wandung entfernten zweiten Teilbereich der Wandung nämlicher Fluidleitung zu kontaktieren.

5. Adapter nach einem der vorherigen Ansprüche,
- wobei der Fortsatz (14) zumindest bezüglich einer sich ausgehend vom freien Stutzenden bis zum freien Ende erstreckenden gedachten Längsachse achsensymmetrisch ist; und/oder
- wobei der Fortsatz eine Breite (b₁₄) aufweist, die größer als ein Durchmesser der ersten Strömungsöffnung (11a) des ersten Anschlußstutzens (11) und/oder die größer als ein Durchmesser der zweiten Strömungsöffnung (11b) des ersten Anschlußstutzens (11) ist; und/oder
- wobei eine den ersten Strömungskanal (10-I) umhüllende Wandung des Adapters zumindest anteilig, insb. überwiegend oder vollständig, aus Metall besteht; und/oder
- wobei eine den zweiten Strömungskanal (10-II) umhüllende Wandung des Adapters zumindest anteilig, insb. überwiegend oder vollständig, aus Metall, insb. dem gleichen Metall wie eine den ersten Strömungskanal (10-I) umhüllende Wandung, besteht; und/oder
- wobei der Fortzsatz (14) zumindest anteilig, insb. überwiegend oder vollständig, aus Metall, insb. dem gleichen Metall wie eine den ersten Strömungskanal (10-I) umhüllende Wandung und/oder dem gleichen Metall wie eine den zweiten Strömungskanal (10-II) umhüllende Wandung, besteht.

6. Fluidleitungssystem, umfassend:
- eine, insb. als Anschlußstutzen und/oder als Leitungsverzweigung ausgebildete, erste Fluidleitung (100) mit einem von einer Wandung, insb. aus einem Metall, umhüllten, sich von einer in einem, insb. von einem Anschlußflansch gefaßten, ersten Leitungsende (100+) der ersten Fluidleitung (100) verorteten ersten Strömungsöffnung (100a) sowohl bis zu einer in einem zweiten Leitungsende (100#) nämlicher ersten Fluidleitung (100) verorteten zweiten Strömungsöffnung (100b) als auch bis zu einer von nämlicher zweiten Strömungsöffnung (100b) beabstandet im zweiten Leitungsende (100#) nämlicher ersten Fluidleitung (100) verorteten dritten Strömungsöffnung (100c) erstreckenden Lumen;
- sowie einen Adapter (10) nach einem der vorherigen Ansprüche.

7. Fluidleitungssystem nach dem vorherigen Anspruch ,
- wobei der Adapter mit der ersten Fluidleitung verbunden ist, insb. derart, daß sowohl der erste Strömungskanal (10-I) des Adapters als auch der zweite Strömungskanal (10-II) des Adapters in das Lumen der ersten Fluidleitung münden, und/oder derart, daß die erste Fluidleitung mit ihrem ersten Leitungsende an das freie Stutzenende des ersten Anschlußstutzen angeschlossen ist; und/oder
- wobei die erste Fluidleitung mit deren ersten Leitungsende an den Adapter, insb. über dessen ersten Anschlußstutzen, angeschlossen ist, insb. derart, daß der Fortsatz des Adapters in das Lumen der ersten Fluidleitung unter Bildung zweier durch den Fortsatz voneinander separierter, jeweils zum Führen von hindurchströmendem Fluid eingerichteten röhrenförmigen Kammern (100-I, 100-II) der ersten Fluidleitung (100) hineinragt; und/oder
- wobei die erste Fluidleitung mit deren ersten Leitungsende an den ersten Anschlußstutzen des Adapters angeschlossen ist, derart, daß der Fortsatz des Adapters in das Lumen der ersten Fluidleitung - insb. unter Bildung zweier durch den Fortsatz voneinander separierter, jeweils zum Führen von hindurchströmendem Fluid eingerichteten röhrenförmiger Kammern der ersten Fluidleitung (100) - hineinragt, insb. derart, daß in dem Lumen der ersten Fluidleitung eine mit dem ersten Strömungskanal des Adapters kommunizierende röhrenförmige erste Kammer (100-I) sowie eine mit dem zweiten Strömungskanal des Adapters kommunizierende röhrenförmige zweite Kammer (100-II) gebildet sind; und/oder
- wobei die erste Fluidleitung (100) mittels eines, insb. als Leitungsverzweigung oder Leitungsvereinigung ausgebildeten, Verteilerstücks eines Meßwandlers, insb. eines vibronischen Meßwandlers und/oder eines Meßwandlers eines Coriolis-Massendurchfluß-Meßgeräts, gebildet ist; und/oder
- wobei mittels der ersten Fluidleitung (100) ein, insb. als Leitungsverzweigung oder Leitungsvereinigung ausgebildetes, Verteilerstück eines Meßwandlers, insb. eines vibronischen Meßwandlers und/oder eines Meßwandlers eines Coriolis-Massendurchfluß-Meßgeräts, gebildet ist; und/oder
- wobei der Fortsatz eine Kontur aufweist, die zumindest bereichsweise - insb. überwiegend oder vollständig - komplementär zu einer einem Längsschnitt der ersten Fluidleitung entsprechenden Kontur der Wandung nämlicher Fluidleitung ist; und/oder
- wobei eine, insb. zumindest bereichsweise als Dichtfläche ausgebildete, Seitenfläche (14a) des Fortsatzes (14) des Adapters (10) die Wandung der ersten Fluidleitung (100) zumindest teilweise, insb. unter Bildung einer ein Hindurchfließen von Fluid begrenzenden oder verhindernden Dichtung, kontaktiert, insb. derart, daß voneinander beabstandete Teilbereiche nämlicher Seitenfläche (14a) einen jeweils dem Lumen der ersten Fluidleitung zugewandten korrespondierenden Teilbereich der Wandung nämlicher Fluidleitung kontaktieren; und/oder
- wobei der Fortsatz (14) des Adapters (10) mit einem dem zweiten Leitungsende (100#) der ersten Fluidleitung (100) zugewandten Teilbereich (14''') der Seitenfläche (14a) einen zwischen der zweiten Strömungsöffnung (100b) und der dritten Strömungsöffnung (100c) verorteten, dem Lumen der ersten Fluidleitung (100) zugewandten, insb. als Dichtfläche ausgebildeten, Teilbereich der Wandung, insb. unter Bildung einer ein Hindurchfließen von Fluid begrenzenden oder verhindernden Dichtung, kontaktiert.

8. Fluidleitungssystem nach einem der Ansprüche 6 bis 7, wobei ein erster Teilbereich der Seitenfläche des Fortsatzes einen korrespondierenden ersten Teilbereich der Wandung der ersten Fluidleitung, insb. unter Bildung einer ein Hindurchfließen von Fluid begrenzenden oder verhindernden Dichtung, kontaktiert.

9. Fluidleitungssystem nach dem vorherigen Anspruch, wobei ein vom ersten Teilbereich der Seitenfläche entfernter, insb. gleichgroßer und/oder nämlichem ersten Teilbereich gegenüberliegender, zweiter Teilbereich nämlicher Seitenfläche einen korrespondierenden, mithin vom ersten Teilbereich der Wandung entfernten zweiten Teilbereich der Wandung der ersten Fluidleitung, insb. unter Bildung einer ein Hindurchfließen von Fluid begrenzenden oder verhindernden Dichtung, kontaktiert.

10. Fluidleitungssystem nach einem der Ansprüche 6 bis 9, wobei das Lumen der ersten Fluidleitung (100) eine Länge (l₁₀₀), gemessen als kürzester Abstand zwischen dem ersten Leitungsende (100+) der Fluidleitung (100) und dem zweiten Leitungsende (100#) nämlicher Fluidleitung (100), aufweist, und wobei die Länge (l₁₄) des Fortsatzes nicht mehr beträgt, als nämliche Länge (l₁₀₀) des Lumens der ersten Fluidleitung (100).

11. Fluidleitungssystem nach dem vorherigen Anspruch, wobei die erste Fluidleitung (100) eine innerhalb von deren Lumen angeordnete, insb. plattenförmigen und/oder scheibenartigen, Zwischenwand (104) aufweist, die sich ausgehend von einem zwischen der zweiten Strömungsöffnung (100b) ersten Fluidleitung und der dritten Strömungsöffnung (100c) der ersten Fluidleitung verorteten Bereich mit einer Länge (l₁ₒ₄), die kleiner als die Länge (l₁₀₀) des Lumens der ersten Fluidleitung (100) ist, bis zu einem vom zweiten Leitungsende (100#) der ersten Fluidleitung entfernten freien Zwischenwandende erstreckt.

12. Fluidleitungssystem nach einem der Ansprüche 6 bis 11,
wobei die erste Fluidleitung mit deren ersten Leitungsende an den ersten Anschlußstutzen des Adapters angeschlossen ist, derart, daß der Fortsatz des Adapters in das Lumen der ersten Fluidleitung unter Bildung zweier durch den Fortsatz voneinander separierter, jeweils dem Führen von hindurchströmendem Fluid dienlichen röhrenförmiger Kammern der ersten Fluidleitung hineinragt, von welchen zwei, insb. gleichgroßen, Kammern der ersten Fluidleitung sich eine erste Kammer von der ersten Strömungsöffnung des ersten Anschlußstutzens (11) bis zur zweiten Strömungsöffnung der ersten Fluidleitung, gleichwohl nicht zur zweiten Strömungsöffnung des ersten Anschlußstutzens (11) erstreckt und sich eine zweite Kammer von der zweiten Strömungsöffnung des ersten Anschlußstutzens (11) bis zur dritten Strömungsöffnung der ersten Fluidleitung, gleichwohl nicht zur ersten Strömungsöffnung des ersten Anschlußstutzens (11) erstreckt, insb. derart, daß die erste Kammer der ersten Fluidleitung mit dem ersten Strömungskanal des Adapters und die zweite Kammer der ersten Fluidleitung mit dem zweiten Strömungskanal des Adapters kommunizieren.

13. Fluidleitungssystem nach dem vorherigen Anspruch,
- wobei der erste Strömungskanal (10-I) des Adapters via erste Strömungsöffnung (11a) des ersten Anschlußstutzens (11) in die erste Kammer (100-I) der ersten Fluidleitung mündet,
- und wobei der zweite Strömungskanal (10-II) des Adapters via zweite Strömungsöffnung (11b) des ersten Anschlußstutzens (11) in die zweite Kammer (100-II) der ersten Fluidleitung mündet.

14. Fluidleitungssystem nach dem vorherigen Anspruch,
- wobei der erste Strömungskanal (10-I) des Adapters nicht in die zweite Kammer (100-II) der ersten Fluidleitung mündet,
- und wobei der zweite Strömungskanal (10-II) des Adapters nicht in die erste Kammer (100-I) der ersten Fluidleitung mündet.

15. Fluidleitungssystem nach einem der Ansprüche 6 bis 14, wobei der Fortsatz (14) des Adapters (10) eine Breite (b₁₄) aufweist, die kleiner als ein Kaliber (D₁₀₀) der ersten Fluidleitung (100) ist und/oder die kleiner als ein Durchmesser der ersten Strömungsöffnung (100a) der ersten Fluidleitung (100) ist

16. Fluidleitungssystem nach einem der Ansprüche 6 bis 15, weiters umfassend:
- eine, insb. als starres und/oder zumindest abschnittsweise kreiszylindrisches Rohr ausgebildete, zweite Fluidleitung (200) mit einem von einer Wandung, insb. aus einem Metall, umhüllten, sich von einer in einem ersten Leitungsende (200+) der zweiten Fluidleitung verorteten ersten Strömungsöffnung (200a) bis zu einer in einem zweiten Leitungsende (200#) nämlicher zweiten Fluidleitung (200) verorteten zweiten Strömungsöffnung (200b) erstreckenden Lumen,
- sowie wenigstens eine, insb. als starres und/oder zumindest abschnittsweise kreiszylindrisches Rohr ausgebildete und/oder zur zweiten Fluidleitung baugleiche, dritte Fluidleitung (300) mit einem von einer Wandung, insb. aus einem Metall, umhüllten, sich von einer in einem ersten Leitungsende (300+) der dritten Fluidleitung verorteten ersten Strömungsöffnung (300a) bis zu einer in einem zweiten Leitungsende (300#) nämlicher dritten Fluidleitung (300) verorteten zweiten Strömungsöffnung (300b) erstreckenden Lumen,
- wobei sowohl die zweite Fluidleitung (200) mit deren ersten Leitungsende als auch die dritte Fluidleitung (300) mit deren ersten Leitungsende jeweils mit dem zweiten Leitungsende (100#) der ersten Fluidleitung (100) verbunden sind, insb. derart, daß sowohl das Lumen der zweiten Fluidleitung (200) als auch das Lumen der dritten Fluidleitung (300) mit dem Lumen der ersten Fluidleitung (100) kommunizieren und/oder derart, daß die erste Strömungsöffnung (200a) der zweiten Fluidleitung (200) in die zweite Strömungsöffnung (100b) der ersten Fluidleitung (100) und die erste Strömungsöffnung (300a) der dritten Fluidleitung (300) in die dritte Strömungsöffnung (100c) der ersten Fluidleitung (100) münden.

17. Fluidleitungssystem nach Anspruch 15 oder 16,
- wobei ein Durchmesser der ersten Strömungsöffnung (200a) der zweiten Fluidleitung (200) kleiner als die Breite (b₁₄) des Fortsatzes (14) ist; und/oder
- wobei ein Durchmesser der ersten Strömungsöffnung (300a) der dritten Fluidleitung (300) kleiner als die Breite (b₁₄) des Fortsatzes (14) ist; und/oder
- wobei ein Kaliber (D₂₀₀) der zweiten Fluidleitung (200) kleiner als die Breite (b₁₄) des Fortsatzes (14) ist; und/oder
- wobei ein Kaliber (D₃₀₀) der dritten Fluidleitung (300) kleiner als die Breite (b₁₄) des Fortsatzes (14) ist; und/oder
- wobei zumindest die zweite Fluidleitung und die dritte Fluidleitung jeweils Bestandteil eines dem Generieren wenigstens eines mit der wenigstens einen Meßgröße korrespondierenden Meßsignals (s1, s2) dienenden Meßwandlers, insb. eines vibronischen Meßwandlers oder eines magnetisch-induktiven Meßwandlers, sind; und/oder
- wobei zumindest die zweite Fluidleitung (200) dafür eingerichtet ist, von Fluid durchströmt und währenddessen vibrieren gelassen zu werden.

18. Fluidleitungssystem nach Anspruch 15 oder 16, jeweils in Verbindung mit einem der Ansprüche 12 bis 14,
- wobei das Lumen der zweiten Fluidleitung via zweite Strömungsöffnung der ersten Fluidleitung (100) in die erste Kammer (100-I) der ersten Fluidleitung und das Lumen der dritten Fluidleitung via dritte Strömungsöffnung der ersten Fluidleitung (100) in die zweite Kammer (100-11) der ersten Fluidleitung münden; und/oder
- wobei der erste Strömungskanal (10-I) des Adapters (10) via erste Kammer (100-I) der ersten Fluidleitung (100) mit dem Lumen (200-I) der zweiten Fluidleitung (200) und der zweite Strömungskanal (10-II) des Adapters (10) via zweite Kammer (100-II) der ersten Fluidleitung (100) mit dem Lumen (300-I) der dritten Fluidleitung (300) kommunizieren.

19. Fluidleitungssystem nach einem der Ansprüche 16 bis 18, weiters umfassend: wenigstens einen, insb. elektromechanischen, Schwingungserreger (2000) zum Anregen bzw. Aufrechterhalten mechanischer Schwingungen, insb. Biegeschwingungen, zumindest der zweiten Fluidleitung (200), insb. zum Anregen bzw. Aufrechterhalten mechanischer Schwingungen sowohl der zweiten Fluidleitung (200) als auch der dritten Fluidleitung (300).

20. Fluidleitungssystem nach einem der Ansprüche 6 bis 19, weiters umfassend: wenigstens einen, insb. zumindest an der zweiten Fluidleitung angebrachten und/oder zumindest in deren Nähe plazierten, ersten Sensor (1000) zum Erzeugen wenigstens eines mit einer Meßgröße eines im Fluidleitungssystem geführten Fluids korrespondierenden, nämlich wenigsten eines von nämlicher Meßgröße abhängigen Signalparameter, insb. einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - insb. elektrischen - ersten Meßsignals (s1).

21. Fluidleitungssystem nach dem vorherigen Anspruch, weiters umfassend: eine mit dem ersten Sensor elektrisch gekoppelte Meß- und Betriebselektronik (4000).

22. Fluidleitungssystem nach dem vorherigen Anspruch, wobei die Meß- und Betriebselektronik dafür eingerichtet ist, das wenigstens erste Meßsignal zu verarbeiten, insb. nämlich mittels des ersten Meßsignals Meßwerte für die wenigstens eine Meßgröße zu ermitteln.

23. Fluidleitungssystem nach Anspruch 20 und einem der Ansprüche 21 bis 22, wobei die Meß- und Betriebselektronik (4000) mit dem Schwingungserreger elektrisch gekoppelt ist.

24. Fluidleitungssystem nach dem vorherigen Anspruch, wobei die Meß- und Betriebselektronik dafür eingerichtet ist, ein elektrische Anregungssignal in den Schwingungserreger einzuspeisen, und wobei der Schwingungserreger dafür eingerichtet ist, mittels des Anregungssignals (e1) eingespeiste elektrische Leistung in mechanische Schwingungen zumindest der zweiten Fluidleitung, insb. sowohl der zweiten Fluidleitung als auch der dritten Fluidleitung, bewirkende mechanische Leistung zu wandeln.

25. Fluidleitungssystem nach einem der Ansprüche 16 bis 24, weiters umfassend:
- eine, insb. zur ersten Fluidleitung baugleiche und/oder als Anschlußstutzen ausgebildete und/oder als Leitungsvereinigung dienliche, vierte Fluidleitung (400) mit einem von einer Wandung, insb. aus einem Metall, umhüllten, sich von einer in einem, insb. von einem Anschlußflansch gefaßten, ersten Leitungsende (400+) der vierten Fluidleitung (400) verorteten ersten Strömungsöffnung (400a) sowohl bis zu einer in einem zweiten Leitungsende (400#) nämlicher vierten Fluidleitung (400) verorteten zweiten Strömungsöffnung (400b) als auch bis zu einer von nämlicher zweiten Strömungsöffnung beabstandet im zweiten Leitungsende (400#) nämlicher vierten Fluidleitung (400) verorteten dritten Strömungsöffnung (400c) erstreckenden Lumen,
- wobei sowohl die zweite Fluidleitung (200) mit deren zweiten Leitungsende (200#) als auch die dritte Fluidleitung (300) mit deren zweiten Leitungsende (300#) jeweils mit dem zweiten Leitungsende (400#) der vierten Fluidleitung (400) verbunden ist, insb. derart, daß sowohl das Lumen (200-I) der zweiten Fluidleitung (200) als auch das Lumen (300-I) der dritten Fluidleitung (300) mit dem Lumen der vierten Fluidleitung (400) kommuniziert und/oder derart, daß die zweite Strömungsöffnung (200b) der zweiten Fluidleitung (200) in die zweite Strömungsöffnung der vierten Fluidleitung (400) und die zweite Strömungsöffnung (300b) der dritten Fluidleitung in die dritte Strömungsöffnung der vierten Fluidleitung (400) münden.

26. Fluidleitungssystem nach einem der Ansprüche 16 bis 25, weiters umfassend ein Schutzgehäuse (1000) für die zweite Fluidleitung (200) und die dritte Fluidleitung (300), wobei das Schutzgehäuse (1000) eine von einer Wandung, insb. aus einem Metall, umhüllte Kavität aufweist, innerhalb der die zweite Fluidleitung (200) und zumindest die dritte Fluidleitung (300) plaziert sind.

27. Fluidleitungssystem nach dem vorherigen Anspruch, wobei ein erstes Gehäuseende des Schutzgehäuses (1000) mittels der ersten Fluidleitung (100) gebildet ist, insb. nämlich derart, daß die erste Fluidleitung (100) integraler Bestandteil des Schutzgehäuses (1000) ist und/oder daß das Schutzgehäuse (1000) eine die Kavität seitlich begrenzende Seitenwand aufweist, die seitlich an der ersten Fluidleitung (100) fixiert bzw. stoffschlüssig mit der ersten Fluidleitung (100) verbunden ist.

28. Fluidleitungssystem nach einem der Ansprüche 6 bis 27, weiters umfassend:
- eine, insb. als starres und/oder kreiszylindrisches Rohr ausgebildete, fünfte Fluidleitung (500) mit einem von einer Wandung, insb. aus einem Metall, umhüllten, sich von einer in einem, insb. von einem Anschlußflansch gefaßten, ersten Leitungsende (500+) der fünften Fluidleitung (500) verorteten ersten Strömungsöffnung (500a) bis zu einer in einem zweiten Leitungsende (500#) nämlicher fünften Fluidleitung (500) verorteten zweiten Strömungsöffnung (500b) erstreckenden Lumen,
- sowie eine, insb. als starres und/oder kreiszylindrisches Rohr ausgebildete, sechste Fluidleitung (600) mit einem von einer Wandung, insb. aus einem Metall, umhüllten, sich von einer in einem, insb. von einem Anschlußflansch gefaßten, ersten Leitungsende (600+) der sechsten Fluidleitung (600) verorteten ersten Strömungsöffnung (600a) bis zu einer in einem zweiten Leitungsende (600#) nämlicher sechsten Fluidleitung (600) verorteten zweiten Strömungsöffnung (600b) erstreckenden Lumen,
- wobei der Adapter (10) sowohl mit der fünften Fluidleitung (500) als auch mit der sechsten Fluidleitung (600) verbunden ist, insb. derart, daß der erste Strömungskanal (10-I) des Adapters mit dem Lumen der fünften Fluidleitung (500) und der zweite Strömungskanal (10-II) des Adapters mit dem Lumen der sechsten Fluidleitung (600) kommunizieren und/oder derart, daß die fünfte Fluidleitung (500) mit deren ersten Leitungsende (500+) an das freie Stutzenende (12+) des zweiten Anschlußstutzen (12) und die sechste Fluidleitung (600) mit deren ersten Leitungsende (600+) an das freie Stutzenende (13+) des dritten Anschlußstutzen (13) angeschlossen sind.

29. Verwenden eines Fluidleitungssystems gemäß einem der Ansprüche 6 bis 28 zum Ermitteln von Meßwerten für wenigstens eine Meßgröße - insb. nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, insb. eines verflüssigtes Gases, beispielsweise nämlich eines Methan und/oder Ethan und/oder Propan und/oder Buthan enthaltenden Flüssiggases und/oder eines verflüssigten Erdgases (LNG), oder eines komprimierten Gases, beispielsweise nämliche eines komprimierten Erdgases (CNG).

## Claims

1. Adapter (10) designed to connect fluid pipes serving to conduct a flowing fluid, said adapter comprising:
- a first connection nozzle (11), particularly tubular, wherein a free end (11+) of said connection nozzle, particularly enclosed by a connection flange, is designed to be connected to a pipe end of a fluid pipe, particularly enclosed by a connection flange, said fluid pipe being particularly designed as a rigid and/or tubular connection nozzle;
- a second connection nozzle (12), particularly tubular, wherein a free end (12+) of said connection nozzle, particularly enclosed by a connection flange, is designed to be connected to a pipe end of a fluid pipe, particularly enclosed by a connection flange, said fluid pipe being particularly designed as a rigid and/or circular cylindrical pipe;
- a third connection nozzle (13), particularly tubular and/or identical in design to the second connection nozzle, wherein a free end (13+) of said connection nozzle, particularly enclosed by a connection flange, is designed to be connected to a pipe end of a fluid pipe, said fluid pipe being particularly designed as a rigid and/or circular cylindrical pipe;
- two tubular flow channels (10-I, 10-II), which are separated from one another and are each designed to conduct in-flowing and out-flowing fluid, wherein of said channels
-- a first flow channel (10-1) extends from a flow opening (12a) of the second connection nozzle (12), which is located in the free nozzle end (12+) of the second connection nozzle (12) as far as a first flow opening (11a) of the first connection nozzle (11), which is located in the free nozzle end (11+) of the first connection nozzle (11)
-- and a second flow channel (10-II) extends from a flow opening (13a) of the third connection nozzle (13), which is located in the free nozzle end (13+) of the third connection nozzle (13) as far as a second flow opening (11b) of the first connection nozzle (11), which is located in the free nozzle end of the first connection nozzle (11);
- as well as an extension (14) adjacent to an area of the free nozzle end (11+) of the first connection nozzle (11), situated between the first flow opening (11a) and the second flow opening (11b), said area being particularly in the form of a plate and/or disk, wherein said extension extends from the free nozzle end (11+) of the first connection nozzle (11), with a length (l₁₄), up to a free extension end (14+) that is at a distance from said free nozzle end (11+).

2. Adapter as claimed in the previous claim, wherein the extension (14) is designed to be introduced into an interior channel of said fluid pipe - said channel being surrounded by a wall of the fluid pipe to be connected to the free nozzle end - particularly forming two tubular chambers of said fluid pipe, said chambers being separated from one another by the extension and serving to guide the flowing fluid - particularly in such a way that a first tubular chamber communicating with the first flow channel of the adapter and a second tubular chamber communicating with the second flow channel of the adapter are formed in the interior channel of the fluid pipe.

3. Adapter as claimed in the previous claim, wherein a lateral surface (14a) of the extension (14) is designed at least partially as a sealing surface, particularly in such a way that partial areas of said lateral surface (14a), which are spaced at a distance from one another, are designed to be in contact with a corresponding subzone of the wall of said fluid pipe, said subzone facing towards the interior channel of the fluid pipe which can be connected to the free nozzle end.

4. Adapter as claimed in the previous claim,
- wherein a first subzone of the lateral surface (14a) of the extension is designed to be in contact with a corresponding first subzone of the wall of the fluid pipe,
- and wherein a second subzone of said lateral surface (14a), which is at a distance from the first subzone of the lateral surface (14a), is designed to be in contact with a corresponding second subzone of the wall of said fluid pipe, said second subzone being at a distance from the first subzone of the wall.

5. Adapter as claimed in one of the previous claims,
- wherein the extension (14) is axisymmetric at least in relation to an imaginary longitudinal axis extending from the free nozzle end to the free end; and/or
- wherein the extension (14) has a width (b₁₄), which is greater than a diameter of the first flow opening (11a) of the first connection nozzle (11) and/or which is greater than a diameter of the second flow opening (11a) of the first connection nozzle (11); and/or
- wherein a wall of the adapter surrounding the first flow channel (10-1) is made at least partially, particularly essentially or completely, from metal; and/or
- wherein a wall of the adapter surrounding the second flow channel (10-II) is made at least partially, particularly essentially or completely, from metal, particularly from the same metal as a wall surrounding the first flow channel (10-I); and/or
- wherein the extension (14) is made at least partially, particularly essentially or entirely, from metal, particularly from the same metal as a wall surrounding the first flow channel (10-I) and/or the same metal as a wall surrounding the second flow channel (10-II).

6. Fluid piping system, comprising
- a first fluid pipe (100) designed particularly as a connection nozzle and/or a pipe branch, with an interior channel surrounded by a wall, particularly made of metal, said channel extending from a first flow opening (100a), situated in a first pipe end (100+) of the first fluid pipe (100), said pipe end particularly being enclosed by a connection flange, both as far as a second flow opening (100b) situated in a second pipe end (100#) of said first fluid pipe (100) and as far as a third flow opening (100c) situated in a second pipe end (100#) of said fluid pipe (100), located at a distance from the second flow opening (100b) ;
- as well as an adapter (10) as claimed in one of the previous claims.

7. Fluid piping system as claimed in the previous claim,
- wherein the adapter is connected to the first fluid pipe, particularly in such a way that both the first flow channel (10-I) of the adapter and the second flow channel (10-II) of the adapter enter into the interior channel of the first fluid pipe, and/or in such a way that the first fluid pipe is connected with its first pipe end to the free nozzle end of the connection nozzle; and/or
- wherein the first fluid pipe is connected to the adapter by its first pipe end, particularly via its first connection nozzle, particularly in such a way that the extension of the adapter projects into the interior channel of the first fluid pipe, forming two tubular chambers (100-I, 100-II) of the first fluid pipe (100), said chambers being separated from one another by the extension and being designed to conduct fluid that flows through the chambers; and/or
- wherein the first fluid pipe is connected to the first connection nozzle of the adapter by its first pipe end in such a way that the extension of the adapter projects into the interior channel of the first fluid pipe - particularly forming two tubular chambers of the first fluid pipe (100), said chambers being separated from one another by the extension and being designed to conduct fluid that flows through - particularly in such a way that a first tubular chamber (100-1) communicating with the first flow channel of the adapter and a second tubular chamber (100-II) communicating with the second flow channel of the adapter are formed in the interior channel of the first fluid pipe; and/or
- wherein the first fluid pipe (100) is formed by a distributor of a transducer, particularly a vibronic transducer and/or a transducer of a Coriolis mass flowmeter, said distributor being particularly designed as a pipe branch or a pipe junction; and/or
- wherein a distributor of a transducer, particularly a vibronic transducer and/or a transducer of a Coriolis mass flowmeter, is formed by the first fluid pipe (100), said distributor being particularly designed as a pipe branch or a pipe junction; and/or
- wherein the extension has a contour, which is at least partially, particularly essentially or completely, complementary to a contour of the wall of said fluid pipe, wherein said contour corresponds to a longitudinal section of the first fluid pipe; and/or
- wherein a lateral surface (14a) of the extension (14) of the adapter (10) - said surface being particularly designed at least partially as a sealing surface - is in contact at least partially with the wall of the first fluid pipe (100), particularly forming a seal that limits or prevents fluid from passing through, particularly in such a way that subzones of said lateral surface (14a), particularly spaced at a distance from one another, are in contact with a corresponding subzone of the wall of said fluid pipe, said subzone facing towards the interior channel of the first fluid pipe; and/or
- wherein the extension (14) of the adapter (10) is in contact - by means of a subzone (14'") of the lateral surface (14a) facing towards the second pipe end (100#) of the first fluid pipe (100) - with a subzone of the wall facing towards the interior channel of the first fluid pipe (100) and situated between the second flow opening (100b) and the third flow opening (100c), said surface being particularly designed as a sealing surface, particularly forming a seal that limits or prevents fluid from passing through.

8. Fluid piping system as claimed in one of the Claims 6 to 7, wherein a first subzone of the lateral surface of the extension is in contact with a corresponding first subzone of the wall of the first fluid pipe, particularly forming a seal that limits or prevents fluid from passing through.

9. Fluid piping system as claimed in the previous claim, wherein a second subzone of said lateral surface - said second zone being situated at a distance from the first subzone of the lateral surface, and particularly being the same size and/or located opposite said first subzone - is in contact with a corresponding second subzone of the wall of the first fluid pipe - said second subzone therefore being also at a distance from the first subzone of the wall - particularly forming a seal that limits or prevents fluid from passing through.

10. Fluid piping system as claimed in one of the Claims 6 to 9, wherein the interior channel of the first fluid pipe (100) has a length (l₁₀₀) measured as the shortest distance between the first pipe end (100+) of the fluid pipe (100) and the second pipe end (100#) of said fluid pipe (100),
and wherein the length (l₁₄) of the extension does not exceed the length (l₁₀₀) of the interior channel of the first fluid pipe (100).

11. Fluid piping system as claimed in the previous claim, wherein the first fluid pipe (100) has a partition wall (104) arranged inside the interior channel, particularly a partition wall (104) in the form of a plate and/or disk, said partition wall extending from an area located between the second flow opening (100b) of the first fluid pipe and the third flow opening (100c) of the first fluid pipe - said zone having a length (l₁₀₄), which is less than the length (l₁₀₀) of the interior channel of the first fluid pipe (100) - as far as a free partition wall end which is located at a distance from the second pipe end (100#) of the first fluid pipe.

12. Fluid piping system as claimed in one of the Claims 6 to 11,
wherein the first fluid pipe is connected to the first connection nozzle of the adapter by its first pipe end in such a way that the extension of the adapter projects into the interior channel of the first fluid pipe, forming two tubular chambers of the first fluid pipe, said chambers being separated from one another by the extension and each serving to guide the fluid flowing through them, wherein of said two chambers - which are particularly identical in size - of the first fluid pipe, a first chamber extends from the first flow opening of the first connection nozzle (11) to the second flow opening of the first fluid pipe, but does not extend as far as the second flow opening of the first connection nozzle (11), and a second chamber extends from the second flow opening of the first connection nozzle (11) as far as the third flow opening of the first fluid pipe, but does not extend as far as the first flow opening of the first connection nozzle (11), particularly in such a way that the first chamber of the first fluid pipe communicates with the first flow channel of the adapter and the second chamber of the first fluid pipe communicates with the second flow channel of the adapter.

13. Fluid piping system as claimed in the previous claim,
- wherein the first flow channel (10-I) of the adapter enters into the first chamber (100-I) of the first fluid pipe via the first flow opening (11a) of the first connection nozzle (11),
- and wherein the second flow channel (10-II) of the adapter enters into the second chamber (100-II) of the first fluid pipe via the second flow opening (11b) of the first connection nozzle (11).

14. Fluid piping system as claimed in the previous claim,
- wherein the first flow channel (10-I) of the adapter does not enter into the second chamber (100-II) of the first fluid pipe,
- and wherein the second flow channel (10-II) of the adapter does not enter into the first chamber (100-I) of the first fluid pipe.

15. Fluid piping system as claimed in one of the Claims 6 to 14, wherein the extension (14) of the adapter (10) has a width (b₁₄), which is less than a caliber (D₁₀₀) of the first fluid pipe (100) and/or is less than a diameter of the first flow opening (100a) of the first fluid pipe (100).

16. Fluid piping system as claimed in one of the Claims 6 to 15, further comprising:
- a second fluid pipe (200), particularly designed as a rigid pipe and/or at least partially circular cylindrical pipe, said pipe having an interior channel, particularly surrounded by a wall, particularly made of metal, said channel extending from a first flow opening (200a) located in a first pipe end (200+) of the second fluid pipe to a second flow opening (200b) located in a second pipe end (200#) of said second fluid pipe (200),
- as well as at least a third fluid pipe (300), particularly designed as a rigid pipe and/or at least partially circular cylindrical pipe and/or identical in design to the second fluid pipe, said pipe having an interior channel, particularly surrounded by a wall, particularly made of metal, said channel extending from a first flow opening (300a) located in a first pipe end (300+) of the third fluid pipe (300) to a second flow opening (300b) located in a second pipe end (300#) of the third fluid pipe (300),
- wherein both the second fluid pipe (200) and the third fluid pipe (300) are each connected - by their first pipe end in each case - to the second pipe end (100#) of the first fluid pipe (100), particularly in such a way that both the interior channel of the second fluid pipe (200) and the interior channel of the third fluid pipe (300) communicate with the interior channel of the first fluid pipe (100), and/or in such a way that the first flow opening (200a) of the second fluid pipe (200) enters into the second flow opening (100b) of the first fluid pipe (100) and the first flow opening (300a) of the third fluid pipe (300) enters into the third flow opening (100c) of the first fluid pipe (100).

17. Fluid piping system as claimed in Claim 15 or 16,
- wherein a diameter of the first flow opening (200a) of the second fluid pipe (200) is less than the width (b₁₄) of the extension (14); and/or
- wherein a diameter of the first flow opening (300a) of the third fluid pipe (300) is less than the width (b₁₄) of the extension (14); and/or
- wherein a caliber (D₂₀₀) of the second fluid pipe (200) is less than the width (b₁₄) of the extension (14); and/or
- wherein a caliber (D₃₀₀) of the third fluid pipe (300) is less than the width (b₁₄) of the extension (14); and/or
- wherein at least the second fluid pipe and the third fluid pipe are each an integral part of a transducer serving to generate at least a measuring signal (s1, s2) corresponding to a measured variable, particularly a vibronic transducer or an electromagnetic transducer; and/or
- wherein at least the second fluid pipe (200) is designed to have fluid flow through it and to be allowed to vibrate during this time.

18. Fluid piping system as claimed in Claim 15 or 16, each in connected with one of the Claims 12 to 14,
- wherein the interior channel of the second fluid pipe enters into the first chamber (100-I) of the first fluid pipe via the second flow opening of the first fluid pipe (100), and the interior channel of the third fluid pipe enters into the second chamber (100-II) of the first fluid pipe via the third flow opening of the first fluid pipe (100); and/or
- wherein the first flow channel (10-I) of the adapter (10) communicates with the interior channel (200-I) of the second fluid pipe (200) via the first chamber (100-1) of the first fluid pipe (100) and the second flow channel (10-II) of the adapter (10) communicates with the interior channel (300-I) of the third fluid pipe (300) via the second chamber (100-II) of the first fluid pipe (100).

19. Fluid piping system as claimed in one of the Claims 16 to 18, further comprising: at least one vibration generator (2000), particularly electromechanical, designed to generate or maintain mechanical vibrations, particularly flexural vibrations, at least of the second fluid pipe (200), particularly designed to generate or maintain mechanical vibrations of both the second fluid pipe (200) and the third fluid pipe (300).

20. Fluid piping system as claimed in one of the Claims 6 to 19, further comprising: at least a first sensor (1000), particularly arranged at least on the second fluid pipe and/or at least installed in the vicinity of said pipe, said sensor being designed to generate at least a first measuring signal (s1) - particularly electrical - having a signal parameter corresponding at least to a measured variable of a fluid conducted through the fluid piping system, particularly at least a signal level dependent on said measured variable, and/or a signal frequency dependent on said measured variable and/or a phase angle dependant on said measured variable.

21. Fluid piping system as claimed in the previous claim, further comprising: a measuring and operating electronics module (4000) electrically coupled with the first sensor.

22. Fluid piping system as claimed in the previous claim, wherein the measuring and operating electronics module is designed to process the at least first measuring signal, particularly to determine measured values for the at least one measured variable particularly using the first measuring signal.

23. Fluid piping system as claimed in Claim 20 and one of the Claims 21 to 22, wherein the measuring and operating electronics module (4000) is electrically coupled with the vibration generator.

24. Fluid piping system as claimed in the previous claim, wherein the measuring and operating electronics module is designed to feed an electrical excitation signal into the vibration generator, and wherein the vibration generator is designed to convert the electrical energy, supplied by means of the excitation signal (e1), into mechanical energy generating mechanical vibrations at least of the second fluid pipe, particularly of both the second fluid pipe and the third fluid pipe.

25. Fluid piping system as claimed in one of the Claims 16 to 24, further comprising :
- a fourth fluid pipe (400), particularly identical in design to the first fluid pipe and/or designed as a connection nozzle and/or serving as a pipe junction, said pipe having an interior channel - which is surrounded by a wall, particularly made of a metal, particularly enclosed by a connection flange - extending from a first flow opening (400a) and located in a first pipe end (400+) of the fourth fluid pipe (400) - as far as both a second flow opening (400b) located in a second pipe end (400#) of the fourth fluid pipe (400) and a third flow opening (400c) situated at a distance from the second flow opening in the second pipe end (400#) of the fourth fluid pipe (400),
- wherein both the second fluid pipe (200) and the third fluid pipe (300) are each connected by their second pipe end (200#) and (300#) - respectively - with the second pipe end (400#) of the fourth fluid pipe (400), particularly in such a way that both the interior channel (200-I) of the second fluid pipe (200) and the interior channel (300-I) of the third fluid pipe (300) communicate with the interior channel of the fourth fluid pipe (400), and/or in such a way that the second flow opening (200b) of the second fluid pipe (200) enters into the second flow opening of the fourth fluid pipe (400) and the second flow opening (300b) of the third fluid pipe enters into the third flow opening of the fourth fluid pipe (400).

26. Fluid piping system as claimed in one of the Claims 16 to 25, further comprising a protection housing (1000) for the second fluid pipe (200) and the third fluid pipe (300), wherein the protection housing (1000) has a cavity surrounded by a wall, particularly one of metal, wherein the second fluid pipe (200) and at least the third fluid pipe (300) are located within said cavity.

27. Fluid piping system as claimed in the previous claim, wherein a first housing end of the protection housing (1000) is formed by the first fluid pipe (100), particularly in such a way that the first fluid pipe (100) is an integral part of the protection housing (1000), and/or the protection housing (1000) has a side wall delimiting the cavity at the side, said wall being fixed laterally on the first fluid pipe (100) or being connected with the first fluid pipe (100) via a substance-to-substance connection.

28. Fluid piping system as claimed in one of the Claims 6 to 27, further comprising:
- a fifth fluid pipe (500), particularly designed as a rigid and/or circular cylindrical pipe, wherein said pipe has an interior channel, which is surrounded by a wall, particularly of metal, and extends from a first flow opening (500a) which is located in a first pipe end (500+) of the fifth fluid pipe (500), particularly enclosed by a connection flange, as far as a second flow opening (500b) located in a second pipe end (500#) of said fifth fluid pipe (500),
- as well as a sixth fluid pipe (600), particularly designed as a rigid and/or circular cylindrical pipe, wherein said pipe has an interior channel which is surrounded by a wall, particularly of metal, and extends from a first flow opening (600a) which is located in a first pipe end (600+) of the sixth fluid pipe (600), particularly enclosed by a connection flange, as far as a second flow opening (600b) located in a second pipe end (600#) of the sixth fluid pipe (600),
- wherein the adapter (10) is connected to both the fifth fluid pipe (500) and the sixth fluid pipe (600), particularly in such a way that the first flow channel (10-1) of the adapter communicates with the interior channel of the fifth fluid pipe (500) and the second flow channel (10-II) of the adapter communicates with the interior channel of the sixth fluid pipe (600) and/or in such a way that the fifth fluid pipe (500) is connected to the free nozzle end (12+) of the second connection nozzle (12) by the pipe's first pipe end (500+) and the sixth fluid pipe (600) is connected to the free nozzle end (13+) of the third connection nozzle (13) by the pipe's first pipe end (600+).

29. Use of a fluid piping system as claimed in one of the Claims 6 to 28 to determine measured values for at least one measured variable - particularly a mass flow rate, a mass flow, a volume flow rate, a volume flow, a density, a viscosity or a temperature - of a fluid to be transferred, particularly a liquefied gas, particularly, for example, a liquid gas containing a methane and/or an ethane and/or a propane and/or a butane and/or a liquefied natural gas (LNG) or a compressed gas, particularly a compressed natural gas (CNG).

## Revendications

1. Adaptateur (10) destiné à la connexion de conduites de fluide, lesquelles conduites servent à guider un fluide en écoulement,
lequel adaptateur comprend :
- un premier raccord (11), notamment tubulaire, duquel une extrémité libre de raccord (11+), notamment enfermée dans une bride de raccordement, est conçue de telle sorte à être reliée, par une extrémité de conduite, notamment enfermée dans une bride de raccordement, avec une conduite de fluide, notamment conçue en tant que raccord rigide et/ou tubulaire ;
- un deuxième raccord (12), notamment tubulaire, duquel une extrémité libre de raccord (12+), notamment enfermée dans une bride de raccordement, est conçue de telle sorte à être reliée, par une extrémité de conduite, notamment enfermée dans une bride de raccordement, avec une conduite de fluide, notamment conçue en tant que tube rigide et/ou cylindrique circulaire ;
- un troisième raccord (13), notamment tubulaire et/ou de conception identique au deuxième raccord, duquel une extrémité libre de raccord (13+), notamment enfermée dans une bride de raccordement, est conçue de telle sorte à être reliée, par une extrémité de conduite, notamment enfermée dans une bride de raccordement, avec une conduite de fluide, notamment conçue en tant que tube rigide et/ou cylindrique circulaire ;
- deux canaux d'écoulement (10-I, 10-II) tubulaires, séparés l'un de l'autre, conçus respectivement de manière à guider le fluide entrant et sortant, canaux parmi lesquels
-- un premier canal d'écoulement (10-I) s'étend à partir d'une ouverture d'écoulement (12a) du deuxième raccord (12), située dans l'extrémité de raccord (12+) libre du même deuxième raccord (12), jusque vers une première ouverture d'écoulement (11a) du premier raccord (11), située dans l'extrémité de raccord libre (11+) libre du même premier raccord (11)
-- et un deuxième canal d'écoulement (10-II) s'étend à partir d'une ouverture d'écoulement (13a) du troisième raccord (13), située dans l'extrémité de raccord (13+) libre du même troisième raccord (13), jusque vers une deuxième ouverture d'écoulement (11b) du premier raccord (11), située dans l'extrémité de raccord libre (11+) du même premier raccord (11) ;
- ainsi qu'un prolongement (14) adjacent à une zone de l'extrémité de raccord libre (11+) du premier raccord (11), située entre la première ouverture d'écoulement (11a) et la deuxième ouverture d'écoulement (11b), laquelle zone est notamment en forme de plaque et/ou en forme de disque, lequel prolongement s'étend à partir de l'extrémité de raccord libre (11+) du premier raccord (11), d'une longueur (l₁₄), jusque vers une extrémité de prolongement (14+) distante de la même extrémité de raccord libre (11+).

2. Adaptateur selon la revendication précédente, pour lequel le prolongement (14) est conçu de manière à être introduit dans un canal intérieur de la conduite de fluide - lequel canal est entouré par une paroi de la conduite de fluide pouvant être raccordée à l'extrémité libre du raccord - notamment en formant deux chambres tubulaires de la première conduite de fluide, lesquelles chambres sont séparées l'une de l'autre par le prolongement et servent chacune à guider le fluide les traversant - notamment de telle sorte que sont formées, dans le canal intérieur de la conduite de fluide, une premier chambre tubulaire communiquant avec le premier canal d'écoulement de l'adaptateur, ainsi qu'une deuxième chambre tubulaire communiquant avec le deuxième canal d'écoulement de l'adaptateur.

3. Adaptateur selon la revendication précédente, pour lequel une surface latérale (14a) du prolongement (14) est conçue au moins partiellement en tant que surface d'étanchéité, notamment de telle sorte que des surfaces partielles de la même surface latérale (14a), notamment espacées les unes des autres, sont conçues de telle sorte à être en contact avec une zone partielle correspondante de la paroi de la même conduite de fluide, laquelle zone partielle fait face au canal intérieur de la conduite de fluide pouvant être raccordée à l'extrémité libre du raccord.

4. Adaptateur selon la revendication précédente,
- pour lequel une première zone partielle de la surface latérale (14a) du prolongement est conçue de telle sorte à être en contact avec une première zone partielle correspondante de la paroi de la conduite de fluide,
- et pour lequel une deuxième zone partielle de la surface latérale (14a), laquelle deuxième zone est distante de la première zone partielle de la surface latérale (14a), est conçue de telle sorte à être en contact avec une deuxième zone partielle correspondante de la paroi de la même conduite de fluide, laquelle deuxième zone partielle est distante de la première zone partielle de la paroi.

5. Adaptateur selon l'une des revendications précédentes,
- pour lequel le prolongement (14) est symétrique par rapport à un axe longitudinal imaginaire s'étendant au moins à partir de l'extrémité de raccord libre jusqu'à l'extrémité libre ; et/ou
- pour lequel le prolongement (14) présente une largeur (b₁₄), qui est supérieure à un diamètre de la première ouverture d'écoulement (11a) du premier raccord (11) et/ou qui est supérieure à un diamètre de la deuxième ouverture d'écoulement (11a) du premier raccord (11) ; et/ou
- pour lequel une paroi de l'adaptateur entourant le premier canal d'écoulement (10-I) est au moins partiellement, notamment essentiellement ou entièrement, constituée de métal ; et/ou
- pour lequel une paroi de l'adaptateur entourant le deuxième canal d'écoulement (10-II) est au moins partiellement, notamment essentiellement ou entièrement, constituée de métal, notamment du même métal qu'une paroi entourant le premier canal d'écoulement (10-I) ; et/ou
- pour lequel le prolongement (14) est au moins partiellement, notamment essentiellement ou intégralement, constitué de métal, notamment du même métal qu'une paroi entourant le premier canal d'écoulement (10-I) et/ou du même métal qu'une paroi entourant le deuxième canal d'écoulement (10-II).

6. Système de conduite de fluide, comprenant
- une première conduite de fluide (100) conçue notamment en tant que raccord et/ou en tant que dérivation de conduite, avec un canal intérieur entouré par une paroi, notamment en un métal, lequel canal s'étend à partir d'une première ouverture d'écoulement (100a), située notamment dans une première extrémité de conduite (100+) de la première conduite de fluide (100), laquelle extrémité est enfermée par une bride de raccordement, à la fois jusque vers une deuxième ouverture d'écoulement (100b) située dans une deuxième extrémité de conduite (100#) de la même première conduite de fluide (100) et jusque vers une troisième ouverture d'écoulement (100c) située dans une deuxième extrémité de conduite (100#) de la même conduite de fluide (100), se trouvant à distance de la deuxième ouverture d'écoulement (100b) ;
- ainsi qu'un adaptateur (10) selon l'une des revendications précédentes.

7. Système de conduite de fluide selon la revendication précédente,
- pour lequel l'adaptateur est relié avec la première conduite de fluide, notamment de telle sorte qu'à la fois le premier canal d'écoulement (10-I) de l'adaptateur et le deuxième canal d'écoulement (10-II) de l'adaptateur débouchent dans le canal intérieur de la première conduite de fluide, et/ou de telle sorte que la première conduite de fluide est raccordée, par sa première extrémité de conduite, à l'extrémité libre du premier raccord ; et/ou
- pour lequel la première conduite de fluide est raccordée, par sa première extrémité de conduite, à l'adaptateur, notamment par le biais de son premier raccord, notamment de telle sorte que le prolongement de l'adaptateur pénètre dans le canal intérieur de la première conduite de fluide en formant deux chambres tubulaires (100-I, 100-II) de la première conduite de fluide (100), lesquelles chambres sont séparées l'une de l'autre par le prolongement et destinées respectivement à guider le fluide les traversant ; et/ou
- pour lequel la première conduite de fluide est raccordée par sa première extrémité de conduite au premier raccord de l'adaptateur, de telle sorte que le prolongement de l'adaptateur pénètre dans le canal intérieur de la première conduite de fluide - notamment en formant deux chambres tubulaires de la première conduite de fluide (100), lesquelles chambres sont séparées l'une de l'autre par le prolongement et destinées respectivement à guider le fluide les traversant - notamment de telle sorte que sont formées, dans le canal intérieur de la conduite de fluide, une premier chambre tubulaire (100-I) communiquant avec le premier canal d'écoulement de l'adaptateur, ainsi qu'une deuxième chambre tubulaire (100-II) communiquant avec le deuxième canal d'écoulement de l'adaptateur ; et/ou
- pour lequel la première conduite de fluide (100) est conçue au moyen d'un répartiteur d'un transducteur, notamment d'un transducteur vibronique et/ou d'un transducteur d'un débitmètre massique Coriolis, lequel répartiteur est conçu en tant que dérivation de conduite ou en tant que jonction de conduite ; et/ou
- pour lequel est conçu, au moyen de la première conduite de fluide (100), un répartiteur d'un transducteur, notamment d'un transducteur vibronique et/ou d'un transducteur d'un débitmètre massique Coriolis, lequel répartiteur est conçu en tant que dérivation de conduite ou en tant que jonction de conduite ; et/ou
- pour lequel le prolongement présente un contour, qui est au moins partiellement, notamment essentiellement ou intégralement, complémentaire à un contour de la paroi de la même conduite de fluide, lequel contour correspond à une coupe longitudinale de la première conduite de fluide ; et/ou
- pour lequel une surface latérale (14a) du prolongement (14) de l'adaptateur (10)
- laquelle surface est conçue notamment au moins partiellement en tant que surface d'étanchéité - est en contact au mois partiellement avec la paroi de la première conduite de fluide (100), notamment en formant un joint limitant ou empêchant une traversée du fluide, notamment de telle sorte que des zones partielles de la même surface latérale (14a), notamment espacées les unes des autres, sont en contact avec une zone partielle correspondante de la paroi de la même conduite de fluide, laquelle zone partielle fait face au canal intérieur de la première conduite de fluide ; et/ou
- pour lequel le prolongement (14) de l'adaptateur (10) est en contact - par une zone partielle (14"') de la surface latérale (14a), faisant face à la deuxième extrémité de conduite (100#) de la première conduite de fluide (100) - avec une zone partielle de la paroi faisant face au canal intérieur de la première conduite de fluide (100) et située entre la deuxième ouverture d'écoulement (100b) et la troisième ouverture d'écoulement (100c), laquelle surface est notamment conçue en tant que surface d'étanchéité, notamment en formant un joint limitant ou empêchant une traversée du fluide.

8. Système de conduite de fluide selon l'une des revendications 6 à 7, pour lequel une première zone partielle de la surface latérale du prolongement est en contact avec une première zone partielle correspondante de la paroi de la première conduite de fluide, notamment en formant un joint limitant ou empêchant une traversée du fluide.

9. Système de conduite de fluide selon la revendication précédente, pour lequel une deuxième zone partielle de la même surface latérale - laquelle deuxième zone est située à distance de la première zone partielle de la surface latérale, et laquelle deuxième zone est notamment située en face de la première zone partielle et/ou de taille identique à celle-ci - est en contact avec une deuxième zone partielle correspondante de la paroi de la première conduite de fluide - laquelle deuxième zone partielle est distante de la première zone partielle de la paroi - notamment en formant un joint limitant ou empêchant une traversée du fluide.

10. Système de conduite de fluide selon l'une des revendications 6 à 9, pour lequel le canal intérieur de la première conduite de fluide (100) présente une longueur (l₁₀₀) mesurée en tant que distance la plus courte entre la première extrémité de conduite (100+) de la conduite de fluide (100) et la deuxième extrémité de conduite (100#) de la même conduite de fluide (100),
et pour lequel la longueur (l₁₄) du prolongement n'est pas supérieure à la longueur (l₁₀₀) du canal intérieur de la première conduite de fluide (100).

11. Système de conduite de fluide selon la revendication précédente, pour lequel la première conduite de fluide (100) présente une cloison (104) disposée à l'intérieur du canal intérieur, notamment en forme de plaque et/ou en forme de disque, laquelle cloison s'étend - à partir d'une zone située entre la deuxième ouverture d'écoulement (100b) de la première conduite de fluide et la troisième ouverture d'écoulement (100c) de la première conduite de fluide, laquelle zone présente une longueur (l₁₀₄), qui est inférieure à la longueur (l₁₀₀) du canal intérieur de la première conduite de fluide (100) -jusqu'à une extrémité de cloison libre distante de la deuxième extrémité de conduite (100#) de la première conduite de fluide.

12. Système de conduite de fluide selon l'une des revendications 6 à 11,
pour lequel la première conduite de fluide est raccordée, par sa première extrémité de conduite, au premier raccord de l'adaptateur, de telle sorte que le prolongement de l'adaptateur pénètre dans le canal intérieur de la première conduite de fluide en formant deux chambres tubulaires de la première conduite de fluide, lesquelles chambres sont séparées l'une de l'autre par le prolongement et servent chacune à guider le fluide les traversant, parmi lesquelles deux chambres, notamment de taille identique, de la première conduite de fluide, une première chambre s'étend de la première ouverture d'écoulement du premier raccord (11) jusqu'à la deuxième ouverture d'écoulement de la première conduite de fluide, cependant pas jusqu'à la deuxième ouverture d'écoulement du premier raccord (11), et une deuxième chambre s'étend de la deuxième ouverture d'écoulement du premier raccord (11) jusqu'à la troisième ouverture d'écoulement de la première conduite de fluide, cependant pas jusqu'à la première ouverture d'écoulement du premier raccord (11), notamment de telle sorte que la première chambre de la première conduite de fluide communique avec le premier canal d'écoulement de l'adaptateur et la deuxième chambre de la première conduite de fluide avec le deuxième canal d'écoulement de l'adaptateur.

13. Système de conduite de fluide selon la revendication précédente,
- pour lequel le premier canal d'écoulement (10-I) de l'adaptateur débouche, via la première ouverture d'écoulement (11a) du premier raccord (11), dans la première chambre (100-I) de la première conduite de fluide,
- et pour lequel le deuxième canal d'écoulement (10-II) de l'adaptateur débouche, via la deuxième ouverture d'écoulement (11b) du premier raccord (11), dans la deuxième chambre (100-II) de la première conduite de fluide.

14. Système de conduite de fluide selon la revendication précédente,
- pour lequel le premier canal d'écoulement (10-I) de l'adaptateur ne débouche pas dans la deuxième chambre (100-II) de la première conduite de fluide,
- et pour lequel le deuxième canal d'écoulement (10-II) de l'adaptateur ne débouche pas dans la première chambre (100-I) de la première conduite de fluide.

15. Système de conduite de fluide selon l'une des revendications 6 à 14, pour lequel le prolongement (14) de l'adaptateur (10) présente une largeur (b₁₄), qui est inférieure à un calibre (D₁₀₀) de la première conduite de fluide (100) et/ou inférieur à un diamètre de la première ouverture d'écoulement (100a) de la première conduite de fluide (100).

16. Système de conduite de fluide selon l'une des revendications 6 à 15, comprenant en outre :
- une deuxième conduite de fluide (200), notamment conçue en tant que tube rigide et/ou au moins partiellement cylindrique circulaire, laquelle conduite présente un canal intérieur, notamment enfermé par une paroi, notamment en un métal, lequel canal s'étend d'une première ouverture d'écoulement (200a) située à une première extrémité de conduite (200+) de la deuxième conduite de fluide (200), jusqu'à une deuxième ouverture d'écoulement (200b) située à une deuxième extrémité de conduite (200#) de la deuxième conduite de fluide (200),
- ainsi qu'au moins une troisième conduite de fluide (300), notamment conçue en tant que tube rigide et/ou au moins partiellement cylindrique circulaire, laquelle conduite présente un canal intérieur, notamment enfermé par une paroi, notamment en un métal, lequel canal s'étend d'une première ouverture d'écoulement (300a) située à une première extrémité de conduite (300+) de la troisième conduite de fluide (300), jusqu'à une deuxième ouverture d'écoulement (300b) située à une deuxième extrémité de conduite (300#) de la troisième conduite de fluide (300),
- système pour lequel la deuxième conduite de fluide (200) est reliée par sa première extrémité de conduite, tout comme la troisième conduite de fluide (300) est reliée par sa première extrémité de conduite, respectivement avec la deuxième extrémité de conduite (100#) de la première conduite de fluide (100), notamment de telle sorte qu'aussi bien le canal intérieur de la deuxième conduite de fluide (200) que le canal intérieur de la troisième conduite de fluide (300) communiquent avec le canal intérieur de la première conduite de fluide (100), et/ou de telle sorte que la première ouverture d'écoulement (200a) de la deuxième conduite de fluide (200) débouche dans la deuxième ouverture d'écoulement (100b) de la première conduite de fluide (100) et la première ouverture d'écoulement (300a) de la troisième conduite de fluide (300) débouche dans la troisième ouverture d'écoulement (100c) de la première conduite de fluide (100).

17. Système de conduite de fluide selon la revendication 15 ou 16,
- pour lequel un diamètre de la première ouverture d'écoulement (200a) de la deuxième conduite de fluide (200) est inférieur à la largeur (b₁₄) du prolongement (14) ; et/ou
- pour lequel un diamètre de la première ouverture d'écoulement (300a) de la troisième conduite de fluide (300) est inférieur à la largeur (b₁₄) du prolongement (14) ; et/ou
- pour lequel un calibre (D₂₀₀) de la deuxième conduite de fluide (200) est inférieur à la largeur (b₁₄) du prolongement (14) ; et/ou
- pour lequel un calibre (D₃₀₀) de la troisième conduite de fluide (300) est inférieur à la largeur (b₁₄) du prolongement (14) ; et/ou
- pour lequel au moins la deuxième conduite de fluide et la troisième conduite de fluide sont chacune partie intégrante d'un transducteur servant à la génération d'au moins un signal de mesure (s1, s2) correspondant à une grandeur de mesure, notamment un transducteur vibronique ou un transducteur magnéto-inductif ; et/ou
- pour lequel au moins la deuxième conduite de fluide (200) est conçue de telle sorte à être parcourue par le fluide et à être mise en vibration pendant ce temps.

18. Système de conduite de fluide selon la revendication 15 ou 16, respectivement en relation avec l'une des revendications 12 à 14,
- pour lequel le canal intérieur de la deuxième conduite de fluide débouche, via la deuxième ouverture d'écoulement de la première conduite de fluide (100), dans la première chambre (100-I) de la première conduite de fluide et le canal intérieur de la troisième conduite de fluide débouche, via la troisième ouverture d'écoulement de la première conduite de fluide (100), dans la deuxième chambre (100-II) de la première conduite de fluide ; et/ou
- pour lequel le premier canal d'écoulement (10-I) de l'adaptateur (10) communique, via la première chambre (100-I) de la première conduite de fluide (100) avec le canal intérieur (200-I) de la deuxième conduite de fluide (200) et le deuxième canal d'écoulement (10-II) de l'adaptateur (10) communique, via la deuxième chambre (100-II) de la première conduite de fluide (100) avec le canal intérieur (300-I) de la troisième conduite de fluide (300).

19. Système de conduite de fluide selon l'une des revendications 16 à 18, comprenant en outre : au moins un excitateur de vibrations (2000), notamment électromécanique, destiné à la génération ou au maintien de vibrations mécaniques, notamment de vibrations de flexion, au moins de la deuxième conduite de fluide (200), notamment destiné à la génération ou au maintien de vibrations mécaniques à la fois de la deuxième conduite de fluide (200) et de la troisième conduite de fluide (300).

20. Système de conduite de fluide selon l'une des revendications 6 à 19, comprenant en outre : au moins un premier capteur (1000), notamment installé au moins sur la deuxième conduite de fluide et/ou disposé à sa proximité, lequel capteur est destiné à générer au moins un premier signal de mesure (s1) - notamment électrique - présentant un paramètre de signal correspondant à une grandeur de mesure d'un fluide guidé dans un système de conduite de fluide, notamment au moins un niveau de signal dépendant de la même grandeur de mesure, et/ou une fréquence de signal dépendant de la même grandeur de mesure et/ou un angle de phase dépendant de la même grandeur de mesure.

21. Système de conduite de fluide selon la revendication précédente, comprenant en outre : une électronique de mesure et d'exploitation (4000) couplée électriquement avec le premier capteur.

22. Système de conduite de fluide selon la revendication précédente, pour lequel l'électronique de mesure et d'exploitation est conçue de telle sorte à traiter l'au moins premier signal de mesure, notamment de telle sorte à déterminer, au moyen du premier signal de mesure, des valeurs mesurées pour l'au moins une grandeur de mesure.

23. Système de conduite de fluide selon la revendication 20 et l'une des revendications 21 à 22, pour lequel l'électronique de mesure et d'exploitation (4000) est couplée électriquement avec l'excitateur de vibrations.

24. Système de conduite de fluide selon la revendication précédente, pour lequel l'électronique de mesure et d'exploitation est conçue de telle sorte à injecter un signal d'excitation électrique dans l'excitateur de vibrations, et pour lequel l'excitateur de vibrations est conçu de telle sorte à convertir la puissance électrique, injectée au moyen du signal d'excitation (e1), en une puissance mécanique provoquant des vibrations mécaniques au moins de la deuxième conduite de fluide, notamment à la fois de la deuxième conduite de fluide et de la troisième conduite de fluide.

25. Système de conduite de fluide selon l'une des revendications 16 à 24, comprenant en outre :
- une quatrième conduite de fluide (400), notamment de conception identique à la première conduite de fluide et/ou conçue en tant que raccord et/ou servant d'élément de jonction de conduites, laquelle conduite présente un canal intérieur s'étendant d'une première ouverture d'écoulement (400a) entourée d'une paroi, notamment en un métal, notamment enfermée par une bride de raccordement, et qui est située à une première extrémité de conduite (400+) de la quatrième conduite de fluide (400), à la fois jusqu'à une deuxième ouverture d'écoulement (400b) située à une deuxième extrémité de conduite (400#) de la quatrième conduite de fluide (400) et jusqu'à une troisième ouverture d'écoulement (400c) située à distance de la deuxième ouverture d'écoulement dans la deuxième extrémité de conduite (400#) de la quatrième conduite de fluide (400),
- pour lequel à la fois la deuxième conduite de fluide (200) est reliée avec sa deuxième extrémité de conduite (200#), et la troisième conduite de fluide (300) est reliée avec sa deuxième extrémité de conduite (300#) respectivement avec la deuxième extrémité de conduite (400#) de la quatrième conduite de fluide, notamment de telle sorte qu'à la fois le canal intérieur (200-I) de la deuxième conduite de fluide (200) et le canal intérieur (300-I) de la troisième conduite de fluide (300) communiquent avec le canal intérieur de la quatrième conduite de fluide (400), et/ou de telle sorte que la deuxième ouverture d'écoulement (200b) de la deuxième conduite de fluide (200) débouche dans la deuxième ouverture d'écoulement de la quatrième conduite de fluide (400) et la deuxième ouverture d'écoulement (300b) de la troisième conduite de fluide débouche dans la troisième ouverture d'écoulement de la quatrième conduite de fluide (400).

26. Système de conduite de fluide selon l'une des revendications 16 à 25, comprenant en outre un boîtier de protection (1000) pour la deuxième conduite de fluide (200) et la troisième conduite de fluide (300), le boîtier de protection (1000) présentant une cavité entourée d'une paroi, notamment en un métal, cavité à l'intérieur de laquelle la deuxième conduite de fluide (200) et au moins la troisième conduite de fluide (300) sont placées.

27. Système de conduite de fluide selon la revendication précédente, pour lequel une première extrémité du boîtier de protection (1000) est formée au moyen de la première conduite de fluide (100), notamment de telle sorte que la première conduite de fluide (100) est partie intégrante du boîtier de protection (1000), et/ou le boîtier de protection (1000) comporte une paroi latérale délimitant latéralement la cavité, laquelle paroi est fixée latéralement sur la première conduite de fluide (100) ou est reliée par liaison de matière avec la première conduite de fluide (100).

28. Système de conduite de fluide selon l'une des revendications 6 à 27, comprenant en outre :
- une cinquième conduite de fluide (500), notamment conçue en tant que tube rigide et cylindrique circulaire, laquelle conduite présente un canal intérieur s'étendant - d'une première ouverture d'écoulement (500a), enfermée par une bride de raccordement, et qui est située à une première extrémité de conduite (500+) de la cinquième conduite de fluide (500) -jusqu'à une deuxième ouverture d'écoulement (500b) située à une deuxième extrémité de conduite (500#) de la cinquième conduite de fluide (500),
- ainsi qu'une sixième conduite de fluide (600), notamment conçue en tant que tube rigide et cylindrique circulaire, laquelle conduite présente un canal intérieur s'étendant - d'une première ouverture d'écoulement (600a), enfermée par une bride de raccordement, et qui est située à une première extrémité de conduite (600+) de la sixième conduite de fluide (600) -jusqu'à une deuxième ouverture d'écoulement (600b) située à une deuxième extrémité de conduite (600#) de la sixième conduite de fluide (600),
- l'adaptateur (10) étant relié à la fois avec la cinquième conduite de fluide (500) et avec la sixième conduite de fluide (600), notamment de telle sorte que le premier canal d'écoulement (10-I) de l'adaptateur communique avec le canal intérieur de la cinquième conduite de fluide (500) et le deuxième canal d'écoulement (10-II) de l'adaptateur communique avec le canal intérieur de la sixième conduite de fluide (600) et/ou de telle sorte que la cinquième conduite de fluide (500) est raccordée avec sa première extrémité de conduite (500+) à l'extrémité de raccord libre (12+) du deuxième raccord (12) et la sixième conduite de fluide (600) est raccordée avec sa première extrémité de conduite (600+) à l'extrémité de raccord libre (13+) du troisième raccord (13).

29. Utilisation d'un système de conduite de fluide selon l'une des revendications 6 à 28 destiné à la détermination de valeurs mesurées pour au moins une grandeur de mesure - notamment un débit massique, un débit volumique, une densité, une viscosité ou une température - d'un fluide à transférer, notamment un gaz liquéfié, par exemple notamment un gaz liquide contenant un méthane et/ou un éthane et/ou un propane et/ou un butane et/ou un gaz naturel liquéfié (GNL) ou un gaz comprimé, par exemple notamment un gaz naturel comprimé (GNC).
